# EUROPEAN PATENT SPECIFICATION

(11) **EP 3 394 723 B1**
(45) Date of publication and mention of the grant of the patent: **01.12.2021**
(21) Application number: 16879667.0
(22) Date of filing: 18.11.2016
(51) Int. Cl.: G06F 9/30, G06F 15/80, G06F 9/345

(54) **INSTRUCTIONS AND LOGIC FOR LANE-BASED STRIDED SCATTER OPERATIONS**
BEFEHLE UND LOGIK FÜR SPURBASIERTE SCHRITTWEITENSTREUUNGSOPERATIONEN
INSTRUCTIONS ET LOGIQUE POUR DES OPÉRATIONS DE DIFFUSION À GRANDS PAS BASÉE SUR DES LIGNES

(30) Priority: 21.12.2015 US 201514977443
(43) Date of publication of application: 31.10.2018
(73) Proprietor: Intel Corporation, Santa Clara, CA 95054 (US)
(72) Inventor: OULD-AHMED-VALL, Elmoustapha, Chandler Arizona 85226 (US)
(74) Representative: Samson & Partner Patentanwälte mbB
(86) International application number: PCT/US2016/062712
(87) International publication number: WO 2017/112177

(56) References cited:
- EP-A1- 2 950 202
- US-A1- 2005 132 165
- US-A1- 2006 184 765
- US-A1- 2012 254 591
- US-A1- 2012 278 591
- US-A1- 2013 212 360
- US-A1- 2013 275 729
- US-A1- 2014 013 075
- US-A1- 2014 181 464
- US-A1- 2014 189 295
- TIAN XINMIN ET AL: "Practical SIMD Vectorization Techniques for Intel Xeon Phi Coprocessors", 2013 IEEE INTERNATIONAL SYMPOSIUM ON PARALLEL & DISTRIBUTED PROCESSING, WORKSHOPS AND PHD FORUM, IEEE, 20 May 2013 (2013-05-20), pages 1149-1158, XP032517696, DOI: 10.1109/IPDPSW.2013.245 [retrieved on 2013-10-30]

## Description

### FIELD OF THE INVENTION

The present disclosure pertains to the field of processing logic, microprocessors, and associated instruction set architecture that, when executed by the processor or other processing logic, perform logical, mathematical, or other functional operations.

### DESCRIPTION OF RELATED ART

Multiprocessor systems are becoming more and more common. Applications of multiprocessor systems include dynamic domain partitioning all the way down to desktop computing. In order to take advantage of multiprocessor systems, code to be executed may be separated into multiple threads for execution by various processing entities. Each thread may be executed in parallel with one another. Instructions as they are received on a processor may be decoded into terms or instruction words that are native, or more native, for execution on the processor. Processors may be implemented in a system on chip. Data structures that are organized in tuples of three or four elements may be used in media applications, High Performance Computing applications, and molecular dynamics applications.

US 2014/0181464 A1 describes coalesced scattering including reading data elements from multiple source registers, and storing them in memory contiguously in a single memory access. EP2 950 202 A1 pertains to reading and sorting data elements to a storage unit. US 2005/0132165 A1 describes a processing logic that is operable to perform in parallel a data processing operation on data elements within each lane of parallel processing. US 2013/0275729 A1 describes instructions that are useful to generate control indexes for other instructions.

### DESCRIPTION OF THE FIGURES

Embodiments are illustrated by way of example and not limitation in the Figures of the accompanying drawings:
FIGURE 1A is a block diagram of an exemplary computer system formed with a processor that may include execution units to execute an instruction, in accordance with embodiments of the present disclosure;
FIGURE 1B illustrates a data processing system, in accordance with embodiments of the present disclosure;
FIGURE 1C illustrates other embodiments of a data processing system for performing text string comparison operations;
FIGURE 2 is a block diagram of the micro-architecture for a processor that may include logic circuits to perform instructions, in accordance with embodiments of the present disclosure;
FIGURE 3A illustrates various packed data type representations in multimedia registers, in accordance with embodiments of the present disclosure;
FIGURE 3B illustrates possible in-register data storage formats, in accordance with embodiments of the present disclosure;
FIGURE 3C illustrates various signed and unsigned packed data type representations in multimedia registers, in accordance with embodiments of the present disclosure;
FIGURE 3D illustrates an embodiment of an operation encoding format;
FIGURE 3E illustrates another possible operation encoding format having forty or more bits, in accordance with embodiments of the present disclosure;
FIGURE 3F illustrates yet another possible operation encoding format, in accordance with embodiments of the present disclosure;
FIGURE 4A is a block diagram illustrating an in-order pipeline and a register renaming stage, out-of-order issue/execution pipeline, in accordance with embodiments of the present disclosure;
FIGURE 4B is a block diagram illustrating an in-order architecture core and a register renaming logic, out-of-order issue/execution logic to be included in a processor, in accordance with embodiments of the present disclosure;
FIGURE 5A is a block diagram of a processor, in accordance with embodiments of the present disclosure;
FIGURE 5B is a block diagram of an example implementation of a core, in accordance with embodiments of the present disclosure;
FIGURE 6 is a block diagram of a system, in accordance with embodiments of the present disclosure;
FIGURE 7 is a block diagram of a second system, in accordance with embodiments of the present disclosure;
FIGURE 8 is a block diagram of a third system in accordance with embodiments of the present disclosure;
FIGURE 9 is a block diagram of a system-on-a-chip, in accordance with embodiments of the present disclosure;
FIGURE 10 illustrates a processor containing a central processing unit and a graphics processing unit which may perform at least one instruction, in accordance with embodiments of the present disclosure;
FIGURE 11 is a block diagram illustrating the development of IP cores, in accordance with embodiments of the present disclosure;
FIGURE 12 illustrates how an instruction of a first type may be emulated by a processor of a different type, in accordance with embodiments of the present disclosure;
FIGURE 13 illustrates a block diagram contrasting the use of a software instruction converter to convert binary instructions in a source instruction set to binary instructions in a target instruction set, in accordance with embodiments of the present disclosure;
FIGURE 14 is a block diagram of an instruction set architecture of a processor, in accordance with embodiments of the present disclosure;
FIGURE 15 is a more detailed block diagram of an instruction set architecture of a processor, in accordance with embodiments of the present disclosure;
FIGURE 16 is a block diagram of an execution pipeline for an instruction set architecture of a processor, in accordance with embodiments of the present disclosure;
FIGURE 17 is a block diagram of an electronic device for utilizing a processor, in accordance with embodiments of the present disclosure;
FIGURE 18 is an illustration of an example system for an instruction and logic for lane-based strided scatter operations, in accordance with embodiments of the present disclosure;
FIGURE 19 is a block diagram illustrating a processor core to execute extended vector instructions, in accordance with embodiments of the present disclosure;
FIGURE 20 is a block diagram illustrating an example extended vector register file, in accordance with embodiments of the present disclosure;
FIGURE 21 is an illustration of an operation to perform a lane-based strided scatter operation, according to the invention as claimed;
FIGURES 22A - 22C illustrate the operation of respective forms of a VPSCATTER instruction, in accordance with the invention as claimed;
FIGURE 23 illustrates an method for performing a lane-based strided scatter operation, in accordance with the invention as claimed;
FIGURE 24 illustrates an example method for utilizing a lane-based strided scatter operation to permute different types of data elements coming from respective different sources, according to embodiments of the present disclosure.

### DETAILED DESCRIPTION

The following description describes an instruction and processing logic for performing lane-based strided scatter operations on a processing apparatus. Such a processing apparatus may include an out-of-order processor. In the following description, numerous specific details such as processing logic, processor types, micro-architectural conditions, events, enablement mechanisms, and the like are set forth in order to provide a more thorough understanding of embodiments of the present disclosure. It will be appreciated, however, by one skilled in the art that the embodiments may be practiced without such specific details. Additionally, some well-known structures, circuits, and the like have not been shown in detail to avoid unnecessarily obscuring embodiments of the present disclosure.

Although the following embodiments are described with reference to a processor, other embodiments are applicable to other types of integrated circuits and logic devices. Similar techniques and teachings of embodiments of the present disclosure may be applied to other types of circuits or semiconductor devices that may benefit from higher pipeline throughput and improved performance. The teachings of embodiments of the present disclosure are applicable to any processor or machine that performs data manipulations. However, the embodiments are not limited to processors or machines that perform 512-bit, 256-bit, 128-bit, 64-bit, 32-bit, or 16-bit data operations and may be applied to any processor and machine in which manipulation or management of data may be performed. In addition, the following description provides examples, and the accompanying drawings show various examples for the purposes of illustration. However, these examples should not be construed in a limiting sense as they are merely intended to provide examples of embodiments of the present disclosure rather than to provide an exhaustive list of all possible implementations of embodiments of the present disclosure.

Although the below examples describe instruction handling and distribution in the context of execution units and logic circuits, other embodiments of the present disclosure may be accomplished by way of a data or instructions stored on a machine-readable, tangible medium, which when performed by a machine cause the machine to perform functions consistent with at least one embodiment of the disclosure. In one embodiment, functions associated with embodiments of the present disclosure are embodied in machine-executable instructions. The instructions may be used to cause a general-purpose or special-purpose processor that may be programmed with the instructions to perform the steps of the present disclosure. Embodiments of the present disclosure may be provided as a computer program product or software which may include a machine or computer-readable medium having stored thereon instructions which may be used to program a computer (or other electronic devices) to perform one or more operations according to embodiments of the present disclosure. Furthermore, steps of embodiments of the present disclosure might be performed by specific hardware components that contain fixed-function logic for performing the steps, or by any combination of programmed computer components and fixed-function hardware components.

Instructions used to program logic to perform embodiments of the present disclosure may be stored within a memory in the system, such as DRAM, cache, flash memory, or other storage. Furthermore, the instructions may be distributed via a network or by way of other computer-readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magneto-optical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium may include any type of tangible machine-readable medium suitable for storing or transmitting electronic instructions or information in a form readable by a machine (e.g., a computer).

A design may go through various stages, from creation to simulation to fabrication. Data representing a design may represent the design in a number of manners. First, as may be useful in simulations, the hardware may be represented using a hardware description language or another functional description language. Additionally, a circuit level model with logic and/or transistor gates may be produced at some stages of the design process. Furthermore, designs, at some stage, may reach a level of data representing the physical placement of various devices in the hardware model. In cases wherein some semiconductor fabrication techniques are used, the data representing the hardware model may be the data specifying the presence or absence of various features on different mask layers for masks used to produce the integrated circuit. In any representation of the design, the data may be stored in any form of a machine-readable medium. A memory or a magnetic or optical storage such as a disc may be the machine-readable medium to store information transmitted via optical or electrical wave modulated or otherwise generated to transmit such information. When an electrical carrier wave indicating or carrying the code or design is transmitted, to the extent that copying, buffering, or retransmission of the electrical signal is performed, a new copy may be made. Thus, a communication provider or a network provider may store on a tangible, machine-readable medium, at least temporarily, an article, such as information encoded into a carrier wave, embodying techniques of embodiments of the present disclosure.

In modern processors, a number of different execution units may be used to process and execute a variety of code and instructions. Some instructions may be quicker to complete while others may take a number of clock cycles to complete. The faster the throughput of instructions, the better the overall performance of the processor. Thus it would be advantageous to have as many instructions execute as fast as possible. However, there may be certain instructions that have greater complexity and require more in terms of execution time and processor resources, such as floating point instructions, load/store operations, data moves, etc.

As more computer systems are used in internet, text, and multimedia applications, additional processor support has been introduced over time. In one embodiment, an instruction set may be associated with one or more computer architectures, including data types, instructions, register architecture, addressing modes, memory architecture, interrupt and exception handling, and external input and output (I/O).

In one embodiment, the instruction set architecture (ISA) may be implemented by one or more micro-architectures, which may include processor logic and circuits used to implement one or more instruction sets. Accordingly, processors with different micro-architectures may share at least a portion of a common instruction set. For example, Intel® Pentium 4 processors, Intel® Core™ processors, and processors from Advanced Micro Devices, Inc. of Sunnyvale CA implement nearly identical versions of the x86 instruction set (with some extensions that have been added with newer versions), but have different internal designs. Similarly, processors designed by other processor development companies, such as ARM Holdings, Ltd., MIPS, or their licensees or adopters, may share at least a portion of a common instruction set, but may include different processor designs. For example, the same register architecture of the ISA may be implemented in different ways in different micro-architectures using new or well-known techniques, including dedicated physical registers, one or more dynamically allocated physical registers using a register renaming mechanism (e.g., the use of a Register Alias Table (RAT), a Reorder Buffer (ROB) and a retirement register file. In one embodiment, registers may include one or more registers, register architectures, register files, or other register sets that may or may not be addressable by a software programmer.

An instruction may include one or more instruction formats. In one embodiment, an instruction format may indicate various fields (number of bits, location of bits, etc.) to specify, among other things, the operation to be performed and the operands on which that operation will be performed. In a further embodiment, some instruction formats may be further defined by instruction templates (or sub-formats). For example, the instruction templates of a given instruction format may be defined to have different subsets of the instruction format's fields and/or defined to have a given field interpreted differently. In one embodiment, an instruction may be expressed using an instruction format (and, if defined, in a given one of the instruction templates of that instruction format) and specifies or indicates the operation and the operands upon which the operation will operate.

Scientific, financial, auto-vectorized general purpose, RMS (recognition, mining, and synthesis), and visual and multimedia applications (e.g., 2D/3D graphics, image processing, video compression/decompression, voice recognition algorithms and audio manipulation) may require the same operation to be performed on a large number of data items. In one embodiment, Single Instruction Multiple Data (SIMD) refers to a type of instruction that causes a processor to perform an operation on multiple data elements. SIMD technology may be used in processors that may logically divide the bits in a register into a number of fixed-sized or variable-sized data elements, each of which represents a separate value. For example, in one embodiment, the bits in a 64-bit register may be organized as a source operand containing four separate 16-bit data elements, each of which represents a separate 16-bit value. This type of data may be referred to as 'packed' data type or 'vector' data type, and operands of this data type may be referred to as packed data operands or vector operands. In one embodiment, a packed data item or vector may be a sequence of packed data elements stored within a single register, and a packed data operand or a vector operand may a source or destination operand of a SIMD instruction (or 'packed data instruction' or a 'vector instruction'). In one embodiment, a SIMD instruction specifies a single vector operation to be performed on two source vector operands to generate a destination vector operand (also referred to as a result vector operand) of the same or different size, with the same or different number of data elements, and in the same or different data element order.

SIMD technology, such as that employed by the Intel® Core™ processors having an instruction set including x86, MMX™, Streaming SIMD Extensions (SSE), SSE2, SSE3, SSE4.1, and SSE4.2 instructions, ARM processors, such as the ARM Cortex® family of processors having an instruction set including the Vector Floating Point (VFP) and/or NEON instructions, and MIPS processors, such as the Loongson family of processors developed by the Institute of Computing Technology (ICT) of the Chinese Academy of Sciences, has enabled a significant improvement in application performance (Core™ and MMX™ are registered trademarks or trademarks of Intel Corporation of Santa Clara, Calif.).

In one embodiment, destination and source registers/data may be generic terms to represent the source and destination of the corresponding data or operation. In some embodiments, they may be implemented by registers, memory, or other storage areas having other names or functions than those depicted. For example, in one embodiment, "DEST1" may be a temporary storage register or other storage area, whereas "SRC1" and "SRC2" may be a first and second source storage register or other storage area, and so forth. In other embodiments, two or more of the SRC and DEST storage areas may correspond to different data storage elements within the same storage area (e.g., a SIMD register). In one embodiment, one of the source registers may also act as a destination register by, for example, writing back the result of an operation performed on the first and second source data to one of the two source registers serving as a destination registers.

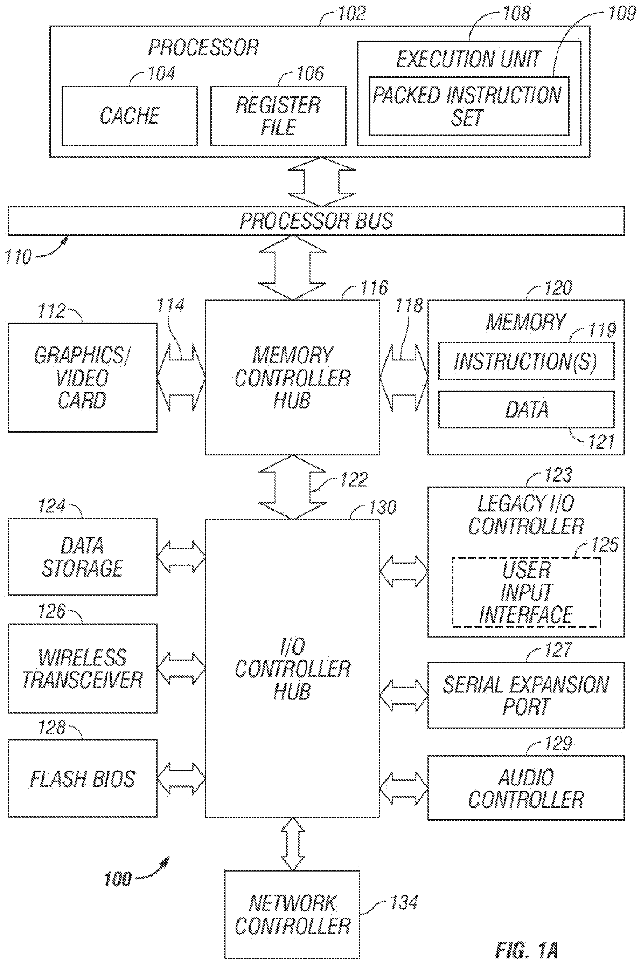

FIGURE 1A is a block diagram of an exemplary computer system formed with a processor that may include execution units to execute an instruction, in accordance with embodiments of the present disclosure. System 100 may include a component, such as a processor 102 to employ execution units including logic to perform algorithms for process data, in accordance with the present disclosure, such as in the embodiment described herein. System 100 may be representative of processing systems based on the PENTIUM® III, PENTIUM® 4, Xeon™, Itanium®, XScale™ and/or StrongARM™ microprocessors available from Intel Corporation of Santa Clara, California, although other systems (including PCs having other microprocessors, engineering workstations, set-top boxes and the like) may also be used. In one embodiment, sample system 100 may execute a version of the WINDOWS™ operating system available from Microsoft Corporation of Redmond, Washington, although other operating systems (UNIX and Linux for example), embedded software, and/or graphical user interfaces, may also be used. Thus, embodiments of the present disclosure are not limited to any specific combination of hardware circuitry and software.

Embodiments are not limited to computer systems. Embodiments of the present disclosure may be used in other devices such as handheld devices and embedded applications. Some examples of handheld devices include cellular phones, Internet Protocol devices, digital cameras, personal digital assistants (PDAs), and handheld PCs. Embedded applications may include a micro controller, a digital signal processor (DSP), system on a chip, network computers (NetPC), set-top boxes, network hubs, wide area network (WAN) switches, or any other system that may perform one or more instructions in accordance with at least one embodiment.

Computer system 100 may include a processor 102 that may include one or more execution units 108 to perform an algorithm to perform at least one instruction in accordance with one embodiment of the present disclosure. One embodiment may be described in the context of a single processor desktop or server system, but other embodiments may be included in a multiprocessor system. System 100 may be an example of a 'hub' system architecture. System 100 may include a processor 102 for processing data signals. Processor 102 may include a complex instruction set computer (CISC) microprocessor, a reduced instruction set computing (RISC) microprocessor, a very long instruction word (VLIW) microprocessor, a processor implementing a combination of instruction sets, or any other processor device, such as a digital signal processor, for example. In one embodiment, processor 102 may be coupled to a processor bus 110 that may transmit data signals between processor 102 and other components in system 100. The elements of system 100 may perform conventional functions that are well known to those familiar with the art.

In one embodiment, processor 102 may include a Level 1 (LI) internal cache memory 104. Depending on the architecture, the processor 102 may have a single internal cache or multiple levels of internal cache. In another embodiment, the cache memory may reside external to processor 102. Other embodiments may also include a combination of both internal and external caches depending on the particular implementation and needs. Register file 106 may store different types of data in various registers including integer registers, floating point registers, status registers, and instruction pointer register.

Execution unit 108, including logic to perform integer and floating point operations, also resides in processor 102. Processor 102 may also include a microcode (ucode) ROM that stores microcode for certain macroinstructions. In one embodiment, execution unit 108 may include logic to handle a packed instruction set 109. By including the packed instruction set 109 in the instruction set of a general-purpose processor 102, along with associated circuitry to execute the instructions, the operations used by many multimedia applications may be performed using packed data in a general-purpose processor 102. Thus, many multimedia applications may be accelerated and executed more efficiently by using the full width of a processor's data bus for performing operations on packed data. This may eliminate the need to transfer smaller units of data across the processor's data bus to perform one or more operations one data element at a time.

Embodiments of an execution unit 108 may also be used in micro controllers, embedded processors, graphics devices, DSPs, and other types of logic circuits. System 100 may include a memory 120. Memory 120 may be implemented as a dynamic random access memory (DRAM) device, a static random access memory (SRAM) device, flash memory device, or other memory device. Memory 120 may store instructions 119 and/or data 121 represented by data signals that may be executed by processor 102.

A system logic chip 116 may be coupled to processor bus 110 and memory 120. System logic chip 116 may include a memory controller hub (MCH). Processor 102 may communicate with MCH 116 via a processor bus 110. MCH 116 may provide a high bandwidth memory path 118 to memory 120 for storage of instructions 119 and data 121 and for storage of graphics commands, data and textures. MCH 116 may direct data signals between processor 102, memory 120, and other components in system 100 and to bridge the data signals between processor bus 110, memory 120, and system I/O 122. In some embodiments, the system logic chip 116 may provide a graphics port for coupling to a graphics controller 112. MCH 116 may be coupled to memory 120 through a memory interface 118. Graphics card 112 may be coupled to MCH 116 through an Accelerated Graphics Port (AGP) interconnect 114.

System 100 may use a proprietary hub interface bus 122 to couple MCH 116 to I/O controller hub (ICH) 130. In one embodiment, ICH 130 may provide direct connections to some I/O devices via a local I/O bus. The local I/O bus may include a high-speed I/O bus for connecting peripherals to memory 120, chipset, and processor 102. Examples may include the audio controller 129, firmware hub (flash BIOS) 128, wireless transceiver 126, data storage 124, legacy I/O controller 123 containing user input interface 125 (which may include a keyboard interface), a serial expansion port 127 such as Universal Serial Bus (USB), and a network controller 134. Data storage device 124 may comprise a hard disk drive, a floppy disk drive, a CD-ROM device, a flash memory device, or other mass storage device.

For another embodiment of a system, an instruction in accordance with one embodiment may be used with a system on a chip. One embodiment of a system on a chip comprises of a processor and a memory. The memory for one such system may include a flash memory. The flash memory may be located on the same die as the processor and other system components. Additionally, other logic blocks such as a memory controller or graphics controller may also be located on a system on a chip.

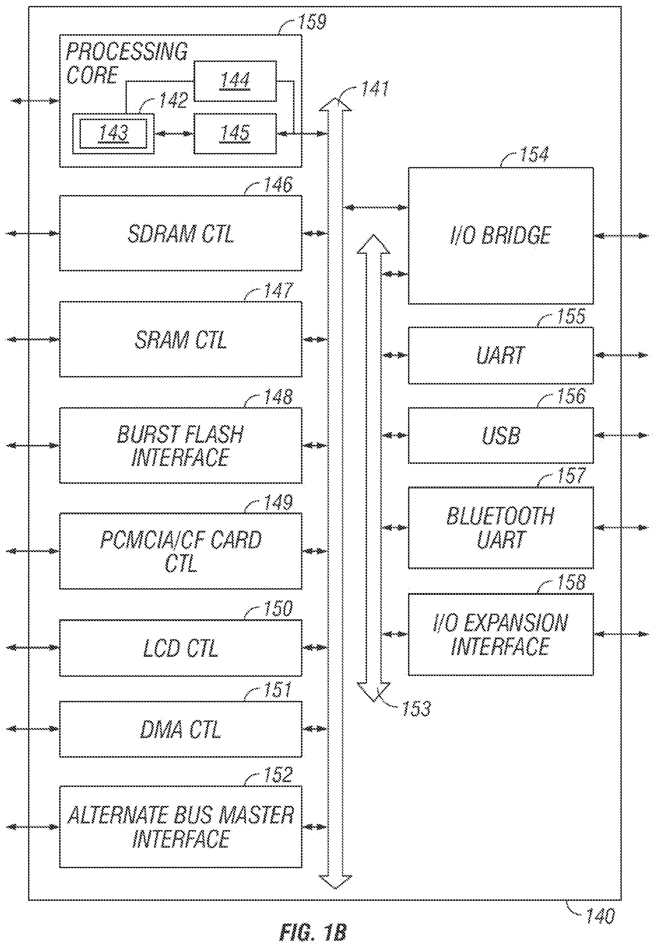

FIGURE 1B illustrates a data processing system 140 which implements the principles of embodiments of the present disclosure. It will be readily appreciated by one of skill in the art that the embodiments described herein may operate with alternative processing systems without departure from the scope of embodiments of the disclosure.

Computer system 140 comprises a processing core 159 for performing at least one instruction in accordance with one embodiment. In one embodiment, processing core 159 represents a processing unit of any type of architecture, including but not limited to a CISC, a RISC or a VLIW type architecture. Processing core 159 may also be suitable for manufacture in one or more process technologies and by being represented on a machine-readable media in sufficient detail, may be suitable to facilitate said manufacture.

Processing core 159 comprises an execution unit 142, a set of register files 145, and a decoder 144. Processing core 159 may also include additional circuitry (not shown) which may be unnecessary to the understanding of embodiments of the present disclosure. Execution unit 142 may execute instructions received by processing core 159. In addition to performing typical processor instructions, execution unit 142 may perform instructions in packed instruction set 143 for performing operations on packed data formats. Packed instruction set 143 may include instructions for performing embodiments of the disclosure and other packed instructions. Execution unit 142 may be coupled to register file 145 by an internal bus. Register file 145 may represent a storage area on processing core 159 for storing information, including data. As previously mentioned, it is understood that the storage area may store the packed data might not be critical. Execution unit 142 may be coupled to decoder 144. Decoder 144 may decode instructions received by processing core 159 into control signals and/or microcode entry points. In response to these control signals and/or microcode entry points, execution unit 142 performs the appropriate operations. In one embodiment, the decoder may interpret the opcode of the instruction, which will indicate what operation should be performed on the corresponding data indicated within the instruction.

Processing core 159 may be coupled with bus 141 for communicating with various other system devices, which may include but are not limited to, for example, synchronous dynamic random access memory (SDRAM) control 146, static random access memory (SRAM) control 147, burst flash memory interface 148, personal computer memory card international association (PCMCIA)/compact flash (CF) card control 149, liquid crystal display (LCD) control 150, direct memory access (DMA) controller 151, and alternative bus master interface 152. In one embodiment, data processing system 140 may also comprise an I/O bridge 154 for communicating with various I/O devices via an I/O bus 153. Such I/O devices may include but are not limited to, for example, universal asynchronous receiver/transmitter (UART) 155, universal serial bus (USB) 156, Bluetooth wireless UART 157 and I/O expansion interface 158.

One embodiment of data processing system 140 provides for mobile, network and/or wireless communications and a processing core 159 that may perform SIMD operations including a text string comparison operation. Processing core 159 may be programmed with various audio, video, imaging and communications algorithms including discrete transformations such as a Walsh-Hadamard transform, a fast Fourier transform (FFT), a discrete cosine transform (DCT), and their respective inverse transforms; compression/decompression techniques such as color space transformation, video encode motion estimation or video decode motion compensation; and modulation/demodulation (MODEM) functions such as pulse coded modulation (PCM).

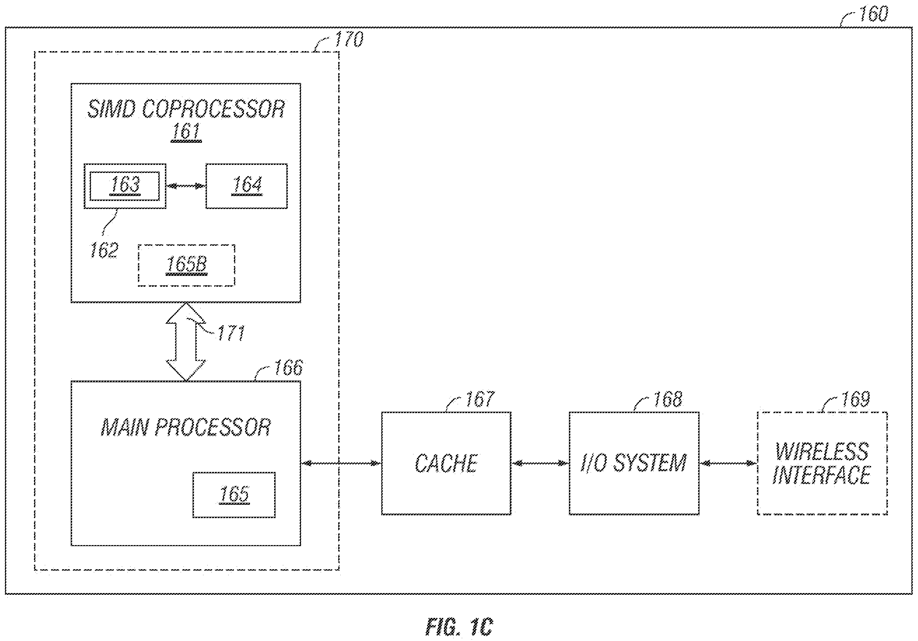

FIGURE 1C illustrates other embodiments of a data processing system that performs SIMD text string comparison operations. In one embodiment, data processing system 160 may include a main processor 166, a SIMD coprocessor 161, a cache memory 167, and an input/output system 168. Input/output system 168 may optionally be coupled to a wireless interface 169. SIMD coprocessor 161 may perform operations including instructions in accordance with one embodiment. In one embodiment, processing core 170 may be suitable for manufacture in one or more process technologies and by being represented on a machine-readable media in sufficient detail, may be suitable to facilitate the manufacture of all or part of data processing system 160 including processing core 170.

In one embodiment, SIMD coprocessor 161 comprises an execution unit 162 and a set of register files 164. One embodiment of main processor 166 comprises a decoder 165 to recognize instructions of instruction set 163 including instructions in accordance with one embodiment for execution by execution unit 162. In other embodiments, SIMD coprocessor 161 also comprises at least part of decoder 165 (shown as 165B) to decode instructions of instruction set 163. Processing core 170 may also include additional circuitry (not shown) which may be unnecessary to the understanding of embodiments of the present disclosure.

In operation, main processor 166 executes a stream of data processing instructions that control data processing operations of a general type including interactions with cache memory 167, and input/output system 168. Embedded within the stream of data processing instructions may be SIMD coprocessor instructions. Decoder 165 of main processor 166 recognizes these SIMD coprocessor instructions as being of a type that should be executed by an attached SIMD coprocessor 161. Accordingly, main processor 166 issues these SIMD coprocessor instructions (or control signals representing SIMD coprocessor instructions) on the coprocessor bus 166. From coprocessor bus 171, these instructions may be received by any attached SIMD coprocessors. In this case, SIMD coprocessor 161 may accept and execute any received SIMD coprocessor instructions intended for it.

Data may be received via wireless interface 169 for processing by the SIMD coprocessor instructions. For one example, voice communication may be received in the form of a digital signal, which may be processed by the SIMD coprocessor instructions to regenerate digital audio samples representative of the voice communications. For another example, compressed audio and/or video may be received in the form of a digital bit stream, which may be processed by the SIMD coprocessor instructions to regenerate digital audio samples and/or motion video frames. In one embodiment of processing core 170, main processor 166, and a SIMD coprocessor 161 may be integrated into a single processing core 170 comprising an execution unit 162, a set of register files 164, and a decoder 165 to recognize instructions of instruction set 163 including instructions in accordance with one embodiment.

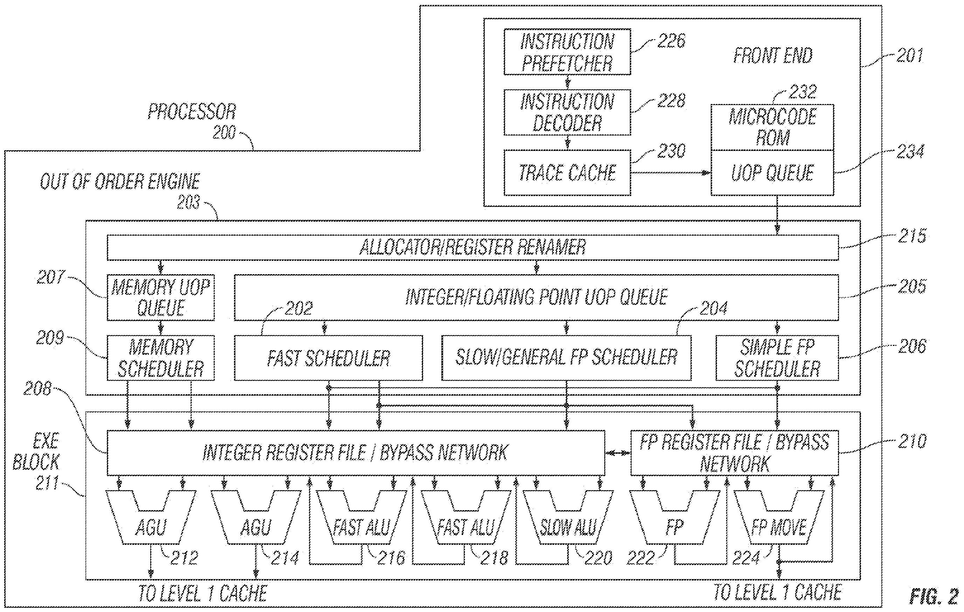

FIGURE 2 is a block diagram of the micro-architecture for a processor 200 that may include logic circuits to perform instructions, in accordance with embodiments of the present disclosure. In some embodiments, an instruction in accordance with one embodiment may be implemented to operate on data elements having sizes of byte, word, doubleword, quadword, etc., as well as datatypes, such as single and double precision integer and floating point datatypes. In one embodiment, in-order front end 201 may implement a part of processor 200 that may fetch instructions to be executed and prepares the instructions to be used later in the processor pipeline. Front end 201 may include several units. In one embodiment, instruction prefetcher 226 fetches instructions from memory and feeds the instructions to an instruction decoder 228 which in turn decodes or interprets the instructions. For example, in one embodiment, the decoder decodes a received instruction into one or more operations called "micro-instructions" or "micro-operations" (also called micro op or uops) that the machine may execute. In other embodiments, the decoder parses the instruction into an opcode and corresponding data and control fields that may be used by the micro-architecture to perform operations in accordance with one embodiment. In one embodiment, trace cache 230 may assemble decoded uops into program ordered sequences or traces in uop queue 234 for execution. When trace cache 230 encounters a complex instruction, microcode ROM 232 provides the uops needed to complete the operation.

Some instructions may be converted into a single micro-op, whereas others need several micro-ops to complete the full operation. In one embodiment, if more than four micro-ops are needed to complete an instruction, decoder 228 may access microcode ROM 232 to perform the instruction. In one embodiment, an instruction may be decoded into a small number of micro ops for processing at instruction decoder 228. In another embodiment, an instruction may be stored within microcode ROM 232 should a number of micro-ops be needed to accomplish the operation. Trace cache 230 refers to an entry point programmable logic array (PLA) to determine a correct micro-instruction pointer for reading the micro-code sequences to complete one or more instructions in accordance with one embodiment from micro-code ROM 232. After microcode ROM 232 finishes sequencing micro-ops for an instruction, front end 201 of the machine may resume fetching micro-ops from trace cache 230.

Out-of-order execution engine 203 may prepare instructions for execution. The out-of-order execution logic has a number of buffers to smooth out and re-order the flow of instructions to optimize performance as they go down the pipeline and get scheduled for execution. The allocator logic in allocator/register renamer 215 allocates the machine buffers and resources that each uop needs in order to execute. The register renaming logic in allocator/register renamer 215 renames logic registers onto entries in a register file. The allocator 215 also allocates an entry for each uop in one of the two uop queues, one for memory operations (memory uop queue 207) and one for non-memory operations (integer/floating point uop queue 205), in front of the instruction schedulers: memory scheduler 209, fast scheduler 202, slow/general floating point scheduler 204, and simple floating point scheduler 206. Uop schedulers 202, 204, 206, determine when a uop is ready to execute based on the readiness of their dependent input register operand sources and the availability of the execution resources the uops need to complete their operation. Fast scheduler 202 of one embodiment may schedule on each half of the main clock cycle while the other schedulers may only schedule once per main processor clock cycle. The schedulers arbitrate for the dispatch ports to schedule uops for execution.

Register files 208, 210 may be arranged between schedulers 202, 204, 206, and execution units 212, 214, 216, 218, 220, 222, 224 in execution block 211. Each of register files 208, 210 perform integer and floating point operations, respectively. Each register file 208, 210, may include a bypass network that may bypass or forward just completed results that have not yet been written into the register file to new dependent uops. Integer register file 208 and floating point register file 210 may communicate data with the other. In one embodiment, integer register file 208 may be split into two separate register files, one register file for low-order thirty-two bits of data and a second register file for high order thirty-two bits of data. Floating point register file 210 may include 128-bit wide entries because floating point instructions typically have operands from 64 to 128 bits in width.

Execution block 211 may contain execution units 212, 214, 216, 218, 220, 222, 224. Execution units 212, 214, 216, 218, 220, 222, 224 may execute the instructions. Execution block 211 may include register files 208, 210 that store the integer and floating point data operand values that the micro-instructions need to execute. In one embodiment, processor 200 may comprise a number of execution units: address generation unit (AGU) 212, AGU 214, fast ALU 216, fast ALU 218, slow ALU 220, floating point ALU 222, floating point move unit 224. In another embodiment, floating point execution blocks 222, 224, may execute floating point, MMX, SIMD, and SSE, or other operations. In yet another embodiment, floating point ALU 222 may include a 64-bit by 64-bit floating point divider to execute divide, square root, and remainder micro-ops. In various embodiments, instructions involving a floating point value may be handled with the floating point hardware. In one embodiment, ALU operations may be passed to high-speed ALU execution units 216, 218. High-speed ALUs 216, 218 may execute fast operations with an effective latency of half a clock cycle. In one embodiment, most complex integer operations go to slow ALU 220 as slow ALU 220 may include integer execution hardware for long-latency type of operations, such as a multiplier, shifts, flag logic, and branch processing. Memory load/store operations may be executed by AGUs 212, 214. In one embodiment, integer ALUs 216, 218, 220 may perform integer operations on 64-bit data operands. In other embodiments, ALUs 216, 218, 220 may be implemented to support a variety of data bit sizes including sixteen, thirty-two, 128, 256, etc. Similarly, floating point units 222, 224 may be implemented to support a range of operands having bits of various widths. In one embodiment, floating point units 222, 224, may operate on 128-bit wide packed data operands in conjunction with SIMD and multimedia instructions.

In one embodiment, uops schedulers 202, 204, 206, dispatch dependent operations before the parent load has finished executing. As uops may be speculatively scheduled and executed in processor 200, processor 200 may also include logic to handle memory misses. If a data load misses in the data cache, there may be dependent operations in flight in the pipeline that have left the scheduler with temporarily incorrect data. A replay mechanism tracks and re-executes instructions that use incorrect data. Only the dependent operations might need to be replayed and the independent ones may be allowed to complete. The schedulers and replay mechanism of one embodiment of a processor may also be designed to catch instruction sequences for text string comparison operations.

The term "registers" may refer to the on-board processor storage locations that may be used as part of instructions to identify operands. In other words, registers may be those that may be usable from the outside of the processor (from a programmer's perspective). However, in some embodiments registers might not be limited to a particular type of circuit. Rather, a register may store data, provide data, and perform the functions described herein. The registers described herein may be implemented by circuitry within a processor using any number of different techniques, such as dedicated physical registers, dynamically allocated physical registers using register renaming, combinations of dedicated and dynamically allocated physical registers, etc. In one embodiment, integer registers store 32-bit integer data. A register file of one embodiment also contains eight multimedia SIMD registers for packed data. For the discussions below, the registers may be understood to be data registers designed to hold packed data, such as 64-bit wide MMX™ registers (also referred to as 'mm' registers in some instances) in microprocessors enabled with MMX technology from Intel Corporation of Santa Clara, California. These MMX registers, available in both integer and floating point forms, may operate with packed data elements that accompany SIMD and SSE instructions. Similarly, 128-bit wide XMM registers relating to SSE2, SSE3, SSE4, or beyond (referred to generically as "SSEx") technology may hold such packed data operands. In one embodiment, in storing packed data and integer data, the registers do not need to differentiate between the two data types. In one embodiment, integer and floating point data may be contained in the same register file or different register files. Furthermore, in one embodiment, floating point and integer data may be stored in different registers or the same registers.

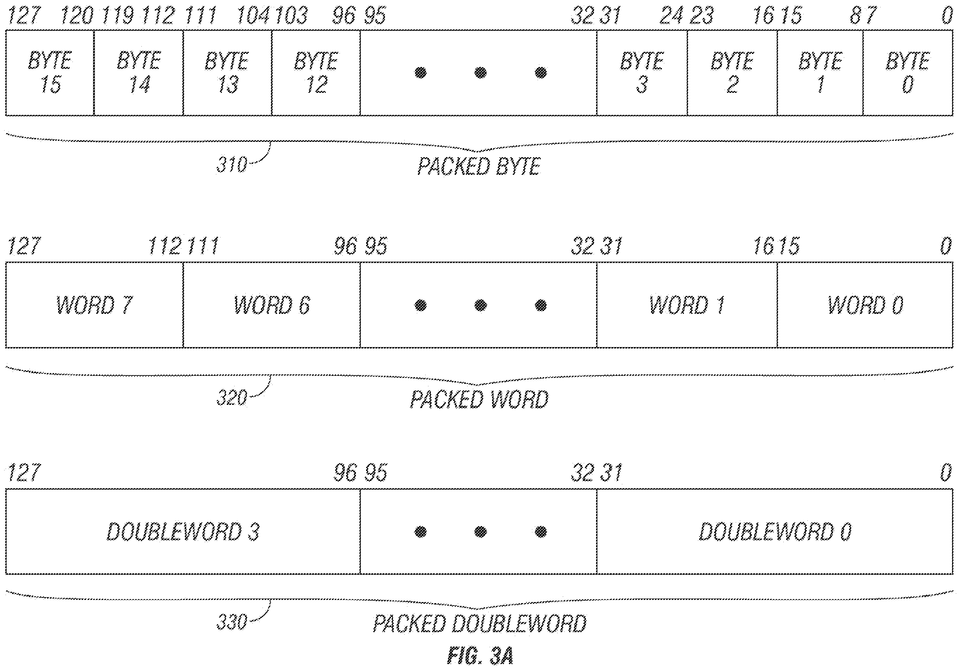

In the examples of the following figures, a number of data operands may be described. FIGURE 3A illustrates various packed data type representations in multimedia registers, in accordance with embodiments of the present disclosure. FIGURE 3A illustrates data types for a packed byte 310, a packed word 320, and a packed doubleword (dword) 330 for 128-bit wide operands. Packed byte format 310 of this example may be 128 bits long and contains sixteen packed byte data elements. A byte may be defined, for example, as eight bits of data. Information for each byte data element may be stored in bit 7 through bit 0 for byte 0, bit 15 through bit 8 for byte 1, bit 23 through bit 16 for byte 2, and finally bit 120 through bit 127 for byte 15. Thus, all available bits may be used in the register. This storage arrangement increases the storage efficiency of the processor. As well, with sixteen data elements accessed, one operation may now be performed on sixteen data elements in parallel.

Generally, a data element may include an individual piece of data that is stored in a single register or memory location with other data elements of the same length. In packed data sequences relating to SSEx technology, the number of data elements stored in a XMM register may be 128 bits divided by the length in bits of an individual data element. Similarly, in packed data sequences relating to MMX and SSE technology, the number of data elements stored in an MMX register may be 64 bits divided by the length in bits of an individual data element. Although the data types illustrated in FIGURE 3A may be 128 bits long, embodiments of the present disclosure may also operate with 64-bit wide or other sized operands. Packed word format 320 of this example may be 128 bits long and contains eight packed word data elements. Each packed word contains sixteen bits of information. Packed doubleword format 330 of FIGURE 3A may be 128 bits long and contains four packed doubleword data elements. Each packed doubleword data element contains thirty-two bits of information. A packed quadword may be 128 bits long and contain two packed quad-word data elements.

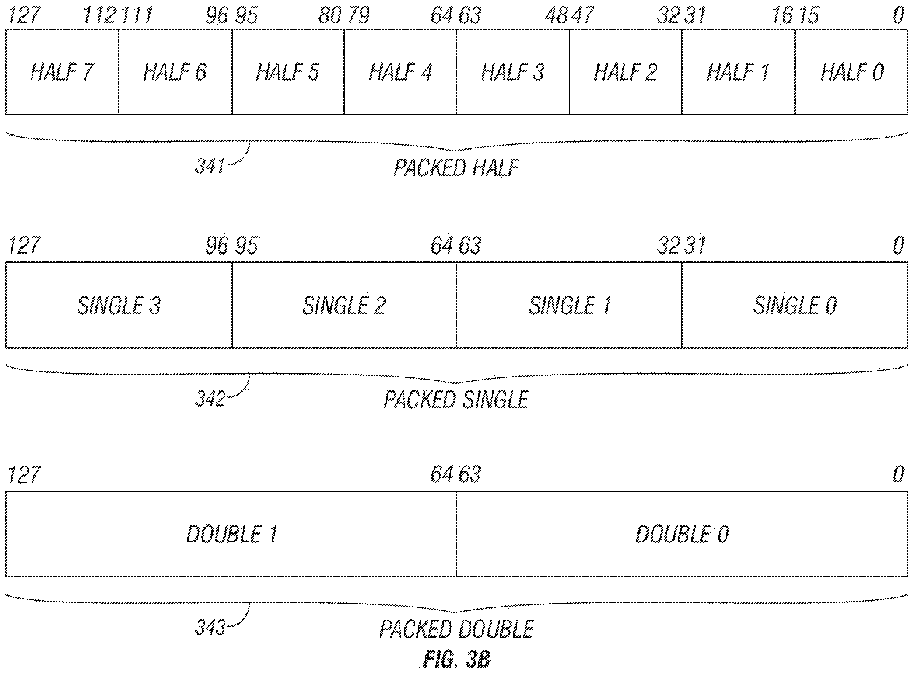

FIGURE 3B illustrates possible in-register data storage formats, in accordance with embodiments of the present disclosure. Each packed data may include more than one independent data element. Three packed data formats are illustrated; packed half 341, packed single 342, and packed double 343. One embodiment of packed half 341, packed single 342, and packed double 343 contain fixed-point data elements. For another embodiment one or more of packed half 341, packed single 342, and packed double 343 may contain floating-point data elements. One embodiment of packed half 341 may be 128 bits long containing eight 16-bit data elements. One embodiment of packed single 342 may be 128 bits long and contains four 32-bit data elements. One embodiment of packed double 343 may be 128 bits long and contains two 64-bit data elements. It will be appreciated that such packed data formats may be further extended to other register lengths, for example, to 96-bits, 160-bits, 192-bits, 224-bits, 256-bits or more.

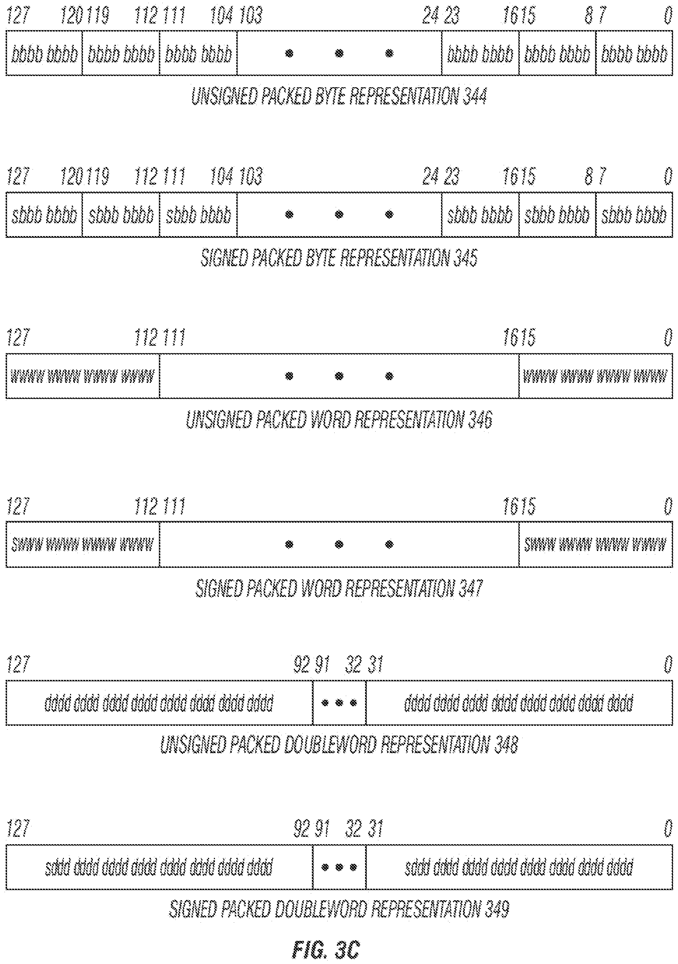

FIGURE 3C illustrates various signed and unsigned packed data type representations in multimedia registers, in accordance with embodiments of the present disclosure. Unsigned packed byte representation 344 illustrates the storage of an unsigned packed byte in a SIMD register. Information for each byte data element may be stored in bit 7 through bit 0 for byte 0, bit 15 through bit 8 for byte 1, bit 23 through bit 16 for byte 2, and finally bit 120 through bit 127 for byte 15. Thus, all available bits may be used in the register. This storage arrangement may increase the storage efficiency of the processor. As well, with sixteen data elements accessed, one operation may now be performed on sixteen data elements in a parallel fashion. Signed packed byte representation 345 illustrates the storage of a signed packed byte. Note that the eighth bit of every byte data element may be the sign indicator. Unsigned packed word representation 346 illustrates how word seven through word zero may be stored in a SIMD register. Signed packed word representation 347 may be similar to the unsigned packed word in-register representation 346. Note that the sixteenth bit of each word data element may be the sign indicator. Unsigned packed doubleword representation 348 shows how doubleword data elements are stored. Signed packed doubleword representation 349 may be similar to unsigned packed doubleword in-register representation 348. Note that the necessary sign bit may be the thirty-second bit of each doubleword data element.

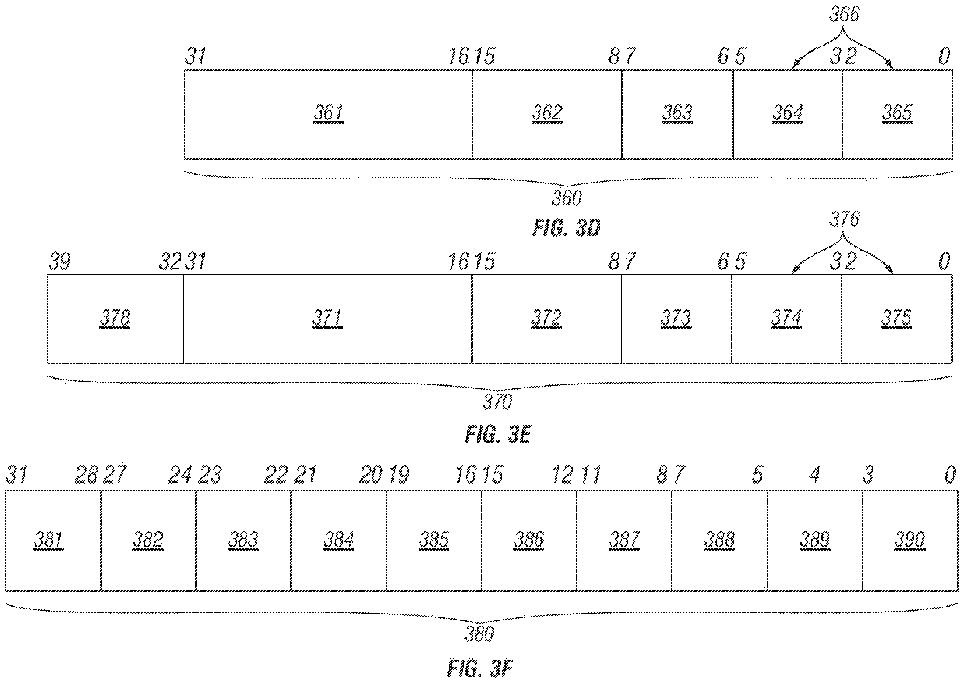

FIGURE 3D illustrates an embodiment of an operation encoding (opcode). Furthermore, format 360 may include register/memory operand addressing modes corresponding with a type of opcode format described in the "IA-32 Intel Architecture Software Developer's Manual Volume 2: Instruction Set Reference," which is available from Intel Corporation, Santa Clara, CA on the world-wide-web (www) at intel.com/design/litcentr. In one embodiment, an instruction may be encoded by one or more of fields 361 and 362. Up to two operand locations per instruction may be identified, including up to two source operand identifiers 364 and 365. In one embodiment, destination operand identifier 366 may be the same as source operand identifier 364, whereas in other embodiments they may be different. In another embodiment, destination operand identifier 366 may be the same as source operand identifier 365, whereas in other embodiments they may be different. In one embodiment, one of the source operands identified by source operand identifiers 364 and 365 may be overwritten by the results of the text string comparison operations, whereas in other embodiments identifier 364 corresponds to a source register element and identifier 365 corresponds to a destination register element. In one embodiment, operand identifiers 364 and 365 may identify 32-bit or 64-bit source and destination operands.

FIGURE 3E illustrates another possible operation encoding (opcode) format 370, having forty or more bits, in accordance with embodiments of the present disclosure. Opcode format 370 corresponds with opcode format 360 and comprises an optional prefix byte 378. An instruction according to one embodiment may be encoded by one or more of fields 378, 371, and 372. Up to two operand locations per instruction may be identified by source operand identifiers 374 and 375 and by prefix byte 378. In one embodiment, prefix byte 378 may be used to identify 32-bit or 64-bit source and destination operands. In one embodiment, destination operand identifier 376 may be the same as source operand identifier 374, whereas in other embodiments they may be different. For another embodiment, destination operand identifier 376 may be the same as source operand identifier 375, whereas in other embodiments they may be different. In one embodiment, an instruction operates on one or more of the operands identified by operand identifiers 374 and 375 and one or more operands identified by operand identifiers 374 and 375 may be overwritten by the results of the instruction, whereas in other embodiments, operands identified by identifiers 374 and 375 may be written to another data element in another register. Opcode formats 360 and 370 allow register to register, memory to register, register by memory, register by register, register by immediate, register to memory addressing specified in part by MOD fields 363 and 373 and by optional scale-index-base and displacement bytes.

FIGURE 3F illustrates yet another possible operation encoding (opcode) format, in accordance with embodiments of the present disclosure. 64-bit single instruction multiple data (SIMD) arithmetic operations may be performed through a coprocessor data processing (CDP) instruction. Operation encoding (opcode) format 380 depicts one such CDP instruction having CDP opcode fields 382 and 389. The type of CDP instruction, for another embodiment, operations may be encoded by one or more of fields 383, 384, 387, and 388. Up to three operand locations per instruction may be identified, including up to two source operand identifiers 385 and 390 and one destination operand identifier 386. One embodiment of the coprocessor may operate on eight, sixteen, thirty-two, and 64-bit values. In one embodiment, an instruction may be performed on integer data elements. In some embodiments, an instruction may be executed conditionally, using condition field 381. For some embodiments, source data sizes may be encoded by field 383. In some embodiments, Zero (Z), negative (N), carry (C), and overflow (V) detection may be done on SIMD fields. For some instructions, the type of saturation may be encoded by field 384.

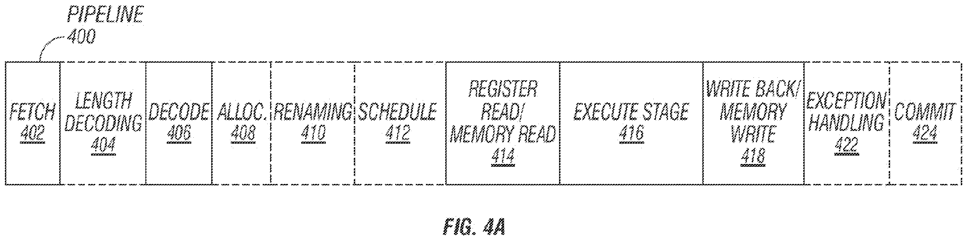

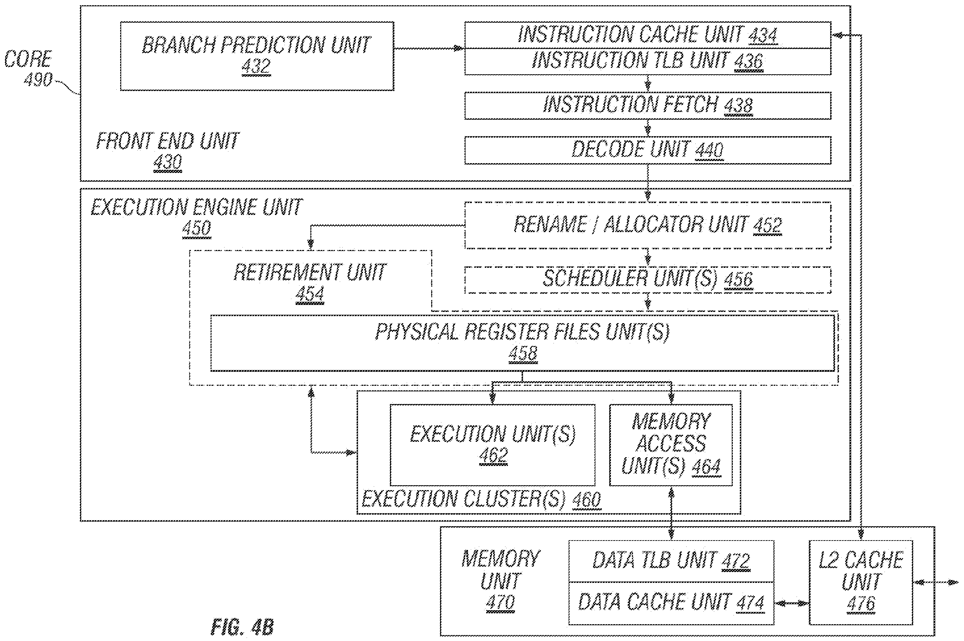

FIGURE 4A is a block diagram illustrating an in-order pipeline and a register renaming stage, out-of-order issue/execution pipeline, in accordance with embodiments of the present disclosure. FIGURE 4B is a block diagram illustrating an in-order architecture core and a register renaming logic, out-of-order issue/execution logic to be included in a processor, in accordance with embodiments of the present disclosure. The solid lined boxes in FIGURE 4A illustrate the in-order pipeline, while the dashed lined boxes illustrates the register renaming, out-of-order issue/execution pipeline. Similarly, the solid lined boxes in FIGURE 4B illustrate the in-order architecture logic, while the dashed lined boxes illustrates the register renaming logic and out-of-order issue/execution logic.

In FIGURE 4A, a processor pipeline 400 may include a fetch stage 402, a length decode stage 404, a decode stage 406, an allocation stage 408, a renaming stage 410, a scheduling (also known as a dispatch or issue) stage 412, a register read/memory read stage 414, an execute stage 416, a write-back/memory-write stage 418, an exception handling stage 422, and a commit stage 424.

In FIGURE 4B, arrows denote a coupling between two or more units and the direction of the arrow indicates a direction of data flow between those units. FIGURE 4B shows processor core 490 including a front end unit 430 coupled to an execution engine unit 450, and both may be coupled to a memory unit 470.

Core 490 may be a reduced instruction set computing (RISC) core, a complex instruction set computing (CISC) core, a very long instruction word (VLIW) core, or a hybrid or alternative core type. In one embodiment, core 490 may be a special-purpose core, such as, for example, a network or communication core, compression engine, graphics core, or the like.

Front end unit 430 may include a branch prediction unit 432 coupled to an instruction cache unit 434. Instruction cache unit 434 may be coupled to an instruction translation lookaside buffer (TLB) 436. TLB 436 may be coupled to an instruction fetch unit 438, which is coupled to a decode unit 440. Decode unit 440 may decode instructions, and generate as an output one or more micro-operations, micro-code entry points, microinstructions, other instructions, or other control signals, which may be decoded from, or which otherwise reflect, or may be derived from, the original instructions. The decoder may be implemented using various different mechanisms. Examples of suitable mechanisms include, but are not limited to, look-up tables, hardware implementations, programmable logic arrays (PLAs), microcode read-only memories (ROMs), etc. In one embodiment, instruction cache unit 434 may be further coupled to a level 2 (L2) cache unit 476 in memory unit 470. Decode unit 440 may be coupled to a rename/allocator unit 452 in execution engine unit 450.

Execution engine unit 450 may include rename/allocator unit 452 coupled to a retirement unit 454 and a set of one or more scheduler units 456. Scheduler units 456 represent any number of different schedulers, including reservations stations, central instruction window, etc. Scheduler units 456 may be coupled to physical register file units 458. Each of physical register file units 458 represents one or more physical register files, different ones of which store one or more different data types, such as scalar integer, scalar floating point, packed integer, packed floating point, vector integer, vector floating point, etc., status (e.g., an instruction pointer that is the address of the next instruction to be executed), etc. Physical register file units 458 may be overlapped by retirement unit 454 to illustrate various ways in which register renaming and out-of-order execution may be implemented (e.g., using one or more reorder buffers and one or more retirement register files, using one or more future files, one or more history buffers, and one or more retirement register files; using register maps and a pool of registers; etc.). Generally, the architectural registers may be visible from the outside of the processor or from a programmer's perspective. The registers might not be limited to any known particular type of circuit. Various different types of registers may be suitable as long as they store and provide data as described herein. Examples of suitable registers include, but might not be limited to, dedicated physical registers, dynamically allocated physical registers using register renaming, combinations of dedicated and dynamically allocated physical registers, etc. Retirement unit 454 and physical register file units 458 may be coupled to execution clusters 460. Execution clusters 460 may include a set of one or more execution units 462 and a set of one or more memory access units 464. Execution units 462 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. Scheduler units 456, physical register file units 458, and execution clusters 460 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file unit, and/or execution cluster - and in the case of a separate memory access pipeline, certain embodiments may be implemented in which only the execution cluster of this pipeline has memory access units 464). It should also be understood that where separate pipelines are used, one or more of these pipelines may be out-of-order issue/execution and the rest in-order.

The set of memory access units 464 may be coupled to memory unit 470, which may include a data TLB unit 472 coupled to a data cache unit 474 coupled to a level 2 (L2) cache unit 476. In one exemplary embodiment, memory access units 464 may include a load unit, a store address unit, and a store data unit, each of which may be coupled to data TLB unit 472 in memory unit 470. L2 cache unit 476 may be coupled to one or more other levels of cache and eventually to a main memory.

By way of example, the exemplary register renaming, out-of-order issue/execution core architecture may implement pipeline 400 as follows: 1) instruction fetch 438 may perform fetch and length decoding stages 402 and 404; 2) decode unit 440 may perform decode stage 406; 3) rename/allocator unit 452 may perform allocation stage 408 and renaming stage 410; 4) scheduler units 456 may perform schedule stage 412; 5) physical register file units 458 and memory unit 470 may perform register read/memory read stage 414; execution cluster 460 may perform execute stage 416; 6) memory unit 470 and physical register file units 458 may perform write-back/memory-write stage 418; 7) various units may be involved in the performance of exception handling stage 422; and 8) retirement unit 454 and physical register file units 458 may perform commit stage 424.

Core 490 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA).

It should be understood that the core may support multithreading (executing two or more parallel sets of operations or threads) in a variety of manners. Multithreading support may be performed by, for example, including time sliced multithreading, simultaneous multithreading (where a single physical core provides a logical core for each of the threads that physical core is simultaneously multithreading), or a combination thereof. Such a combination may include, for example, time sliced fetching and decoding and simultaneous multithreading thereafter such as in the Intel® Hyperthreading technology.

While register renaming may be described in the context of out-of-order execution, it should be understood that register renaming may be used in an in-order architecture. While the illustrated embodiment of the processor may also include a separate instruction and data cache units 434/474 and a shared L2 cache unit 476, other embodiments may have a single internal cache for both instructions and data, such as, for example, a Level 1 (LI) internal cache, or multiple levels of internal cache. In some embodiments, the system may include a combination of an internal cache and an external cache that may be external to the core and/or the processor. In other embodiments, all of the caches may be external to the core and/or the processor.

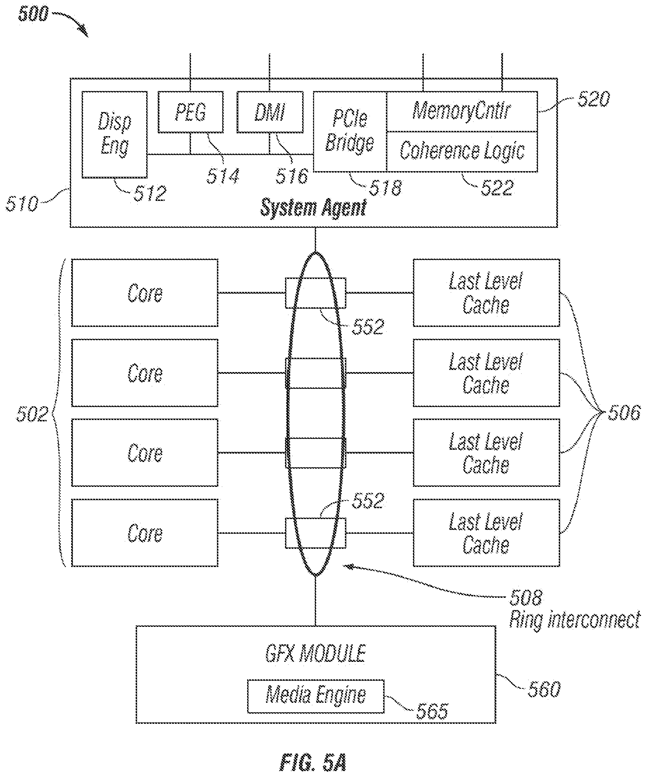

FIGURE 5A is a block diagram of a processor 500, in accordance with embodiments of the present disclosure. In one embodiment, processor 500 may include a multicore processor. Processor 500 may include a system agent 510 communicatively coupled to one or more cores 502. Furthermore, cores 502 and system agent 510 may be communicatively coupled to one or more caches 506. Cores 502, system agent 510, and caches 506 may be communicatively coupled via one or more memory control units 552. Furthermore, cores 502, system agent 510, and caches 506 may be communicatively coupled to a graphics module 560 via memory control units 552.

Processor 500 may include any suitable mechanism for interconnecting cores 502, system agent 510, and caches 506, and graphics module 560. In one embodiment, processor 500 may include a ring-based interconnect unit 508 to interconnect cores 502, system agent 510, and caches 506, and graphics module 560. In other embodiments, processor 500 may include any number of well-known techniques for interconnecting such units. Ring-based interconnect unit 508 may utilize memory control units 552 to facilitate interconnections.

Processor 500 may include a memory hierarchy comprising one or more levels of caches within the cores, one or more shared cache units such as caches 506, or external memory (not shown) coupled to the set of integrated memory controller units 552. Caches 506 may include any suitable cache. In one embodiment, caches 506 may include one or more mid-level caches, such as level 2 (L2), level 3 (L3), level 4 (L4), or other levels of cache, a last level cache (LLC), and/or combinations thereof.

In various embodiments, one or more of cores 502 may perform multithreading. System agent 510 may include components for coordinating and operating cores 502. System agent unit 510 may include for example a power control unit (PCU). The PCU may be or include logic and components needed for regulating the power state of cores 502. System agent 510 may include a display engine 512 for driving one or more externally connected displays or graphics module 560. System agent 510 may include an interface 514 for communications busses for graphics. In one embodiment, interface 514 may be implemented by PCI Express (PCIe). In a further embodiment, interface 514 may be implemented by PCI Express Graphics (PEG). System agent 510 may include a direct media interface (DMI) 516. DMI 516 may provide links between different bridges on a motherboard or other portion of a computer system. System agent 510 may include a PCIe bridge 518 for providing PCIe links to other elements of a computing system. PCIe bridge 518 may be implemented using a memory controller 520 and coherence logic 522.

Cores 502 may be implemented in any suitable manner. Cores 502 may be homogenous or heterogeneous in terms of architecture and/or instruction set. In one embodiment, some of cores 502 may be in-order while others may be out-of-order. In another embodiment, two or more of cores 502 may execute the same instruction set, while others may execute only a subset of that instruction set or a different instruction set.

Processor 500 may include a general-purpose processor, such as a Core™ i3, i5, i7, 2 Duo and Quad, Xeon™, Itanium™, XScale™ or StrongARM™ processor, which may be available from Intel Corporation, of Santa Clara, Calif. Processor 500 may be provided from another company, such as ARM Holdings, Ltd, MIPS, etc. Processor 500 may be a special-purpose processor, such as, for example, a network or communication processor, compression engine, graphics processor, co-processor, embedded processor, or the like. Processor 500 may be implemented on one or more chips. Processor 500 may be a part of and/or may be implemented on one or more substrates using any of a number of process technologies, such as, for example, BiCMOS, CMOS, or NMOS.

In one embodiment, a given one of caches 506 may be shared by multiple ones of cores 502. In another embodiment, a given one of caches 506 may be dedicated to one of cores 502. The assignment of caches 506 to cores 502 may be handled by a cache controller or other suitable mechanism. A given one of caches 506 may be shared by two or more cores 502 by implementing time-slices of a given cache 506.

Graphics module 560 may implement an integrated graphics processing subsystem. In one embodiment, graphics module 560 may include a graphics processor. Furthermore, graphics module 560 may include a media engine 565. Media engine 565 may provide media encoding and video decoding.

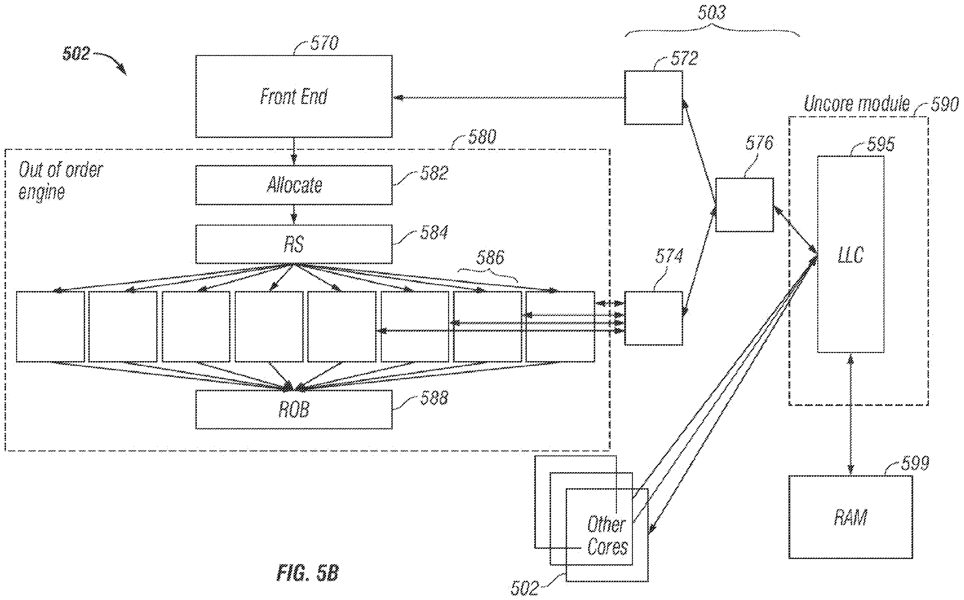

FIGURE 5B is a block diagram of an example implementation of a core 502, in accordance with embodiments of the present disclosure. Core 502 may include a front end 570 communicatively coupled to an out-of-order engine 580. Core 502 may be communicatively coupled to other portions of processor 500 through cache hierarchy 503.

Front end 570 may be implemented in any suitable manner, such as fully or in part by front end 201 as described above. In one embodiment, front end 570 may communicate with other portions of processor 500 through cache hierarchy 503. In a further embodiment, front end 570 may fetch instructions from portions of processor 500 and prepare the instructions to be used later in the processor pipeline as they are passed to out-of-order execution engine 580.

Out-of-order execution engine 580 may be implemented in any suitable manner, such as fully or in part by out-of-order execution engine 203 as described above. Out-of-order execution engine 580 may prepare instructions received from front end 570 for execution. Out-of-order execution engine 580 may include an allocate module 582. In one embodiment, allocate module 582 may allocate resources of processor 500 or other resources, such as registers or buffers, to execute a given instruction. Allocate module 582 may make allocations in schedulers, such as a memory scheduler, fast scheduler, or floating point scheduler. Such schedulers may be represented in FIGURE 5B by resource schedulers 584. Allocate module 582 may be implemented fully or in part by the allocation logic described in conjunction with FIGURE 2. Resource schedulers 584 may determine when an instruction is ready to execute based on the readiness of a given resource's sources and the availability of execution resources needed to execute an instruction. Resource schedulers 584 may be implemented by, for example, schedulers 202, 204, 206 as discussed above. Resource schedulers 584 may schedule the execution of instructions upon one or more resources. In one embodiment, such resources may be internal to core 502, and may be illustrated, for example, as resources 586. In another embodiment, such resources may be external to core 502 and may be accessible by, for example, cache hierarchy 503. Resources may include, for example, memory, caches, register files, or registers. Resources internal to core 502 may be represented by resources 586 in FIGURE 5B. As necessary, values written to or read from resources 586 may be coordinated with other portions of processor 500 through, for example, cache hierarchy 503. As instructions are assigned resources, they may be placed into a reorder buffer 588. Reorder buffer 588 may track instructions as they are executed and may selectively reorder their execution based upon any suitable criteria of processor 500. In one embodiment, reorder buffer 588 may identify instructions or a series of instructions that may be executed independently. Such instructions or a series of instructions may be executed in parallel from other such instructions. Parallel execution in core 502 may be performed by any suitable number of separate execution blocks or virtual processors. In one embodiment, shared resources-such as memory, registers, and caches-may be accessible to multiple virtual processors within a given core 502. In other embodiments, shared resources may be accessible to multiple processing entities within processor 500.

Cache hierarchy 503 may be implemented in any suitable manner. For example, cache hierarchy 503 may include one or more lower or mid-level caches, such as caches 572, 574. In one embodiment, cache hierarchy 503 may include an LLC 595 communicatively coupled to caches 572, 574. In another embodiment, LLC 595 may be implemented in a module 590 accessible to all processing entities of processor 500. In a further embodiment, module 590 may be implemented in an uncore module of processors from Intel, Inc. Module 590 may include portions or subsystems of processor 500 necessary for the execution of core 502 but might not be implemented within core 502. Besides LLC 595, Module 590 may include, for example, hardware interfaces, memory coherency coordinators, interprocessor interconnects, instruction pipelines, or memory controllers. Access to RAM 599 available to processor 500 may be made through module 590 and, more specifically, LLC 595. Furthermore, other instances of core 502 may similarly access module 590. Coordination of the instances of core 502 may be facilitated in part through module 590.

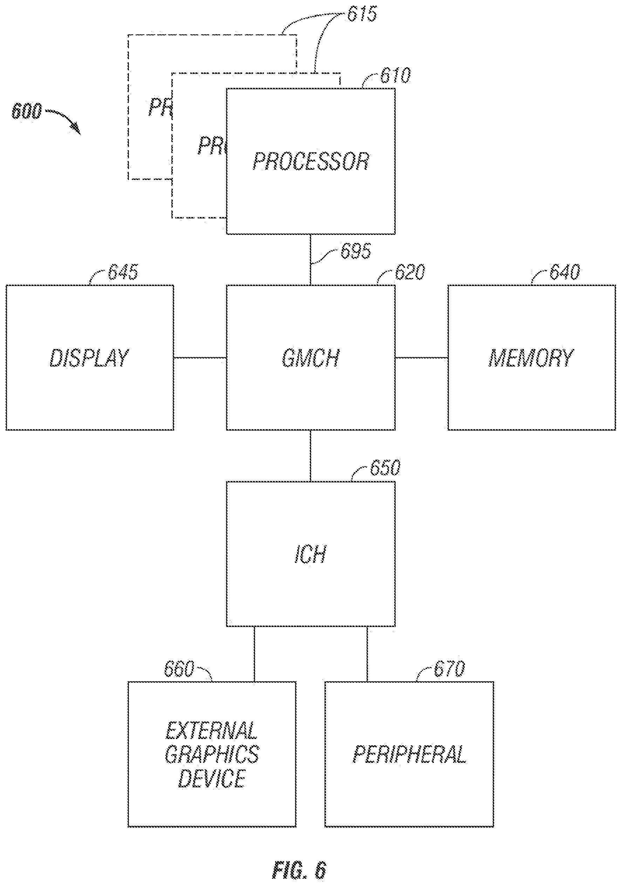

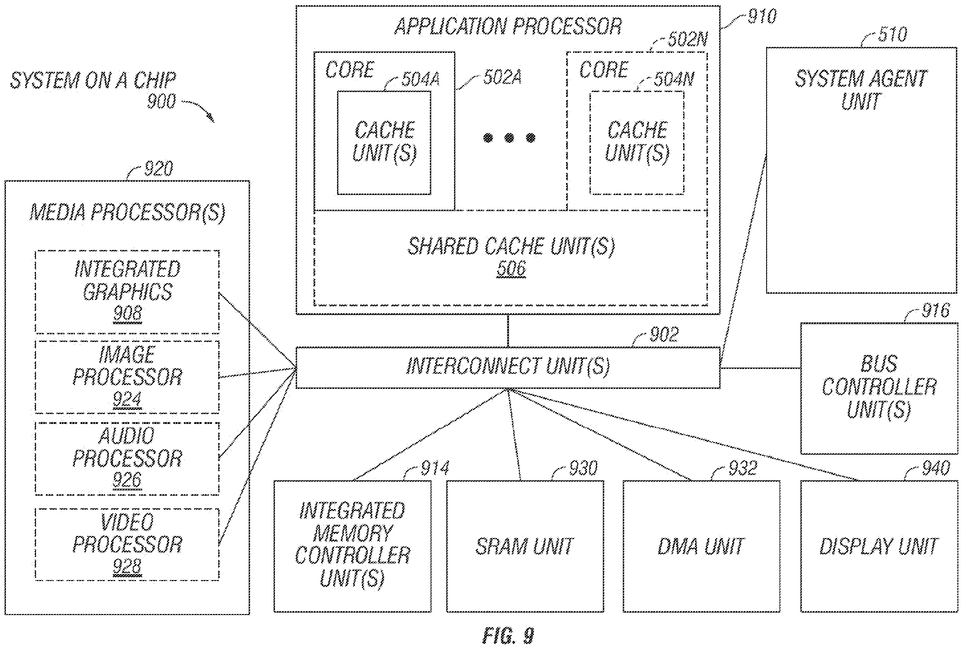

FIGURES 6-8 may illustrate exemplary systems suitable for including processor 500, while FIGURE 9 may illustrate an exemplary system on a chip (SoC) that may include one or more of cores 502. Other system designs and implementations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, may also be suitable. In general, a huge variety of systems or electronic devices that incorporate a processor and/or other execution logic as disclosed herein may be generally suitable.

FIGURE 6 illustrates a block diagram of a system 600, in accordance with embodiments of the present disclosure. System 600 may include one or more processors 610, 615, which may be coupled to graphics memory controller hub (GMCH) 620. The optional nature of additional processors 615 is denoted in FIGURE 6 with broken lines.

Each processor 610,615 may be some version of processor 500. However, it should be noted that integrated graphics logic and integrated memory control units might not exist in processors 610,615. FIGURE 6 illustrates that GMCH 620 may be coupled to a memory 640 that may be, for example, a dynamic random access memory (DRAM). The DRAM may, for at least one embodiment, be associated with a nonvolatile cache.

GMCH 620 may be a chipset, or a portion of a chipset. GMCH 620 may communicate with processors 610, 615 and control interaction between processors 610, 615 and memory 640. GMCH 620 may also act as an accelerated bus interface between the processors 610, 615 and other elements of system 600. In one embodiment, GMCH 620 communicates with processors 610, 615 via a multi-drop bus, such as a frontside bus (FSB) 695.

Furthermore, GMCH 620 may be coupled to a display 645 (such as a flat panel display). In one embodiment, GMCH 620 may include an integrated graphics accelerator. GMCH 620 may be further coupled to an input/output (I/O) controller hub (ICH) 650, which may be used to couple various peripheral devices to system 600. External graphics device 660 may include a discrete graphics device coupled to ICH 650 along with another peripheral device 670.

In other embodiments, additional or different processors may also be present in system 600. For example, additional processors 610, 615 may include additional processors that may be the same as processor 610, additional processors that may be heterogeneous or asymmetric to processor 610, accelerators (such as, e.g., graphics accelerators or digital signal processing (DSP) units), field programmable gate arrays, or any other processor. There may be a variety of differences between the physical resources 610, 615 in terms of a spectrum of metrics of merit including architectural, micro-architectural, thermal, power consumption characteristics, and the like. These differences may effectively manifest themselves as asymmetry and heterogeneity amongst processors 610, 615. For at least one embodiment, various processors 610, 615 may reside in the same die package.

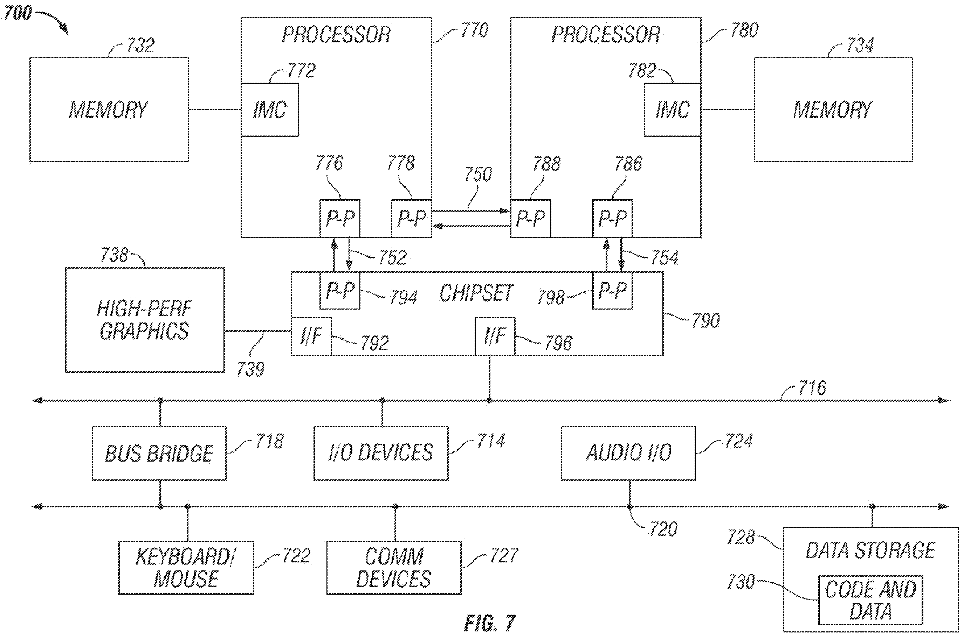

FIGURE 7 illustrates a block diagram of a second system 700, in accordance with embodiments of the present disclosure. As shown in FIGURE 7, multiprocessor system 700 may include a point-to-point interconnect system, and may include a first processor 770 and a second processor 780 coupled via a point-to-point interconnect 750. Each of processors 770 and 780 may be some version of processor 500 as one or more of processors 610,615.

While FIGURE 7 may illustrate two processors 770, 780, it is to be understood that the scope of the present disclosure is not so limited. In other embodiments, one or more additional processors may be present in a given processor.

Processors 770 and 780 are shown including integrated memory controller units 772 and 782, respectively. Processor 770 may also include as part of its bus controller units point-to-point (P-P) interfaces 776 and 778; similarly, second processor 780 may include P-P interfaces 786 and 788. Processors 770, 780 may exchange information via a point-to-point (P-P) interface 750 using P-P interface circuits 778, 788. As shown in FIGURE 7, IMCs 772 and 782 may couple the processors to respective memories, namely a memory 732 and a memory 734, which in one embodiment may be portions of main memory locally attached to the respective processors.

Processors 770, 780 may each exchange information with a chipset 790 via individual P-P interfaces 752, 754 using point to point interface circuits 776, 794, 786, 798. In one embodiment, chipset 790 may also exchange information with a high-performance graphics circuit 738 via a high-performance graphics interface 739.

A shared cache (not shown) may be included in either processor or outside of both processors, yet connected with the processors via P-P interconnect, such that either or both processors' local cache information may be stored in the shared cache if a processor is placed into a low power mode.

Chipset 790 may be coupled to a first bus 716 via an interface 796. In one embodiment, first bus 716 may be a Peripheral Component Interconnect (PCI) bus, or a bus such as a PCI Express bus or another third generation I/O interconnect bus, although the scope of the present disclosure is not so limited.

As shown in FIGURE 7, various I/O devices 714 may be coupled to first bus 716, along with a bus bridge 718 which couples first bus 716 to a second bus 720. In one embodiment, second bus 720 may be a low pin count (LPC) bus. Various devices may be coupled to second bus 720 including, for example, a keyboard and/or mouse 722, communication devices 727 and a storage unit 728 such as a disk drive or other mass storage device which may include instructions/code and data 730, in one embodiment. Further, an audio I/O 724 may be coupled to second bus 720. Note that other architectures may be possible. For example, instead of the point-to-point architecture of FIGURE 7, a system may implement a multi-drop bus or other such architecture.

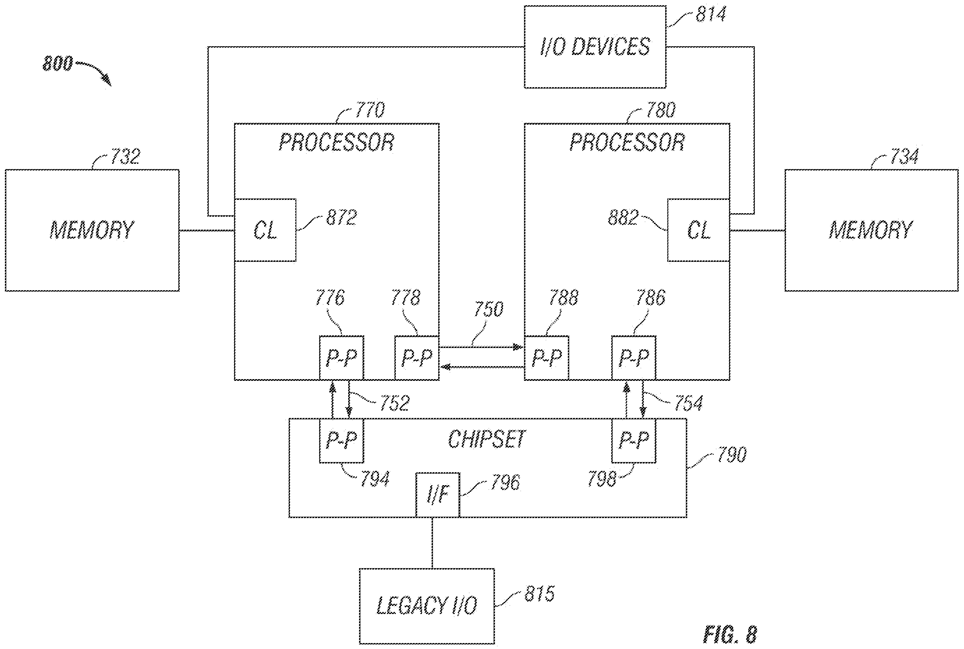

FIGURE 8 illustrates a block diagram of a third system 800 in accordance with embodiments of the present disclosure. Like elements in FIGURES 7 and 8 bear like reference numerals, and certain aspects of FIGURE 7 have been omitted from FIGURE 8 in order to avoid obscuring other aspects of FIGURE 8.

FIGURE 8 illustrates that processors 770, 780 may include integrated memory and I/O control logic ("CL") 872 and 882, respectively. For at least one embodiment, CL 872, 882 may include integrated memory controller units such as that described above in connection with FIGURES 5 and 7. In addition. CL 872, 882 may also include I/O control logic. FIGURE 8 illustrates that not only memories 732, 734 may be coupled to CL 872, 882, but also that I/O devices 814 may also be coupled to control logic 872, 882. Legacy I/O devices 815 may be coupled to chipset 790.

FIGURE 9 illustrates a block diagram of a SoC 900, in accordance with embodiments of the present disclosure. Similar elements in FIGURE 5 bear like reference numerals. Also, dashed lined boxes may represent optional features on more advanced SoCs. An interconnect units 902 may be coupled to: an application processor 910 which may include a set of one or more cores 502A-N and shared cache units 506; a system agent unit 510; a bus controller units 916; an integrated memory controller units 914; a set or one or more media processors 920 which may include integrated graphics logic 908, an image processor 924 for providing still and/or video camera functionality, an audio processor 926 for providing hardware audio acceleration, and a video processor 928 for providing video encode/decode acceleration; an static random access memory (SRAM) unit 930; a direct memory access (DMA) unit 932; and a display unit 940 for coupling to one or more external displays.

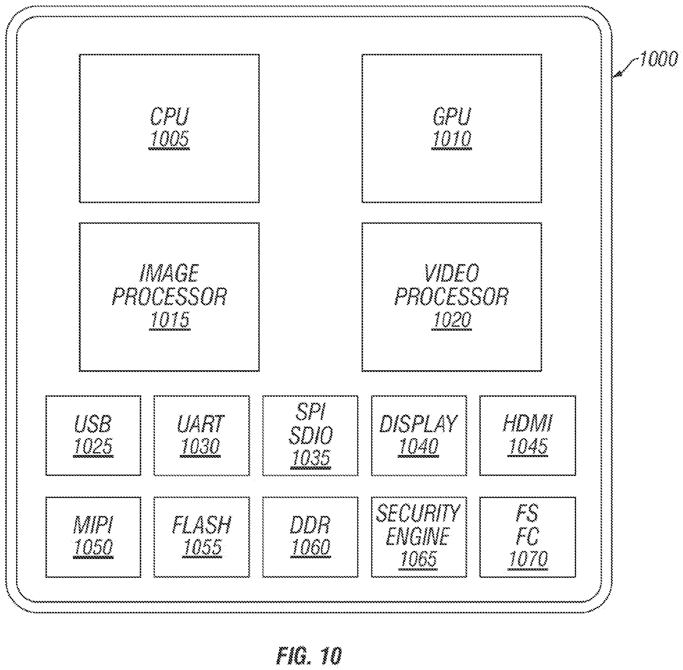

FIGURE 10 illustrates a processor containing a central processing unit (CPU) and a graphics processing unit (GPU), which may perform at least one instruction, in accordance with embodiments of the present disclosure. In one embodiment, an instruction to perform operations according to at least one embodiment could be performed by the CPU. In another embodiment, the instruction could be performed by the GPU. In still another embodiment, the instruction may be performed through a combination of operations performed by the GPU and the CPU. For example, in one embodiment, an instruction in accordance with one embodiment may be received and decoded for execution on the GPU. However, one or more operations within the decoded instruction may be performed by a CPU and the result returned to the GPU for final retirement of the instruction. Conversely, in some embodiments, the CPU may act as the primary processor and the GPU as the co-processor.

In some embodiments, instructions that benefit from highly parallel, throughput processors may be performed by the GPU, while instructions that benefit from the performance of processors that benefit from deeply pipelined architectures may be performed by the CPU. For example, graphics, scientific applications, financial applications and other parallel workloads may benefit from the performance of the GPU and be executed accordingly, whereas more sequential applications, such as operating system kernel or application code may be better suited for the CPU.

In FIGURE 10, processor 1000 includes a CPU 1005, GPU 1010, image processor 1015, video processor 1020, USB controller 1025, UART controller 1030, SPI/SDIO controller 1035, display device 1040, memory interface controller 1045, MIPI controller 1050, flash memory controller 1055, dual data rate (DDR) controller 1060, security engine 1065, and I²S/I²C controller 1070. Other logic and circuits may be included in the processor of FIGURE 10, including more CPUs or GPUs and other peripheral interface controllers.

One or more aspects of at least one embodiment may be implemented by representative data stored on a machine-readable medium which represents various logic within the processor, which when read by a machine causes the machine to fabricate logic to perform the techniques described herein. Such representations, known as "IP cores" may be stored on a tangible, machine-readable medium ("tape") and supplied to various customers or manufacturing facilities to load into the fabrication machines that actually make the logic or processor. For example, IP cores, such as the Cortex™ family of processors developed by ARM Holdings, Ltd. and Loongson IP cores developed the Institute of Computing Technology (ICT) of the Chinese Academy of Sciences may be licensed or sold to various customers or licensees, such as Texas Instruments, Qualcomm, Apple, or Samsung and implemented in processors produced by these customers or licensees.

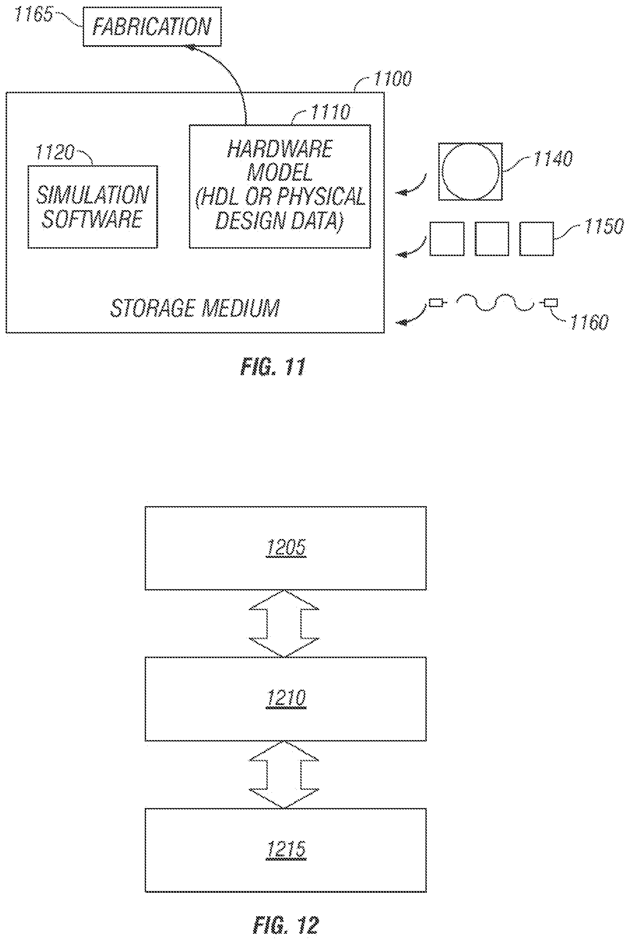

FIGURE 11 illustrates a block diagram illustrating the development of IP cores, in accordance with embodiments of the present disclosure. Storage 1100 may include simulation software 1120 and/or hardware or software model 1110. In one embodiment, the data representing the IP core design may be provided to storage 1100 via memory 1140 (e.g., hard disk), wired connection (e.g., internet) 1150 or wireless connection 1160. The IP core information generated by the simulation tool and model may then be transmitted to a fabrication facility 1165 where it may be fabricated by a 3^{rd} party to perform at least one instruction in accordance with at least one embodiment.

In some embodiments, one or more instructions may correspond to a first type or architecture (e.g., x86) and be translated or emulated on a processor of a different type or architecture (e.g., ARM). An instruction, according to one embodiment, may therefore be performed on any processor or processor type, including ARM, x86, MIPS, a GPU, or other processor type or architecture.

FIGURE 12 illustrates how an instruction of a first type may be emulated by a processor of a different type, in accordance with embodiments of the present disclosure. In FIGURE 12, program 1205 contains some instructions that may perform the same or substantially the same function as an instruction according to one embodiment. However the instructions of program 1205 may be of a type and/or format that is different from or incompatible with processor 1215, meaning the instructions of the type in program 1205 may not be able to execute natively by the processor 1215. However, with the help of emulation logic, 1210, the instructions of program 1205 may be translated into instructions that may be natively be executed by the processor 1215. In one embodiment, the emulation logic may be embodied in hardware. In another embodiment, the emulation logic may be embodied in a tangible, machine-readable medium containing software to translate instructions of the type in program 1205 into the type natively executable by processor 1215. In other embodiments, emulation logic may be a combination of fixed-function or programmable hardware and a program stored on a tangible, machine-readable medium. In one embodiment, the processor contains the emulation logic, whereas in other embodiments, the emulation logic exists outside of the processor and may be provided by a third party. In one embodiment, the processor may load the emulation logic embodied in a tangible, machine-readable medium containing software by executing microcode or firmware contained in or associated with the processor.

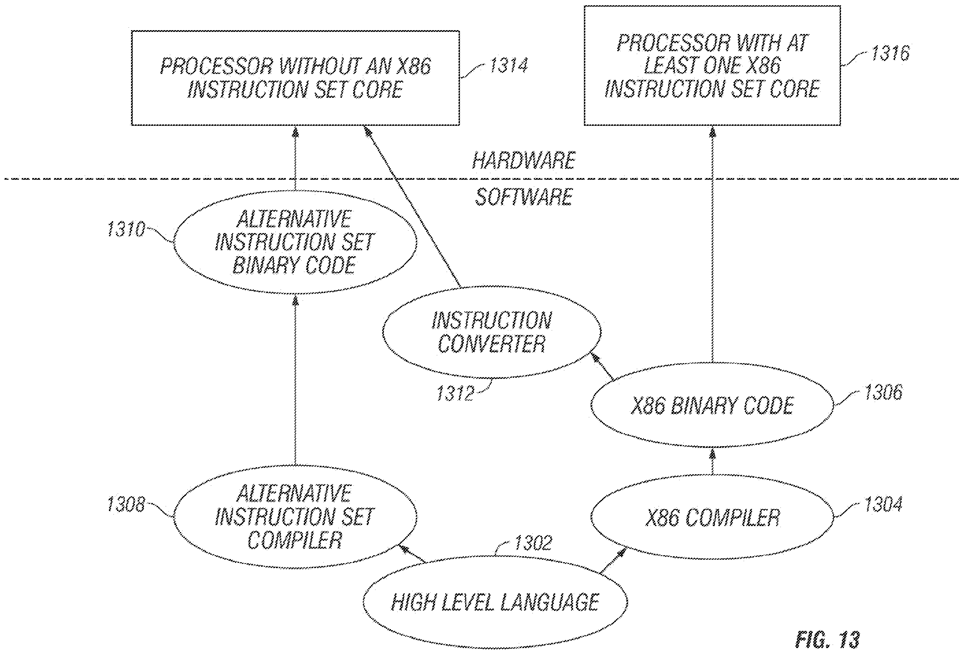

FIGURE 13 illustrates a block diagram contrasting the use of a software instruction converter to convert binary instructions in a source instruction set to binary instructions in a target instruction set, in accordance with embodiments of the present disclosure. In the illustrated embodiment, the instruction converter may be a software instruction converter, although the instruction converter may be implemented in software, firmware, hardware, or various combinations thereof. FIGURE 13 shows a program in a high level language 1302 may be compiled using an x86 compiler 1304 to generate x86 binary code 1306 that may be natively executed by a processor with at least one x86 instruction set core 1316. The processor with at least one x86 instruction set core 1316 represents any processor that may perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. x86 compiler 1304 represents a compiler that may be operable to generate x86 binary code 1306 (e.g., object code) that may, with or without additional linkage processing, be executed on the processor with at least one x86 instruction set core 1316. Similarly, FIGURE 13 shows the program in high level language 1302 may be compiled using an alternative instruction set compiler 1308 to generate alternative instruction set binary code 1310 that may be natively executed by a processor without at least one x86 instruction set core 1314 (e.g., a processor with cores that execute the MIPS instruction set of MIPS Technologies of Sunnyvale, CA and/or that execute the ARM instruction set of ARM Holdings of Sunnyvale, CA). Instruction converter 1312 may be used to convert x86 binary code 1306 into code that may be natively executed by the processor without an x86 instruction set core 1314. This converted code might not be the same as alternative instruction set binary code 1310; however, the converted code will accomplish the general operation and be made up of instructions from the alternative instruction set. Thus, instruction converter 1312 represents software, firmware, hardware, or a combination thereof that, through emulation, simulation or any other process, allows a processor or other electronic device that does not have an x86 instruction set processor or core to execute x86 binary code 1306.

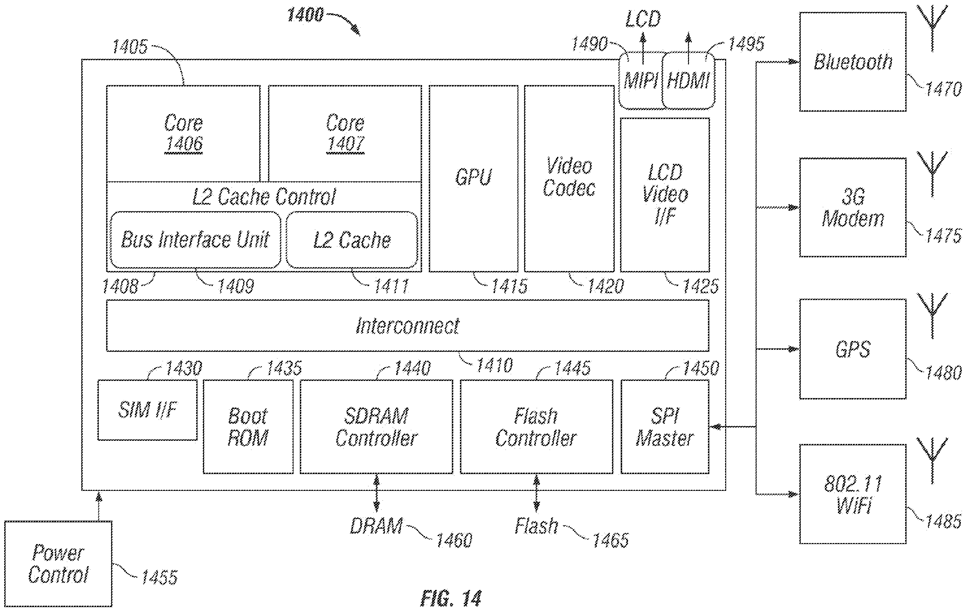

FIGURE 14 is a block diagram of an instruction set architecture 1400 of a processor, in accordance with embodiments of the present disclosure. Instruction set architecture 1400 may include any suitable number or kind of components.

For example, instruction set architecture 1400 may include processing entities such as one or more cores 1406, 1407 and a graphics processing unit 1415. Cores 1406, 1407 may be communicatively coupled to the rest of instruction set architecture 1400 through any suitable mechanism, such as through a bus or cache. In one embodiment, cores 1406, 1407 may be communicatively coupled through an L2 cache control 1408, which may include a bus interface unit 1409 and an L2 cache 1411. Cores 1406, 1407 and graphics processing unit 1415 may be communicatively coupled to each other and to the remainder of instruction set architecture 1400 through interconnect 1410. In one embodiment, graphics processing unit 1415 may use a video code 1420 defining the manner in which particular video signals will be encoded and decoded for output.

Instruction set architecture 1400 may also include any number or kind of interfaces, controllers, or other mechanisms for interfacing or communicating with other portions of an electronic device or system. Such mechanisms may facilitate interaction with, for example, peripherals, communications devices, other processors, or memory. In the example of FIGURE 14, instruction set architecture 1400 may include a liquid crystal display (LCD) video interface 1425, a subscriber interface module (SIM) interface 1430, a boot ROM interface 1435, a synchronous dynamic random access memory (SDRAM) controller 1440, a flash controller 1445, and a serial peripheral interface (SPI) master unit 1450. LCD video interface 1425 may provide output of video signals from, for example, GPU 1415 and through, for example, a mobile industry processor interface (MIPI) 1490 or a high-definition multimedia interface (HDMI) 1495 to a display. Such a display may include, for example, an LCD. SIM interface 1430 may provide access to or from a SIM card or device. SDRAM controller 1440 may provide access to or from memory such as an SDRAM chip or module 1460. Flash controller 1445 may provide access to or from memory such as flash memory 1465 or other instances of RAM SPI master unit 1450 may provide access to or from communications modules, such as a Bluetooth module 1470, high-speed 3G modem 1475, global positioning system module 1480, or wireless module 1485 implementing a communications standard such as 802.11.

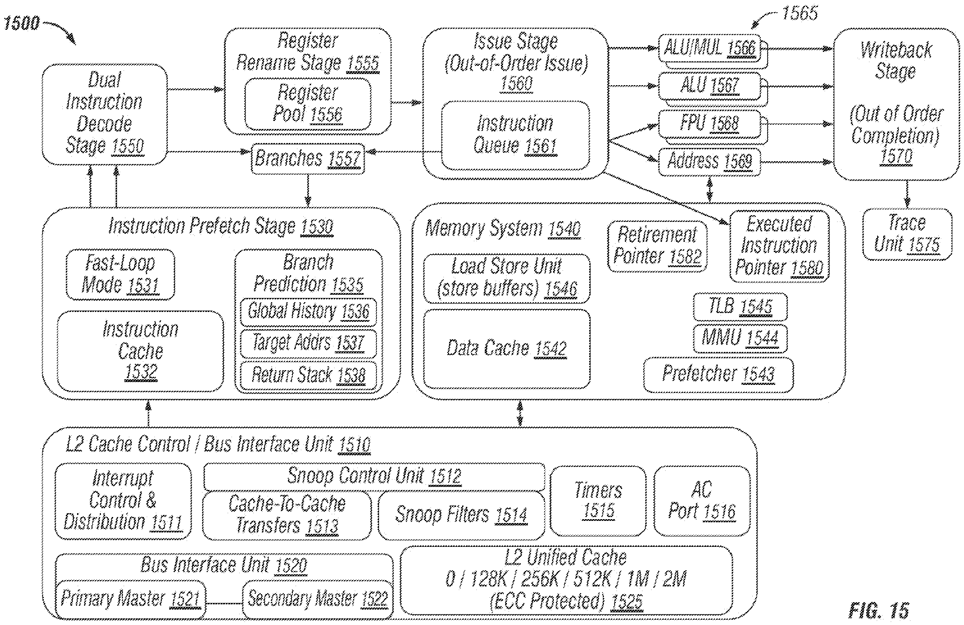

FIGURE 15 is a more detailed block diagram of an instruction set architecture 1500 of a processor, in accordance with embodiments of the present disclosure. Instruction architecture 1500 may implement one or more aspects of instruction set architecture 1400. Furthermore, instruction set architecture 1500 may illustrate modules and mechanisms for the execution of instructions within a processor.

Instruction architecture 1500 may include a memory system 1540 communicatively coupled to one or more execution entities 1565. Furthermore, instruction architecture 1500 may include a caching and bus interface unit such as unit 1510 communicatively coupled to execution entities 1565 and memory system 1540. In one embodiment, loading of instructions into execution entities 1565 may be performed by one or more stages of execution. Such stages may include, for example, instruction prefetch stage 1530, dual instruction decode stage 1550, register rename stage 1555, issue stage 1560, and writeback stage 1570.

In one embodiment, memory system 1540 may include an executed instruction pointer 1580. Executed instruction pointer 1580 may store a value identifying the oldest, undispatched instruction within a batch of instructions. The oldest instruction may correspond to the lowest Program Order (PO) value. A PO may include a unique number of an instruction. Such an instruction may be a single instruction within a thread represented by multiple strands. A PO may be used in ordering instructions to ensure correct execution semantics of code. A PO may be reconstructed by mechanisms such as evaluating increments to PO encoded in the instruction rather than an absolute value. Such a reconstructed PO may be known as an "RPO." Although a PO may be referenced herein, such a PO may be used interchangeably with an RPO. A strand may include a sequence of instructions that are data dependent upon each other. The strand may be arranged by a binary translator at compilation time. Hardware executing a strand may execute the instructions of a given strand in order according to the PO of the various instructions. A thread may include multiple strands such that instructions of different strands may depend upon each other. A PO of a given strand may be the PO of the oldest instruction in the strand which has not yet been dispatched to execution from an issue stage. Accordingly, given a thread of multiple strands, each strand including instructions ordered by PO, executed instruction pointer 1580 may store the oldest-illustrated by the lowest number-PO in the thread.

In another embodiment, memory system 1540 may include a retirement pointer 1582. Retirement pointer 1582 may store a value identifying the PO of the last retired instruction. Retirement pointer 1582 may be set by, for example, retirement unit 454. If no instructions have yet been retired, retirement pointer 1582 may include a null value.

Execution entities 1565 may include any suitable number and kind of mechanisms by which a processor may execute instructions. In the example of FIGURE 15, execution entities 1565 may include ALU/multiplication units (MUL) 1566, ALUs 1567, and floating point units (FPU) 1568. In one embodiment, such entities may make use of information contained within a given address 1569. Execution entities 1565 in combination with stages 1530, 1550, 1555, 1560, 1570 may collectively form an execution unit.

Unit 1510 may be implemented in any suitable manner. In one embodiment, unit 1510 may perform cache control. In such an embodiment, unit 1510 may thus include a cache 1525. Cache 1525 may be implemented, in a further embodiment, as an L2 unified cache with any suitable size, such as zero, 128k, 256k, 512k, 1M, or 2M bytes of memory. In another, further embodiment, cache 1525 may be implemented in error-correcting code memory. In another embodiment, unit 1510 may perform bus interfacing to other portions of a processor or electronic device. In such an embodiment, unit 1510 may thus include a bus interface unit 1520 for communicating over an interconnect, intraprocessor bus, interprocessor bus, or other communication bus, port, or line. Bus interface unit 1520 may provide interfacing in order to perform, for example, generation of the memory and input/output addresses for the transfer of data between execution entities 1565 and the portions of a system external to instruction architecture 1500.

To further facilitate its functions, bus interface unit 1520 may include an interrupt control and distribution unit 1511 for generating interrupts and other communications to other portions of a processor or electronic device. In one embodiment, bus interface unit 1520 may include a snoop control unit 1512 that handles cache access and coherency for multiple processing cores. In a further embodiment, to provide such functionality, snoop control unit 1512 may include a cache-to-cache transfer unit that handles information exchanges between different caches. In another, further embodiment, snoop control unit 1512 may include one or more snoop filters 1514 that monitors the coherency of other caches (not shown) so that a cache controller, such as unit 1510, does not have to perform such monitoring directly. Unit 1510 may include any suitable number of timers 1515 for synchronizing the actions of instruction architecture 1500. Also, unit 1510 may include an AC port 1516.

Memory system 1540 may include any suitable number and kind of mechanisms for storing information for the processing needs of instruction architecture 1500. In one embodiment, memory system 1540 may include a load store unit 1546 for storing information such as buffers written to or read back from memory or registers. In another embodiment, memory system 1540 may include a translation lookaside buffer (TLB) 1545 that provides look-up of address values between physical and virtual addresses. In yet another embodiment, memory system 1540 may include a memory management unit (MMU) 1544 for facilitating access to virtual memory. In still yet another embodiment, memory system 1540 may include a prefetcher 1543 for requesting instructions from memory before such instructions are actually needed to be executed, in order to reduce latency.

The operation of instruction architecture 1500 to execute an instruction may be performed through different stages. For example, using unit 1510 instruction prefetch stage 1530 may access an instruction through prefetcher 1543. Instructions retrieved may be stored in instruction cache 1532. Prefetch stage 1530 may enable an option 1531 for fast-loop mode, wherein a series of instructions forming a loop that is small enough to fit within a given cache are executed. In one embodiment, such an execution may be performed without needing to access additional instructions from, for example, instruction cache 1532. Determination of what instructions to prefetch may be made by, for example, branch prediction unit 1535, which may access indications of execution in global history 1536, indications of target addresses 1537, or contents of a return stack 1538 to determine which of branches 1557 of code will be executed next. Such branches may be possibly prefetched as a result. Branches 1557 may be produced through other stages of operation as described below. Instruction prefetch stage 1530 may provide instructions as well as any predictions about future instructions to dual instruction decode stage 1550.

Dual instruction decode stage 1550 may translate a received instruction into microcode-based instructions that may be executed. Dual instruction decode stage 1550 may simultaneously decode two instructions per clock cycle. Furthermore, dual instruction decode stage 1550 may pass its results to register rename stage 1555. In addition, dual instruction decode stage 1550 may determine any resulting branches from its decoding and eventual execution of the microcode. Such results may be input into branches 1557.

Register rename stage 1555 may translate references to virtual registers or other resources into references to physical registers or resources. Register rename stage 1555 may include indications of such mapping in a register pool 1556. Register rename stage 1555 may alter the instructions as received and send the result to issue stage 1560.

Issue stage 1560 may issue or dispatch commands to execution entities 1565. Such issuance may be performed in an out-of-order fashion. In one embodiment, multiple instructions may be held at issue stage 1560 before being executed. Issue stage 1560 may include an instruction queue 1561 for holding such multiple commands. Instructions may be issued by issue stage 1560 to a particular processing entity 1565 based upon any acceptable criteria, such as availability or suitability of resources for execution of a given instruction. In one embodiment, issue stage 1560 may reorder the instructions within instruction queue 1561 such that the first instructions received might not be the first instructions executed. Based upon the ordering of instruction queue 1561, additional branching information may be provided to branches 1557. Issue stage 1560 may pass instructions to executing entities 1565 for execution.

Upon execution, writeback stage 1570 may write data into registers, queues, or other structures of instruction set architecture 1500 to communicate the completion of a given command. Depending upon the order of instructions arranged in issue stage 1560, the operation of writeback stage 1570 may enable additional instructions to be executed. Performance of instruction set architecture 1500 may be monitored or debugged by trace unit 1575.

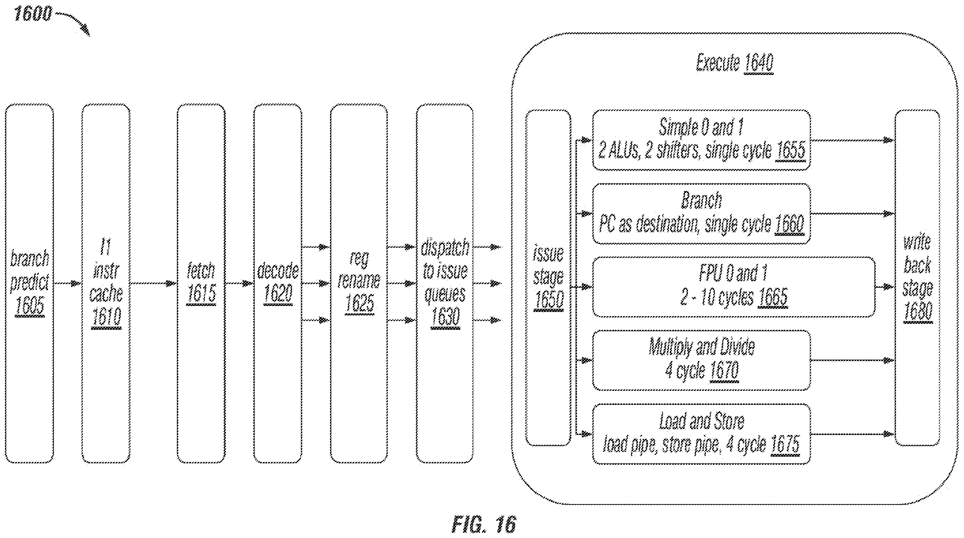

FIGURE 16 is a block diagram of an execution pipeline 1600 for an instruction set architecture of a processor, in accordance with embodiments of the present disclosure. Execution pipeline 1600 may illustrate operation of, for example, instruction architecture 1500 of FIGURE 15.

Execution pipeline 1600 may include any suitable combination of steps or operations. In 1605, predictions of the branch that is to be executed next may be made. In one embodiment, such predictions may be based upon previous executions of instructions and the results thereof. In 1610, instructions corresponding to the predicted branch of execution may be loaded into an instruction cache. In 1615, one or more such instructions in the instruction cache may be fetched for execution. In 1620, the instructions that have been fetched may be decoded into microcode or more specific machine language. In one embodiment, multiple instructions may be simultaneously decoded. In 1625, references to registers or other resources within the decoded instructions may be reassigned. For example, references to virtual registers may be replaced with references to corresponding physical registers. In 1630, the instructions may be dispatched to queues for execution. In 1640, the instructions may be executed. Such execution may be performed in any suitable manner. In 1650, the instructions may be issued to a suitable execution entity. The manner in which the instruction is executed may depend upon the specific entity executing the instruction. For example, at 1655, an ALU may perform arithmetic functions. The ALU may utilize a single clock cycle for its operation, as well as two shifters. In one embodiment, two ALUs may be employed, and thus two instructions may be executed at 1655. At 1660, a determination of a resulting branch may be made. A program counter may be used to designate the destination to which the branch will be made. 1660 may be executed within a single clock cycle. At 1665, floating point arithmetic may be performed by one or more FPUs. The floating point operation may require multiple clock cycles to execute, such as two to ten cycles. At 1670, multiplication and division operations may be performed. Such operations may be performed in four clock cycles. At 1675, loading and storing operations to registers or other portions of pipeline 1600 may be performed. The operations may include loading and storing addresses. Such operations may be performed in four clock cycles. At 1680, write-back operations may be performed as required by the resulting operations of 1655-1675.

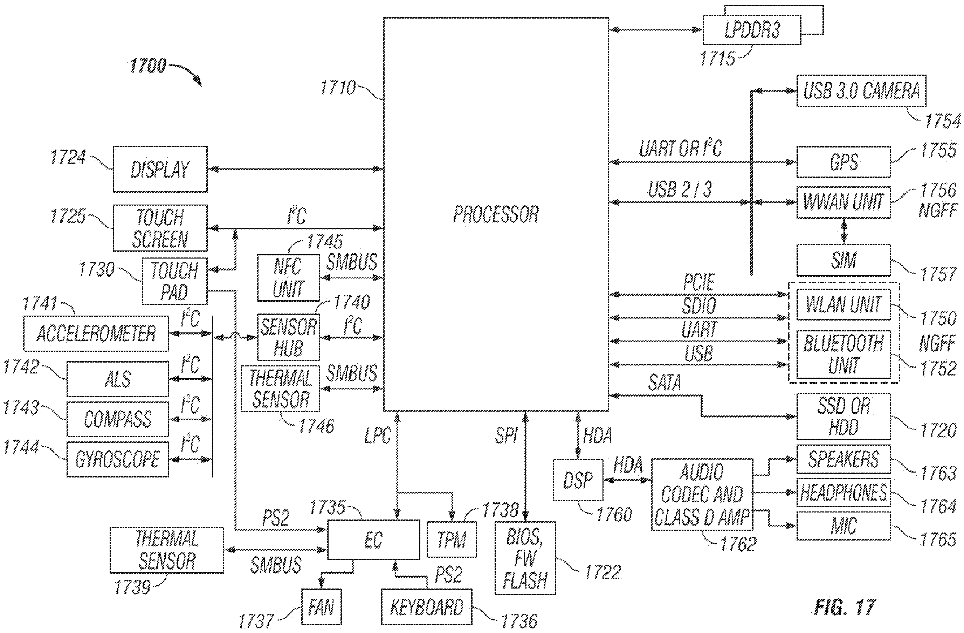

FIGURE 17 is a block diagram of an electronic device 1700 for utilizing a processor 1710, in accordance with embodiments of the present disclosure. Electronic device 1700 may include, for example, a notebook, an ultrabook, a computer, a tower server, a rack server, a blade server, a laptop, a desktop, a tablet, a mobile device, a phone, an embedded computer, or any other suitable electronic device.

Electronic device 1700 may include processor 1710 communicatively coupled to any suitable number or kind of components, peripherals, modules, or devices. Such coupling may be accomplished by any suitable kind of bus or interface, such as I²C bus, system management bus (SMBus), low pin count (LPC) bus, SPI, high definition audio (HDA) bus, Serial Advance Technology Attachment (SATA) bus, USB bus (versions 1, 2, 3), or Universal Asynchronous Receiver/Transmitter (UART) bus.

Such components may include, for example, a display 1724, a touch screen 1725, a touch pad 1730, a near field communications (NFC) unit 1745, a sensor hub 1740, a thermal sensor 1746, an express chipset (EC) 1735, a trusted platform module (TPM) 1738, BIOS/firmware/flash memory 1722, a digital signal processor 1760, a drive 1720 such as a solid state disk (SSD) or a hard disk drive (HDD), a wireless local area network (WLAN) unit 1750, a Bluetooth unit 1752, a wireless wide area network (WWAN) unit 1756, a global positioning system (GPS) 1775, a camera 1754 such as a USB 3.0 camera, or a low power double data rate (LPDDR) memory unit 1715 implemented in, for example, the LPDDR3 standard. These components may each be implemented in any suitable manner.

Furthermore, in various embodiments other components may be communicatively coupled to processor 1710 through the components discussed above. For example, an accelerometer 1741, ambient light sensor (ALS) 1742, compass 1743, and gyroscope 1744 may be communicatively coupled to sensor hub 1740. A thermal sensor 1739, fan 1737, keyboard 1736, and touch pad 1730 may be communicatively coupled to EC 1735. Speakers 1763, headphones 1764, and a microphone 1765 may be communicatively coupled to an audio unit 1762, which may in turn be communicatively coupled to DSP 1760. Audio unit 1762 may include, for example, an audio codec and a class D amplifier. A SIM card 1757 may be communicatively coupled to WWAN unit 1756. Components such as WLAN unit 1750 and Bluetooth unit 1752, as well as WWAN unit 1756 may be implemented in a next generation form factor (NGFF).

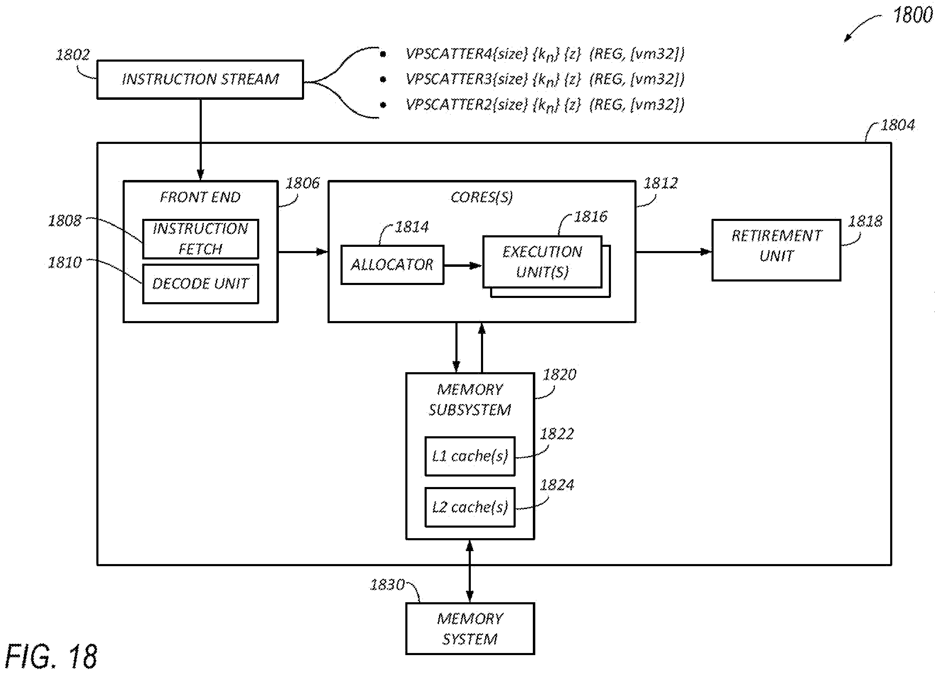

Embodiments of the present disclosure involve instructions and processing logic for executing one or more vector operations that target vector registers, at least some of which operate on structures stored in the vector registers that contain multiple elements. FIGURE 18 is an illustration of an example system 1800 for an instruction and logic for lane-based strided scatter operations, according to embodiments of the present disclosure.

Data structures used in some applications may include tuples of elements that can be accessed individually. In some cases, these types of data structures may be organized as arrays. In embodiments of the present disclosure, multiple ones of these data structures may be stored in a single vector register. The individual data elements within such data structures may be re-organized prior to being operated on. For example, each data structure may include multiple data elements of different types. These data elements may be re-organized into multiple separate vectors of like elements in order to operate on like elements in the same manner. In embodiments of the present disclosure, each of the separate vectors may be stored in a different "lane" within a vector register. In this context, the term "lane" may refer to a fixed-width portion of a vector register that holds multiple data elements. For example, a 512-bit vector register may include four 128-bit lanes. After operating on at least some of the data elements, a lane-based strided scatter instruction may be called to permute the data elements in the separate vectors back into their original data structures of tuples. A strided store operation may, in general, perform a sequence of memory write operations to addresses that are separated from each other by a fixed distance. A scatter operation may, in general, perform a sequence of memory write operations to addresses that are computed according to the contents of a base address register, an index register, and/or a scaling factor that are specified by (or encoded in) the instruction.

The lane-based strided scatter instructions described herein may store the data elements in each lane of a source vector register that are components of the same data structure together in memory. This may include writing out the data elements of each data structure into contiguous locations in the memory. Each of the resulting data structures may be stored at a location in memory that is computed based on the contents of a base address register and a particular index register element. For example, in one embodiment, the location at which each data structure is stored in the memory may be computed by adding the value of a respective element of an index register that is specified in the instruction to the value of a base address register that is specified in the instruction. In one embodiment, the base address register may be a vector register. In one embodiment, the index register may be a vector register. In embodiments of the present disclosure, these lane-based strided scatter instructions may be used in applications in which successive data structures are to be stored in random order in memory. For example, they may be stored as elements or rows of a sparse array.

System 1800 may include a processor, SoC, integrated circuit, or other mechanism. For example, system 1800 may include processor 1804. Although processor 1804 is shown and described as an example in FIGURE 18, any suitable mechanism may be used. Processor 1804 may include any suitable mechanisms for executing vector operations that target vector registers, including those that operate on structures stored in the vector registers that contain multiple elements. In one embodiment, such mechanisms may be implemented in hardware. Processor 1804 may be implemented fully or in part by the elements described in FIGURES 1-17.

Instructions to be executed on processor 1804 may be included in instruction stream 1802. Instruction stream 1802 may be generated by, for example, a compiler, just-in-time interpreter, or other suitable mechanism (which might or might not be included in system 1800), or may be designated by a drafter of code resulting in instruction stream 1802. For example, a compiler may take application code and generate executable code in the form of instruction stream 1802. Instructions may be received by processor 1804 from instruction stream 1802. Instruction stream 1802 may be loaded to processor 1804 in any suitable manner. For example, instructions to be executed by processor 1804 may be loaded from storage, from other machines, or from other memory, such as memory system 1830. The instructions may arrive and be available in resident memory, such as RAM, wherein instructions are fetched from storage to be executed by processor 1804. The instructions may be fetched from resident memory by, for example, a prefetcher or fetch unit (such as instruction fetch unit 1808). In one embodiment, instruction stream 1802 may include an instruction to perform one or more lane-based strided scatter operations. For example, instruction stream 1802 may include a "VPSCATTER4" instruction, a "VPSCATTER3" instruction, or a "VPSCATTER2" instruction. Note that instruction stream 1802 may include instructions other than those that perform vector operations.

Processor 1804 may include a front end 1806, which may include an instruction fetch pipeline stage (such as instruction fetch unit 1808) and a decode pipeline stage (such as decide unit 1810). Front end 1806 may receive and decode instructions from instruction stream 1802 using decode unit 1810. The decoded instructions may be dispatched, allocated, and scheduled for execution by an allocation stage of a pipeline (such as allocator 1814) and allocated to specific execution units 1816 for execution. One or more specific instructions to be executed by processor 1804 may be included in a library defined for execution by processor 1804. In another embodiment, specific instructions may be targeted by particular portions of processor 1804. For example, processor 1804 may recognize an attempt in instruction stream 1802 to execute a vector operation in software and may issue the instruction to a particular one of execution units 1816.

During execution, access to data or additional instructions (including data or instructions resident in memory system 1830) may be made through memory subsystem 1820. Moreover, results from execution may be stored in memory subsystem 1820 and may subsequently be flushed to memory system 1830. Memory subsystem 1820 may include, for example, memory, RAM, or a cache hierarchy, which may include one or more Level 1 (LI) caches 1822 or Level 2 (L2) caches 1824, some of which may be shared by multiple cores 1812 or processors 1804. After execution by execution units 1816, instructions may be retired by a writeback stage or retirement stage in retirement unit 1818. Various portions of such execution pipelining may be performed by one or more cores 1812.

An execution unit 1816 that executes vector instructions may be implemented in any suitable manner. In one embodiment, an execution unit 1816 may include or may be communicatively coupled to memory elements to store information necessary to perform one or more vector operations. In one embodiment, an execution unit 1816 may include circuitry to perform a lane-based strided scatter operation. For example, an execution unit 1816 may include circuitry to implement a "VPSCATTER4" instruction, a "VPSCATTER3" instruction, or a "VPSCATTER2" instruction. Example implementations of these instructions are described in more detail below.

In embodiments of the present disclosure, the instruction set architecture of processor 1804 may implement one or more extended vector instructions that are defined as Intel® Advanced Vector Extensions 512 (Intel® AVX-512) instructions. Processor 1804 may recognize, either implicitly or through decoding and execution of specific instructions, that one of these extended vector operations is to be performed. In such cases, the extended vector operation may be directed to a particular one of the execution units 1816 for execution of the instruction. In one embodiment, the instruction set architecture may include support for 512-bit SIMD operations. For example, the instruction set architecture implemented by an execution unit 1816 may include 32 vector registers, each of which is 512 bits wide, and support for vectors that are up to 512 bits wide. The instruction set architecture implemented by an execution unit 1816 may include eight dedicated mask registers for conditional execution and efficient merging of destination operands. At least some extended vector instructions may include support for broadcasting. At least some extended vector instructions may include support for embedded masking to enable predication.

At least some extended vector instructions may apply the same operation to each element of a vector stored in a vector register at the same time. Other extended vector instructions may apply the same operation to corresponding elements in multiple source vector registers. For example, the same operation may be applied to each of the individual data elements of a packed data item stored in a vector register by an extended vector instruction. In another example, an extended vector instruction may specify a single vector operation to be performed on the respective data elements of two source vector operands to generate a destination vector operand.

In embodiments of the present disclosure, at least some extended vector instructions may be executed by a SIMD coprocessor within a processor core. For example, one or more of execution units 1816 within a core 1812 may implement the functionality of a SIMD coprocessor. The SIMD coprocessor may be implemented fully or in part by the elements described in FIGURES 1-17. In one embodiment, extended vector instructions that are received by processor 1804 within instruction stream 1802 may be directed to an execution unit 1816 that implements the functionality of a SIMD coprocessor.

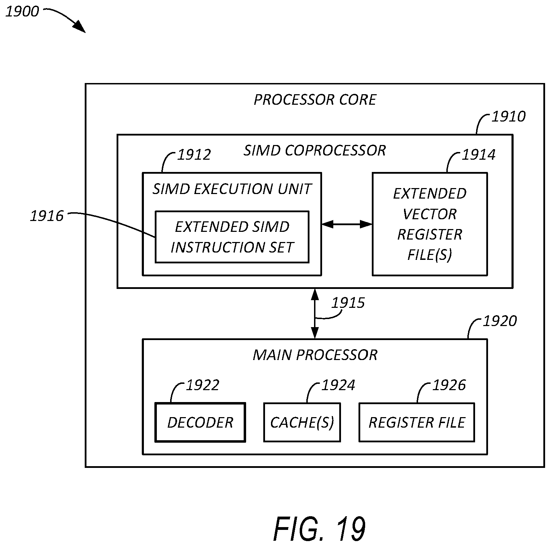

FIGURE 19 illustrates an example processor core 1900 of a data processing system that performs SIMD operations, in accordance with embodiments of the present disclosure. Processor 1900 may be implemented fully or in part by the elements described in FIGURES 1-18. In one embodiment, processor core 1900 may include a main processor 1920 and a SIMD coprocessor 1910. SIMD coprocessor 1910 may be implemented fully or in part by the elements described in FIGURES 1-17. In one embodiment, SIMD coprocessor 1910 may implement at least a portion of one of the execution units 1816 illustrated in FIGURE 18. In one embodiment, SIMD coprocessor 1910 may include a SIMD execution unit 1912 and an extended vector register file 1914. SIMD coprocessor 1910 may perform operations of extended SIMD instruction set 1916. Extended SIMD instruction set 1916 may include one or more extended vector instructions. These extended vector instructions may control data processing operations that include interactions with data resident in extended vector register file 1914.

In one embodiment, main processor 1920 may include a decoder 1922 to recognize instructions of extended SIMD instruction set 1916 for execution by SIMD coprocessor 1910. In other embodiments, SIMD coprocessor 1910 may include at least part of decoder (not shown) to decode instructions of extended SIMD instruction set 1916. Processor core 1900 may also include additional circuitry (not shown) which may be unnecessary to the understanding of embodiments of the present disclosure.

In embodiments of the present disclosure, main processor 1920 may execute a stream of data processing instructions that control data processing operations of a general type, including interactions with cache(s) 1924 and/or register file 1926. Embedded within the stream of data processing instructions may be SIMD coprocessor instructions of extended SIMD instruction set 1916. Decoder 1922 of main processor 1920 may recognize these SIMD coprocessor instructions as being of a type that should be executed by an attached SIMD coprocessor 1910. Accordingly, main processor 1920 may issue these SIMD coprocessor instructions (or control signals representing SIMD coprocessor instructions) on the coprocessor bus 1915. From coprocessor bus 1915, these instructions may be received by any attached SIMD coprocessor. In the example embodiment illustrated in FIGURE 19, SIMD coprocessor 1910 may accept and execute any received SIMD coprocessor instructions intended for execution on SIMD coprocessor 1910.

In one embodiment, main processor 1920 and SIMD coprocessor 1920 may be integrated into a single processor core 1900 that includes an execution unit, a set of register files, and a decoder to recognize instructions of extended SIMD instruction set 1916.

The example implementations depicted in FIGURES 18 and 19 are merely illustrative and are not meant to be limiting on the implementation of the mechanisms described herein for performing extended vector operations.

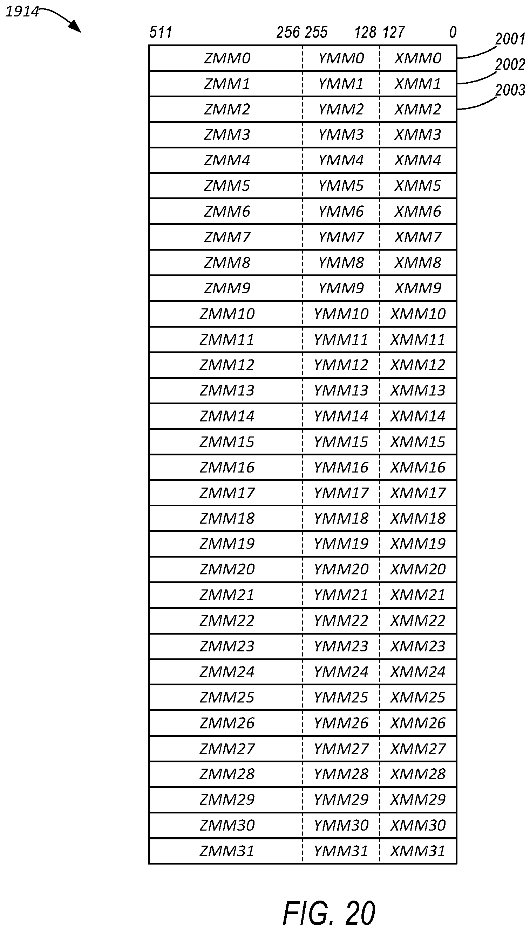

FIGURE 20 is a block diagram illustrating an example extended vector register file 1914, in accordance with embodiments of the present disclosure. Extended vector register file 1914 may include 32 SIMD registers (ZMM0 - ZMM31), each of which is 512-bit wide. The lower 256 bits of each of the ZMM registers are aliased to a respective 256-bit YMM register. The lower 128 bits of each of the YMM registers are aliased to a respective 128-bit XMM register. For example, bits 255 to 0 of register ZMM0 (shown as 2001) are aliased to register YMM0, and bits 127 to 0 of register ZMM0 are aliased to register XMM0. Similarly, bits 255 to 0 of register ZMM1 (shown as 2002) are aliased to register YMM1, bits 127 to 0 of register ZMM1 are aliased to register XMM1, bits 255 to 0 of register ZMM2 (shown as 2003) are aliased to register YMM2, bits 127 to 0 of the register ZMM2 are aliased to register XMM2, and so on.

In one embodiment, extended vector instructions in extended SIMD instruction set 1916 may operate on any of the registers in extended vector register file 1914, including registers ZMM0 - ZMM31, registers YMM0 - YMM15, and registers XMM0 - XMM7. In another embodiment, legacy SIMD instructions implemented prior to the development of the Intel® AVX-512 instruction set architecture may operate on a subset of the YMM or XMM registers in extended vector register file 1914. For example, access by some legacy SIMD instructions may be limited to registers YMM0 - YMM15 or to registers XMM0 - XMM7, in some embodiments.

In embodiments of the present disclosure, the instruction set architecture may support extended vector instructions that access up to four instruction operands. For example, in at least some embodiments, the extended vector instructions may access any of 32 extended vector registers ZMM0 - ZMM31 shown in FIGURE 20 as source or destination operands. In some embodiments, the extended vector instructions may access any one of eight dedicated mask registers. In some embodiments, the extended vector instructions may access any of sixteen general-purpose registers as source or destination operands.

In embodiments of the present disclosure, encodings of the extended vector instructions may include an opcode specifying a particular vector operation to be performed. Encodings of the extended vector instructions may include an encoding identifying any of eight dedicated mask registers, k0 - k7. Each bit of the identified mask register may govern the behavior of a vector operation as it is applied to a respective source vector element or destination vector element. For example, in one embodiment, seven of these mask registers (k1 - k7) may be used to conditionally govern the per-data-element computational operation of an extended vector instruction. In this example, the operation is not performed for a given vector element if the corresponding mask bit is not set. In another embodiment, mask registers k1 - k7 may be used to conditionally govern the per-element updates to the destination operand of an extended vector instruction. In this example, a given destination element is not updated with the result of the operation if the corresponding mask bit is not set.

In one embodiment, encodings of the extended vector instructions may include an encoding specifying the type of masking to be applied to the destination (result) vector of an extended vector instruction. For example, this encoding may specify whether merging-masking or zero-masking is applied to the execution of a vector operation. If this encoding specifies merging-masking, the value of any destination vector element whose corresponding bit in the mask register is not set may be preserved in the destination vector. If this encoding specifies zero-masking, the value of any destination vector element whose corresponding bit in the mask register is not set may be replaced with a value of zero in the destination vector. In one example embodiment, mask register k0 is not used as a predicate operand for a vector operation. In this example, the encoding value that would otherwise select mask k0 may instead select an implicit mask value of all ones, thereby effectively disabling masking. In this example, mask register k0 may be used for any instruction that takes one or more mask registers as a source or destination operand.

One example of the use and syntax of an extended vector instruction is shown below:
VADDPS zmm1, zmm2, zmm3

In one embodiment, the instruction shown above would apply a vector addition operation to all of the elements of the source vector registers zmm2 and zmm3. In one embodiment, the instruction shown above would store the result vector in destination vector register zmm1. Alternatively, an instruction to conditionally apply a vector operation is shown below:
VADDPS zmm1 {k1}{z}, zmm2, zmm3

In this example, the instruction would apply a vector addition operation to the elements of the source vector registers zmm2 and zmm3 for which the corresponding bit in mask register k1 is set. In this example, if the {z} modifier is set, the values of the elements of the result vector stored in destination vector register zmm1 corresponding to bits in mask register k1 that are not set may be replaced with a value of zero. Otherwise, if the {z} modifier is not set, or if no {z} modifier is specified, the values of the elements of the result vector stored in destination vector register zmm1 corresponding to bits in mask register k1 that are not set may be preserved.

In one embodiment, encodings of some extended vector instructions may include an encoding to specify the use of embedded broadcast. If an encoding specifying the use of embedded broadcast is included for an instruction that loads data from memory and performs some computational or data movement operation, a single source element from memory may be broadcast across all elements of the effective source operand. For example, embedded broadcast may be specified for a vector instruction when the same scalar operand is to be used in a computation that is applied to all of the elements of a source vector. In one embodiment, encodings of the extended vector instructions may include an encoding specifying the size of the data elements that are packed into a source vector register or that are to be packed into a destination vector register. For example, the encoding may specify that each data element is a byte, word, doubleword, or quadword, etc. In another embodiment, encodings of the extended vector instructions may include an encoding specifying the data type of the data elements that are packed into a source vector register or that are to be packed into a destination vector register. For example, the encoding may specify that the data represents single or double precision integers, or any of multiple supported floating point data types.

In one embodiment, encodings of the extended vector instructions may include an encoding specifying a memory address or memory addressing mode with which to access a source or destination operand. In another embodiment, encodings of the extended vector instructions may include an encoding specifying a scalar integer or a scalar floating point number that is an operand of the instruction. While several specific extended vector instructions and their encodings are described herein, these are merely examples of the extended vector instructions that may be implemented in embodiments of the present disclosure. In other embodiments, more fewer, or different extended vector instructions may be implemented in the instruction set architecture and their encodings may include more, less, or different information to control their execution.

Data structures that are organized in tuples of three or four elements that can be accessed individually are common in many applications. For examples, RGB (Red-Green-Blue) is a common format in many encoding schemes used in media applications. A data structure storing this type of information may consist of three data elements (an R component, a G component, and a B component), which are stored contiguously and are the same size (for example, they may all be 32-bit integers). A format that is common for encoding data in High Performance Computing applications includes two or more coordinate values that collectively represent a position within a multidimensional space. For example, a data structure may store X and Y coordinates representing a position within a 2D space or may store X, Y, and Z coordinates representing a position within a 3D space. In yet another example, many molecular dynamics applications operate on neighbor lists consisting of an array of XYZW data structures. Other common data structures having a higher number of elements may appear in these and other types of applications.

In some cases, these types of data structures may be organized as arrays. In embodiments of the present disclosure, multiple ones of these data structures may be stored in a single vector register, such as one of the XMM, YMM, or ZMM vector registers described above. In one embodiment, the individual data elements within such data structures may be re-organized into vectors of like elements that can then be used in SIMD loops, as these elements might not be stored next to each other in the data structures themselves. An application may include instructions to operate on all of the data elements of one type in the same way and instructions to operate on all of the data elements of a different type in a different way. In one example, for an array of data structures that each include an R component, a G components, and a B component in an RGB color space, a different computational operation may be applied to the R components in each of the rows of the array (each data structures) than a computational operation that is applied to the G components or the B components in each of the rows of the array.

In another example, an array of data structures may include multiple data structures that store 3D coordinate information, each of which includes an X component, a Y component, and a Z component. In order to operate on the X values, one or more instructions may be used to extract the X values, Y values, and Z values from the array of XYZ data structures into separate vectors. As a result, one of the vectors may include all of the X values, one may include all of the Y values, and one may include all of the Z values. In some cases, after operating on at least some of the data elements within these separate vectors, an application may include instructions that operate on the XYZ data structures as a whole. For example, after updating at least some of the X, Y, or Z values in the separate vectors, the application may include instructions that access one of the data structures to retrieve or operate on the XYZ coordinates stored in the data structure. In one embodiment, another extended vector instruction may be called in order to store the XYZ coordinates back in their original format. For example, a lane-based strided scatter instruction may permute the data from the separate vectors into a destination vector in which an X component, a Y component, and a Z component of each data structure are stored in contiguous locations at locations whose addresses are computed from the values of a base register specified for the instruction and respective elements of an index register specified for the instruction. In one embodiment, the lane-based strided scatter instruction may store the resulting data structures in memory as populated rows in a sparse array of XYZ data structures.

In embodiments of the present disclosure, encodings of the extended vector instructions may include a scale-index-base (SIB) type memory addressing operand that indirectly identifies multiple indexed destination locations in memory. In one embodiment, an SIB type memory operand may include an encoding identifying a base address register. The contents of the base address register may represent a base address in memory from which the addresses of the particular destination locations in memory are calculated. For example, the base address may be the address of the first location in a block of potential destination locations for an extended vector instruction. In one embodiment, an SIB type memory operand may include an encoding identifying an index register. Each element of the index register may specify an index or offset value usable to compute, from the base address, an address of a respective destination location within a block of potential destination locations. In one embodiment, an SIB type memory operand may include an encoding specifying a scaling factor to be applied to each index value when computing a respective destination address. For example, if a scaling factor value of four is encoded in the SIB type memory operand, each index value obtained from an element of the index register may be multiplied by four and then added to the base address to compute a destination address.

In one embodiment, an SIB type memory operand of the form vm32{x,y,z} may identify a vector array of memory operands specified using SIB type memory addressing. In this example, the array of memory addresses are specified using a common base register, a constant scaling factor, and a vector index register containing individual elements, each of which is a 32-bit index value. The vector index register may be an XMM register (vm32x), a YMM register (vm32y), or a ZMM register (vm32z). In another embodiment, an SIB type memory operand of the form vm64{x,y,z} may identify a vector array of memory operands specified using SIB type memory addressing. In this example, the array of memory addresses are specified using a common base register, a constant scaling factor, and a vector index register containing individual elements, each of which is a 64-bit index value. The vector index register may be an XMM register (vm64x), a YMM register (vm64y) or a ZMM register (vm64z).

In embodiments of the invention as claimed, the instructions for performing extended vector operations that are implemented by a processor core (such as core 1812 in system 1800) or by a SIMD coprocessor (such as SIMD coprocessor 1910) may include an instruction to perform a lane-based strided scatter operation. For example, these instructions may include one or more "VPSCATTER" instructions. In embodiments of the present disclosure, these VPSCATTER instructions may be used to store vectors containing the different data elements of a data structure in memory. In one embodiment, these instructions may be used to store the data elements of each of multiple data structures together in memory. The data elements of each data structure may be written to contiguous locations beginning at a location whose address is computed for the data structure using SIB type memory addressing. In one embodiment, these VPSCATTER instructions may be used to store each resulting data structure in memory as a populated row of a sparse array.

In one embodiment, different "lanes" within a vector register are used to hold data elements of different types. For example, one lane may hold X values, one lane may hold Y values, and so on. In this context, the term "lane" may refer to a portion of the vector register that holds multiple data elements that are to be treated in the same way, rather than to a portion of the vector register that holds a single data element. In one embodiment in which the vector registers are 512 bits wide, there may be four 128-bit lanes, each of which stores multiple data elements of a respective type for 3D or 4D data structures. For example, the lowest-order 128 bits within a 512-bit vector register may be referred as the first lane, the next 128 bits may be referred to as the second lane, and so on. In this example, each of the 128-bit lanes may store two 64-bit data elements, four 32-bit data elements, eight 16-bit data elements, or four 8-bit data elements. In another embodiment in which the vector registers are 512 bits wide, there may be two 256-bit lanes, each of which stores data elements of a respective type for 2D data structures. In this example, each of the 256-bit lanes may store data elements of up to 128 bits each. In one embodiment, each lane may hold multiple data elements of a single type. In another embodiment, the data elements held in a single lane may not be of the same type, but they may be operated on by an application in the same way.

In one embodiment, data representing four XYZW-type data structures in which the X, Y, Z and W components are 32-bits each may be stored in an extended vector register, such as a ZMM register. In this example, a VPSCATTER instruction may be used to scatter four consecutive XYZW-type data structures with elements coming from the respective lanes of a ZMM register to memory. The ZMM register may store a vector of X values in a first lane, a vector of Y values in a second lane, a vector of Z values in a third lane, and a vectors of W values in a fourth lane. In one embodiment, a "VPSCATTER4D" instruction may be used to store four consecutive XYZW-type data structures, each containing elements from the respective lanes of the ZMM register in memory. In this example, the VPSCATTER4D instruction may permute the data from the ZMM register, putting it back in XYZW order, and may store it in memory in XYZW order. For example, the destination vector that is generated by the VPSCATTER4D instruction and stored by the VPSCATTER4D instruction in memory may include the data elements from the four lanes of the ZMM register in the following order: X1Y1Z1W1, X2Y2Z2W2, X3Y3Z3W3, X4Y4Z4W4. In this example, each of the XYZW-type data structures may be stored at a respective location in memory that is computed using SIB type memory addressing.

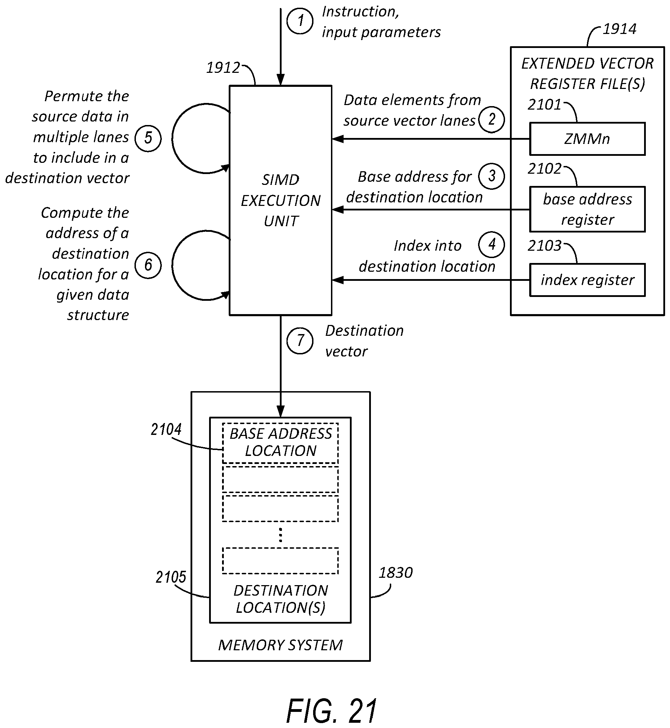

FIGURE 21 is an illustration of an operation to perform a lane-based strided scatter operation, according to the invention as claimed. In one embodiment, system 1800 may execute an instruction to perform a lane-based strided scatter operation. For example, a VPSCATTER instruction may be executed. This instruction may include any suitable number and kind of operands, bits, flags, parameters, or other elements. In one embodiment, a call of a VPSCATTER instruction may reference a source vector register. The source vector register may be an extended vector register that contains packed data representing multiple elements of two or more data structures. A call of a VPSCATTER instruction may also reference, in a scale-index-base (SIB) type memory addressing operand, an index register and/or a base address register. The base address register may identify a base address in memory from which the addresses of the particular destination locations in memory at which portions of the data in the extended vector register should be stored are calculated. The index register may, for each data structure, specify an index or offset from the base address usable to compute the address of the first of the contiguous destination locations in the memory at which the data elements for the data structure are to be written. For example, execution of the VPSCATTER instruction may cause the data in the extended vector register representing a first data structure to be written to contiguous locations in the memory beginning at a location whose address is computed from the base address and the value of the first element of the index register, the data in the extended vector register representing a second data structure to be written to contiguous locations in the memory beginning at a location whose address is computed from the base address and the value of the second element of the index register, and so on.

In one embodiment, a call of a VPSCATTER instruction may specify a scaling factor to be applied to each index value when computing a respective destination location for a data structure in the memory. In one embodiment, the scaling factor may be encoded in the SIB type memory addressing operand. In one embodiment, the scaling factor may be one, two, four or eight. The specified scaling factor may be dependent on the size of the individual data elements or the size of the data structures to be written to the memory. In one embodiment, a call of a VPSCATTER instruction may specify the size of the data elements in the data structures represented by the data stored in the extended vector register. In one embodiment, all of the data elements may be the same size and type. In another embodiment, a call of a VPSCATTER instruction may specify the number of data elements that are included in each of the data structures represented by the data stored in the extended vector register. In one embodiment, a call of a VPSCATTER instruction may specify a mask register to be applied to the result of the execution when writing it to the destination location. In yet another embodiment, a call of a VPSCATTER instruction may specify the type of masking to be applied to the result, such as merging-masking or zero-masking. In still other embodiments, more, fewer, or different parameters may be referenced in a call of a VPSCATTER instruction.

One or more of the parameters of the VPSCATTER instructions described herein may be inherent for the instruction. For example, in different embodiments, any combination of these parameters may be encoded in a bit or field of the opcode format for the instruction. In other embodiments, one or more of the parameters of the VPSCATTER type instructions described herein may be optional for the instruction. For example, in different embodiments, any combination of these parameters may be specified when the instruction is called.

In the embodiment illustrated in FIGURE 21, at (1) the VPSCATTER instruction and its parameters (which may include any or all of the register and the SIB type memory addressing operand described above, a scaling factor, an indication of the size of the data elements in each data structure, an indication of the number of data elements in each data structure, a parameter identifying a particular mask register, or a parameter specifying a masking type) may be received by SIMD execution unit 1912. For example, the VPSCATTER instruction may be issued to SIMD execution unit 1912 within a SIMD coprocessor 1910 by an allocator 1814 within a core 1812, in one embodiment. In another embodiment, the VPSCATTER instruction may be issued to SIMD execution unit 1912 within a SIMD coprocessor 1910 by a decoder 1922 of a main processor 1920. The VPSCATTER instruction may be executed logically by SIMD execution unit 1912.

In this example, packed data representing multiple data structures are stored in a source vector register such as extended vector register ZMMn (2101) within an extended vector register file 1914. The data may be stored in extended vector register ZMMn (2101) such that elements of the same type from different data structures are stored together in the extended vector register. For example, a first lane that includes the lowest-order bits of the extended vector register ZMMn (2101) may store multiple data elements of a first type, a second lane that includes the next-lowest-order bits of the extended vector register ZMMn (2101) may store multiple data elements of a second type, and so on.

Execution of the VPSCATTER instruction by SIMD execution unit 1912 may include, at (2) obtaining the data elements representing one or more data structures from extended vector register ZMMn (2101) in an extended vector register file 1914. For example, a parameter of the VPSCATTER instruction may identify extended vector register ZMMn (2101) as the source of the data elements to be stored in memory by the lane-based strided scatter operation, and SIMD execution unit 1912 may read at least a portion of the packed data that was stored in multiple lanes in the identified source vector register. Execution of the VPSCATTER instruction by SIMD execution unit 1912 may include, at (3) obtaining from a base address register 2102 a base address for computing one or more destination locations in memory system 1830 at which to begin writing out the data elements representing each data structure. For example, an SIB type memory addressing operand of the VPSCATTER instruction may identify base address register 2102 as the source of the base address for computing the destination locations in memory system 1830 for the data structures represented in ZMMn (2101). In this example, base address register 2102 is an extended vector register within extended vector register file 1914. In other embodiments, an SIB type memory addressing operand of the VPSCATTER instruction may identify one of the general-purpose registers of the processor as the source of the base address for computing the destination locations in memory system 1830 for the data structures represented in ZMMn (2101). In this example, the value obtained from base address register 2102 specifies that the base address corresponds to base address location 2104 within a block of potential destination locations 2105 in memory system 1830.

Execution of the VPSCATTER instruction by SIMD execution unit 1912 may include, at (4) obtaining from an index address register 2103 a respective index value for computing each of the destination locations in memory system 1830 at which to begin writing out the data elements representing a corresponding one of the data structures. For example, an SIB type memory addressing operand of the VPSCATTER instruction may identify index register 2103 as the source of the index values for computing the destination locations in memory system 1830 for the data structures represented in ZMMn (2101). In this example, index register 2103 is an extended vector register within extended vector register file 1914. In other embodiments, an SIB type memory addressing operand of the VPSCATTER instruction may identify one of the general-purpose registers of the processor as the source of the index values for computing the destination locations in memory system 1830 for the data structures represented in ZMMn (2101).

Execution of the VPSCATTER instruction by SIMD execution unit 1912 may include, at (5) permuting the packed data that was obtained from multiple lanes in the identified source vector register to include in a destination vector. In one embodiment, permuting the data may include, for a given data structure, extracting a respective element from each lane within the source vector register and assembling them next to each other for inclusion in the destination vector. For example, a first data structure may be assembled for inclusion in the destination vector by extracting the first element from each lane in the extended vector register ZMMn (2101). Execution of the VPSCATTER instruction by SIMD execution unit 1912 may include, at (6) computing the address of a destination location in memory system 1830 at which to begin writing out the data elements representing a given data structure. For example, the address of the destination location for the first data structure assembled by the VPSCATTER instruction may be computed by adding the value contained in the first element of index register 2103 to the value obtained from base address register 2102. In some embodiments, computing the address of the destination location for the first data structure may include multiplying the index value obtained from the first element in the index register by a scaling factor that is encoded in an SIB type memory addressing operation of the VPSCATTER instruction prior to adding it to the base address.

In one embodiment, execution of the VPSCATTER instruction may include repeating any or all of steps of the operation illustrated in FIGURE 21 for each of the data structures whose data is stored as packed data in the extended vector register ZMMn (2101). For example, steps (2), (4), (5), and (6) may be performed once for each of the data structures that are to be assembled and included in the destination vector, and that are to be written to memory system 1830. In one embodiment, for each additional iteration, at (2), (4), and (5) SIMD execution unit 1912 may extract a respective element from each lane within the source vector register and assemble them next to each other for inclusion in the destination vector, respectively. For example, a second data structure may be assembled for inclusion in the destination vector by extracting the second element from each lane in the extended vector register ZMMn (2101), a third data structure may be assembled for inclusion in the destination vector by extracting the third element from each lane in the extended vector register ZMMn (2101) and so on. In one embodiment, for each additional iteration, at (6) SIMD execution unit 1912 may compute a destination location in memory system 1830 at which to begin writing out the data elements representing the data structure. For example, the address of the destination location for the second data structure assembled by the VPSCATTER instruction may be computed by adding the value contained in the second element of index register 2103 to the value obtained from base address register 2102. In some embodiments, computing the address of the destination location for the second data structure may include multiplying the index value obtained from the second element of the index register by a scaling factor that is encoded in an SIB type memory addressing operation of the VPSCATTER instruction prior to adding it to the base address. After assembling at least a portion of the destination vector, execution of the VPSCATTER instruction may include, at (7), writing out the data elements in at least a portion of the destination vector to locations within destination locations 2105 in memory system 1830, after which the VPSCATTER instruction may be retired.

In one embodiment, writing the destination vector to memory system 1830 may include, for each data structure, writing out the data elements that make up the data structure to contiguous destination locations in memory system 1830 beginning with a location within destination locations 2105 whose address was computed as the starting address for that data structure. In one embodiment, writing the destination vector to the destination 2104 may include applying a merging-masking operation to the destination vector, if such a masking operation is specified in the call of the VPSCATTER instruction. In another embodiment, writing the destination vector to the destination 2104 may include applying a zero-masking operation to the destination vector, if such a masking operation is specified in the call of the VPSCATTER instruction.

In one embodiment, as data elements for each data structure are extracted from the source vector register, and placed next to each other to assemble the data structure, they may be written out to memory system 1830. For example, once the first data structure has been assembled from the first data elements of each lane of the source vector register, the data elements that make up the first data structure may be written out to contiguous locations in memory system 1830 beginning with the location within destination locations 2105 whose address was computed for the first data structure by the SIMD execution unit during the first iteration of (6). Subsequently, once the second data structure has been assembled from the second data elements of each lane of the source vector register, the data elements that make up the second data structure may be written out to contiguous locations in memory system 1830 beginning with the location within destination locations 2105 whose address was computed for the first data structure by the SIMD execution unit during the second iteration of (6), and so on.

In one embodiment, the extended SIMD instruction set architecture may implement multiple versions or forms of the VPSCATTER operation including, for example, those shown below:
VPSCATTER4{size} {kn} {z} (REG, [vm32/vm64])
VPSCATTER3{size} {kn} {z} (REG, [vm32/vm64])
VPSCATTER2{size} {kn} {z} (REG, [vm32/vm64])

In these example forms of the VPSCATTER instruction, the number following the "VPSCATTER" identifier (e.g., 4, 3, or 2) may indicate the number of lanes in the source vector register. This may correspond to the number of data elements in each data structure represented by the packed data stored in the source vector register. In these examples, the "size" modifier may specify the size and/or type of each data element in the source vector register. This may correspond to the size and/or type of the data elements in each data structure represented by the packed data stored in the source vector register. In one embodiment, the specified size/type may be one of {B/W/D/Q/PS/PD}. In these examples, the optional instruction parameter "k_{n"} may identify a particular one of multiple mask registers. This parameter may be specified when masking is to be applied to the destination (result) vector for the VPSCATTER instruction. In embodiments in which masking is to be applied (e.g., if a mask register is specified for the instruction), the optional instruction parameter "z" may indicate whether or not zeroing-masking should be applied. In one embodiment, zero-masking may be applied if this optional parameter is set, and merging-masking may be applied if this optional parameter is not set or if this optional parameter is omitted.

In these examples, the "REG" parameter may identify the source vector register. In at least some embodiments, the source vector register may be an extended vector register. In these examples, the [vm32/vm64] memory addressing operand may be an SIB type memory addressing operand that encodes one or more of a scaling factor, an index register, and a base address register for the VPSCATTER instruction. The information encoded in the [vm32/vm64] memory addressing operand may be used to obtain the values needed to compute the addresses of the destination locations for each of the data structures computed by the VPSCATTER instruction as 32-bit effective addresses or 64-bit effective addresses, respectively.

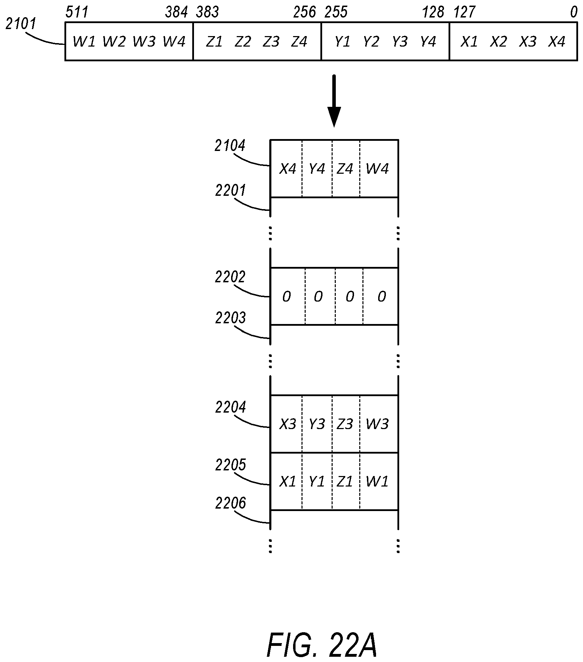

FIGURE 22A illustrates the operation of a VPSCATTER instruction of the form VPSCATTER4D {kₙ} {z} (ZMMn, [vm32]), in accordance with the invention as claimed. In this example, the packed data stored in an extended vector register ZMMn (2101) represents the data elements for an array in which each populated row includes four 32-bit doublewords. In this example, each populated row of the array is to include an X component, a Y component, a Z component, and a W component. The individual components for each row in the data structure have been loaded into respective 128-bit lanes of the source vector register (extended vector register ZMMn 2101) prior to execution of the VPSCATTER instruction. In this example, the lowest-order 128 bits of the source vector register, which may be referred to as the first lane of the source vector register, contain four 32-bit doublewords representing the X components of each of the rows of the data structure: X1, X2, X3, and X4. In this example, the next-lowest-order 128 bits of the source vector register, which may be referred to as the second lane of the source vector register, contain four 32-bit doublewords representing the Y components of each of the rows of the data structure: Y1, Y2, Y3, and Y4. Similarly, the next-lowest-order 128 bits of the source vector register, which may be referred to as the third lane of the source vector register, contain four 32-bit doublewords representing the Z components of each of the rows of the data structure: Z1, Z2, Z3, and Z4; and the highest-order 128 bits of the source vector register, which may be referred to as the fourth lane of the source vector register, contain four 32-bit doublewords representing the W components of each of the rows of the data structure: W1, W2, W3, W4. In this example, the base address register identified by an encoding in the SIB type memory addressing operand [vm32] contains a value representing base address location 2104.

In one embodiment, a VPSCATTER instruction may be used to perform a lane-based strided scatter operation that stores the four data elements for each populated row of the data structure (e.g., the respective X component, Y component, Z component, and W component for each populated row) in destination locations in memory, beginning at a destination location whose address is computed from the specified instruction parameters. For example, execution of the instruction "VPSCATTER4D kₙ z (ZMMn, [vm32])" may cause the first data element in each lane of the source vector register (the first X component, the first Y component, the first Z component, and the first W component) to be written to contiguous locations in memory system 1830, beginning at the destination location 2205. In this example, the address of destination location 2205 is computed as the address of base address location 2104 plus an offset computed as the index value contained in the first element of the index register encoded in the [vm32] SIB type memory addressing operand multiplied by a scaling factor encoded in the [vm32] SIB type memory addressing operand. These four data elements may collectively represent one populated row of the destination data structure in memory system 1830. Similarly, execution of this instruction may cause the third data element in each lane of the source vector register (the third X component, the third Y component, the third Z component, and the third W component) to be written to contiguous locations in memory system 1830 beginning at destination location 2204, and may cause the fourth data element in each lane of the source vector register (the fourth X component, the fourth Y component, the fourth Z component, and the fourth W component) to be written to contiguous locations in memory system 1830 beginning at destination location 2104 (at the base address with an offset of 0).

In this example, a masking operation specified in the call of the instruction is performed on the destination (result) vector. More specifically, zero-masking is specified for this instruction. The specified mask register (kₙ) includes a bit that is not set and that corresponds to the second lane of the source vector register and thus to the second computed row of the destination data structure. In this case, the second data element in each lane of the source vector register (the second X component, the second Y component, the second Z component, and the second W component) will not be written to memory system 1830. Instead, execution of this instruction may cause data elements containing all zeros to be written to the contiguous locations in memory system 1830 to which these data elements would otherwise have been written. In this example, the data elements containing all zeros are written to contiguous locations beginning at destination location 2202. In another embodiment, if merging-masking were specified for this instruction rather than zero-masking, the contents of the contiguous locations in memory system 1830 corresponding to the third computed row of the destination data structure (four contiguous locations beginning at destination location 2202) prior to the execution of the instruction would be preserved following the execution of the instruction, rather than being overwritten by the second data elements in each lane of the source vector register or by data elements containing all zeros. In this example, a block of potential destination locations beginning with destination location 2201 and preceding destination location 2202 (following base address location 2104), a block of potential destination locations beginning with destination location 2203 and preceding destination location 2204, and a block of potential destination locations beginning with destination location 2206 (following destination location 2205) may be unused by the VPSCATTER instruction and may be unaffected by its execution.

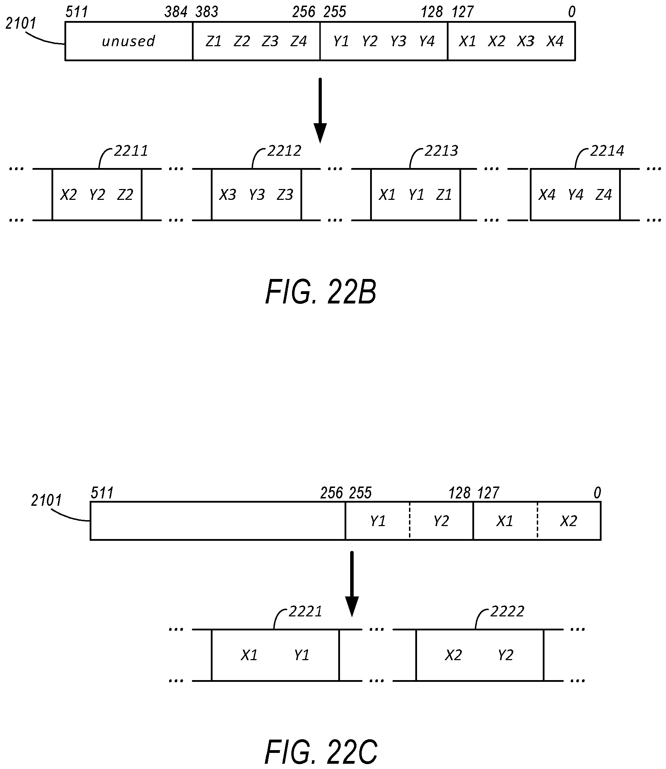

FIGURE 22B illustrates the operation of a VPSCATTER instruction of the form VPSCATTER3D, in accordance with the invention as claimed. In this example, the packed data stored in an extended vector register ZMMn (2101) represents the data elements for multiple destination data structures, each of which includes three 32-bit doublewords. In this example, each destination data structure is to include an X component, a Y component, and a Z component. The individual components for each data structure have been loaded into respective 128-bit lanes of the source vector register (extended vector register ZMMn 2101) prior to execution of the VPSCATTER instruction. In this example, the lowest-order 128 bits of the source vector register, which may be referred to as the first lane of the source vector register, contain four 32-bit doublewords representing the X components of each of four destination data structures: X1, X2, X3, and X4. In this example, the next-lowest-order 128 bits of the source vector register, which may be referred to as the second lane of the source vector register, contain four 32-bit doublewords representing the Y components of each of the four destination data structures: Y1, Y2, Y3, and Y4. Similarly, the next-lowest-order 128 bits of the source vector register, which may be referred to as the third lane of the source vector register, contain four 32-bit doublewords representing the Z components of each of the four destination data structures: Z1, Z2, Z3, and Z4. In this example, the highest-order 128 bits of the source vector register, which may be referred to as the fourth lane of the source vector register, do not contain any data elements for the four destination data structures. In one embodiment, the fourth lane may include all zeros or all ones. In other embodiments, the fourth lane may contain any arbitrary data, since it will not be used by (nor affected by the execution of) the VPSCATTER instruction.

In one embodiment, a VPSCATTER instruction may be used to perform a lane-based strided scatter operation that stores the three data elements for each of the four data structures (e.g., the respective X component, Y component, and Z component for each data structure) in contiguous locations in memory, beginning at a destination location whose address is computed from the specified instruction parameters. For example, execution of the instruction "VPSCATTER3D (ZMMn, [vm32])" may cause the first data element in each lane of the source vector register (the first X component, the first Y component, and the first Z component) to be written to contiguous locations in memory system 1830, beginning at the destination location 2213. In this example, the address of destination location 2213 is computed as the address of a base address location (not shown) plus an offset computed as the index value contained in the first element of the index register encoded in the [vm32] SIB type memory addressing operand multiplied by a scaling factor encoded in the [vm32] SIB type memory addressing operand. These three elements may collectively represent the first one of the destination data structures stored in memory system 1830.

Similarly, execution of this instruction may cause the second data element in each lane of the source vector register (the second X component, the second Y component, and the second Z component), corresponding to the second one of the destination data structures, to be written to contiguous locations in memory system 1830 beginning at destination location 2211; may cause the third data element in each lane of the source vector register (the third X component, the third Y component, and the third Z component), corresponding to the third one of the destination data structures, to be written to contiguous locations in memory system 1830 beginning at destination location 2212; and may cause the fourth data element in each lane of the source vector register (the fourth X component, the fourth Y component, and the fourth Z component), corresponding to the fourth one of the destination data structures, to be written to contiguous locations in memory system 1830 beginning at destination location 2214. Other potential destination locations 2105 within memory system 1830 (potential destination shown and not shown in FIGURE 22B) may be unused by the VPSCATTER instruction and may unaffected by its execution. In this example, masking was not specified for the VPSCATTER instruction. Therefore, all of the data elements making up the four destination data structures are written to memory 1830 following the permutation of the packed data contained in the source vector register (extended vector register ZMMn 2101) by the VPSCATTER instruction.

As illustrated by the example in FIGURE 22B, in one embodiment, the destination data structures resulting from the execution of a VPSCATTER instruction may take up less space in memory 1830 than the space that would have been taken up if the entire contents of the source vector register had been written out to memory. For example, the four data structures resulting from the execution of the VPSCATTER3D instruction described above (each of which includes an X component, a Y component, and a Z component) may occupy twelve 32-bit doublewords in memory 1830, while the source vector register (extended vector register ZMMn 2101) has a capacity of sixteen 32-bit doublewords.

FIGURE 22C illustrates the operation of a VPSCATTER instruction of the form VPSCATTER2D, in accordance with the invention as claimed. In this example, the data stored in an extended vector register ZMMn (2101) represents the data elements for two destination data structures, each of which includes two 64-bit floating point elements. In this example, each destination data structure is to include an X component and a Y component. The individual components for each data structure have been loaded into respective 128-bit lanes of the source vector register (extended vector register ZMMn 2101) prior to execution of the VPSCATTER instruction. In this example, the lowest-order 128 bits of the source vector register, which may be referred to as the first lane of the source vector register, contain two 64-bit floating point elements representing the X components of each of two destination data structures: X1 and X2. In this example, the next-lowest-order 128 bits of the source vector register, which may be referred to as the second lane of the source vector register, contain two 64-bit floating point elements representing the Y components of each of the two destination data structures: Y1 and Y2. In this example, the highest-order 256 bits of the source vector register are unused.

In one embodiment, a VPSCATTER instruction may be used to perform a lane-based strided scatter operation that stores the two data elements for each of the two data structures (e.g., the respective X component and Y component for each data structure) in contiguous locations in memory, beginning at a destination location whose address is computed from the specified instruction parameters. For example, execution of an instruction "VPSCATTER2D" may cause the first data element in each lane of the source vector register (the first X component and the first Y component) to be written to contiguous locations in memory system 1830, beginning at the destination location 2221. In this example, the address of destination location 2221 is computed as the address of a base address location (not shown) plus an offset computed as the index value contained in the first element of the index register encoded in the [vm32] SIB type memory addressing operand multiplied by a scaling factor encoded in the [vm32] SIB type memory addressing operand. These two data elements may collectively represent the first one of the destination data structures stored in memory system 1830. Similarly, execution of this instruction may cause the second data element in each lane of the source vector register (the second X component and the second Y component) to be written to contiguous locations in memory system 1830, beginning at the destination location 2222. These two data elements may collectively represent the second one of the destination data structures. In this example, masking was not specified for the VPSCATTER instruction parameters. Therefore, all of the data elements making up the two destination data structures are written to memory 1830 following the permutation of the packed data contained in the source vector register (extended vector register ZMMn 2101) by the VPSCATTER instruction.

The forms of the VPSCATTER instruction illustrated in FIGURES 22A - 22C are merely examples of the many forms that this instruction can take. In other embodiments, the VPSCATTER instruction may take any of a variety of other forms in which different combinations of instruction modifier values and instruction parameter values are included in the instruction or are specified when the VPSCATTER instruction is called.

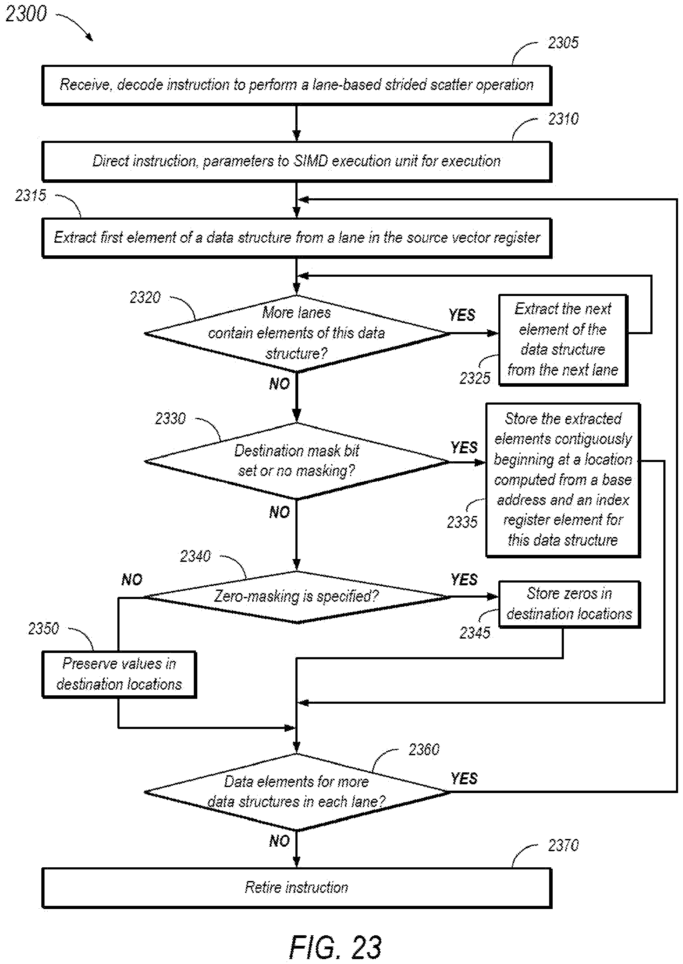

FIGURE 23 illustrates an example method 2300 for performing a lane-based strided scatter operation, according to the invention as claimed. Method 2300 may be implemented by any of the elements shown in FIGURES 1-22. Method 2300 may be initiated by any suitable criteria and may initiate operation at any suitable point. In one embodiment, method 2300 may initiate operation at 2305. Method 2300 may include greater or fewer steps than those illustrated. Moreover, method 2300 may execute its steps in an order different than those illustrated below. Method 2300 may terminate at any suitable step. Moreover, method 2300 may repeat operation at any suitable step. Method 2300 may perform any of its steps in parallel with other steps of method 2300, or in parallel with steps of other methods. Furthermore, method 2300 may be executed multiple times to perform multiple lane-based strided scatter operations.

At 2305, in one embodiment, an instruction to perform a lane-based strided scatter operation may be received and decoded. At 2310, the instruction and one or more parameters of the instruction may be directed to a SIMD execution unit for execution. In some embodiments, the instruction parameters may include an identifier of a source vector register containing packed data, an SIB type memory addressing operand that indirectly identifies multiple indexed destination locations in memory, a scaling factor, an indication of the size of the data elements in each data structure represented by the packed data, an indication of the number of data elements in each data structure represented by the packed data, a parameter identifying a particular mask register, or a parameter specifying a masking type.

At 2315, a first element of a data structure may be extracted from a lane in the source vector register. If, at 2320, it is determined that there are more lanes in the source vector register containing data elements for the data structure, then, at 2325, the next element of the data structure may be extracted from the next lane in the source vector register. In one embodiment, the operation illustrated in 2325 may be repeated one or more times in order to extract all of the elements of the data structure from the respective lanes in which they reside within the source vector register. If (at 2320) it is determined that there are no additional lanes in the source vector register that contain data elements for the data structure, and if (at 2330) it is determined that a destination mask bit set for the lane or data structure is set or that no masking has been specified for the lane-based strided scatter operation, then at 2335 the extracted data elements for the data structure may be stored in contiguous destination locations in memory, beginning at a location computed from a base address and an index register element for this data structure. For example, the first element of an index register identified in a memory operand of the instruction may contain a value to be used as an index into the first of the contiguous destination locations in the memory at which the data elements for the first data structure assembled by the lane-based strided store instruction are to be written.

If (at 2320) it is determined that there are no additional lanes in the source vector register that contain data elements for the data structure, if (at 2330) it is determined that a destination mask bit set for the lane or data structure is not set, and if (at 2340) it is determined that zero-masking is specified, then at 2345 zeros may be stored in the contiguous destination locations in memory that would otherwise have stored the extracted data elements for the data structure. If (at 2320) it is determined that there are no additional lanes in the source vector register that contain data elements for the data structure, if (at 2330) it is determined that a destination mask bit set for the lane or data structure is not set, and if (at 2340) it is determined that zero-masking is not specified (for example, if merging-masking is specified or that neither zero-masking nor merging-masking is specified), then at 2350 the values currently stored in the contiguous destination locations that would otherwise have stored the extracted data elements for the data structure may be preserved.

While there are data elements for one or more additional data structures in each lane of the source vector register (as determined at 2360), method 2300 may repeat beginning at 2315 for each additional data structure. Successive elements of the index register identified in the memory operand of the instruction may contain the respective values to be used as indices into the first of the contiguous destination locations in the memory at which the data elements for each successive data structure assembled by the lane-based strided store instruction are to be written. For example, the second element of the index register may contain a value to be used as an index into the first of the contiguous destination locations in the memory at which the data elements for the second data structure assembled by the lane-based strided store instruction are to be written, the third element of the index register may contain a value to be used as an index into the first of the contiguous destination locations in the memory at which the data elements for the third data structure assembled by the lane-based strided store instruction are to be written, and so on. Once there are no data elements for any additional data structures in the lanes of the source vector register, the instruction may be retired at 2370.

In embodiments of the present disclosure, a vector register may be preloaded with packed data elements prior to calling a VPSCATTER instruction. In one embodiment, one or more other vector instructions may be called to load the source vector register for the VPSCATTER instruction. The example pseudo code below illustrates the use of a VPSCATTER instruction to store four 4D structures contiguously in memory with data elements coming from four different XMM registers.
VPINSERTI32x4 zmm5, zmm5, xmm1, 0
VPINSERTI32x4 zmm5, zmm5, xmm2, 1
VPINSERTI32x4 zmm5, zmm5, xmm3, 2
VPINSERTI32x4 zmm5, zmm5, xmm4, 3
//zmm5 = xlx2x3x4yly2y3y4zlz2z3z4wlw2w3w4
VPSCATTER4D zmm5, [vm32]

In this example, four vector insertion instructions are used to pack an extended vector register (ZMM5) with data elements that come from four source vector registers XMM1, XMM2, XMM3, and XMM4). More specifically, these vector insertion instructions are used to pack four 32-bit X values from register XMM1 into the least significant 128 bits of ZMM5, to pack four 32-bit Y values from register XMM2 into the next-lowest-order 128 bits of ZMM5, to pack four 32-bit Z values from register XMM3 into the next-lowest-order 128 bits of ZMM5, and to pack four 32-bit W values from register XMM4 into the most significant 128 bits of ZMM5, respectively. Once the ZMM5 register has been packed with these data elements, it may serve as the source register for the VPSCATTER4D instruction. The VPSCATTER4D form of the VPSCATTER instruction specifies that there are four lanes in the source vector register and that each data element is a 32-bit quadword. The call of the VPSCATTER4D instruction includes an identifier of the ZMM5 register as the source register for this instruction. The call of the VPSCATTER4D instruction also includes an SIB type memory addressing operand [vm32] that indirectly identifies multiple indexed destination locations in memory. In this example, execution of the VPSCATTER4D instruction may put the data elements corresponding to four XYZW data structures back into their original XYZW formats. For example, execution of the VPSCATTER4D instruction may cause data representing four data structures to be written to the memory such that, for each of the data structures, the four elements of the data structure (e.g., an X value, a Y value, a Z value, and a W value) are stored in contiguous locations in the memory beginning at a location whose address is computed using information encoded in the SIB type memory addressing operand [vm32].

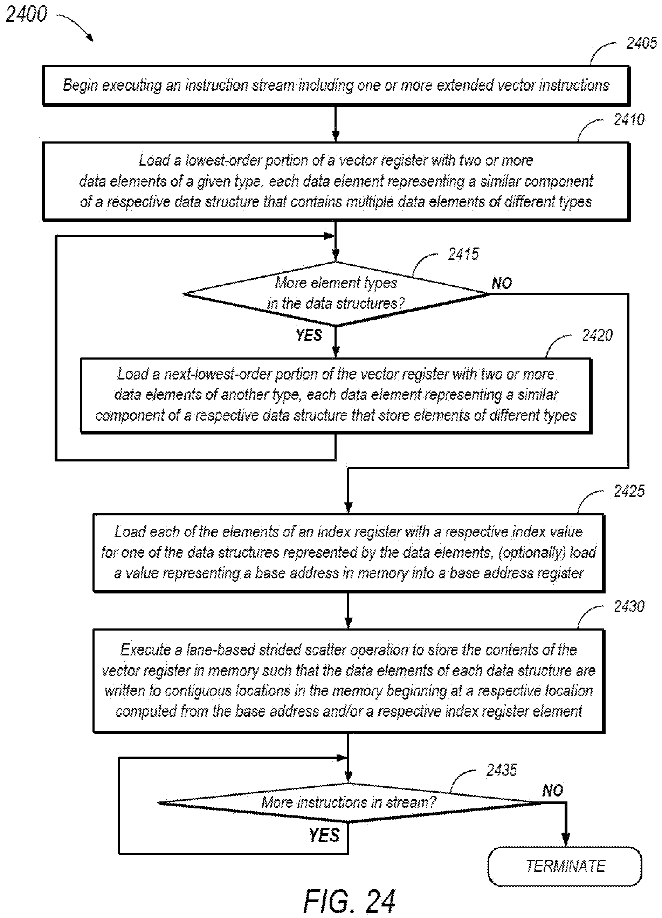

FIGURE 24 illustrates an example method 2400 for utilizing a lane-based strided scatter operation such as the lane-based strided scatter operation illustrated in FIGURE 23 to permute different types of data elements coming from respective different sources, according to embodiments of the present disclosure. In this example method, a source vector register is preloaded with packed data elements coming from four other vector registers, after which a lane-based strided scatter operation is called to permute the data elements and write them out to memory. Method 2400 may be implemented by any of the elements shown in FIGURES 1-22. Method 2400 may be initiated by any suitable criteria and may initiate operation at any suitable point. In one embodiment, method 2400 may initiate operation at 2405. Method 2400 may include greater or fewer steps than those illustrated. Moreover, method 2400 may execute its steps in an order different than those illustrated below. Method 2400 may terminate at any suitable step. Moreover, method 2400 may repeat operation at any suitable step. Method 2400 may perform any of its steps in parallel with other steps of method 2400, or in parallel with steps of other methods. Furthermore, method 2400 may be executed multiple times to utilize lane-based strided scatter operations to manipulate data representing the data elements of multiple data structures.

At 2405, in one embodiment, execution of an instruction stream including one or more extended vector instructions may begin. At 2410, a lowest-order portion of a vector register may be loaded with two or more data elements of a given type. Each data element may represent a similar component of a respective data structure that contains multiple data elements of different types. In one embodiment, the data elements may be loaded into the vector register from a general-purpose register. In another embodiment, the data elements may be loaded into the vector register from another vector register. In yet another embodiment, the data elements may be loaded into the vector register from memory.

If, at 2415, it is determined that there are more element types in the data structures, then at 2420, a next-lowest-order portion of the vector register may be loaded with two or more data elements of another type. Each data element of the other type may represent a similar component of a respective one of the data structures. If (or once) it is determined, at 2415, that there are no additional element types in the data structures, the method may continue at 2425.

At 2425, the method may include loading each of multiple elements of an index register with a respective index value for one of the data structures represented by the data elements that were preloaded into the vector register. The method may (optionally) include loading a value representing a base address in memory into a base address register. At 2430, a lane-based strided scatter operation may be executed to store the contents of the vector register in memory such that the data elements of each of the multiple data structures are written to contiguous locations in the memory beginning at a respective location computed from the base address and/or a respective element of the index register for that data structure.

While there are more instructions in the instruction stream (as determined at step 2435), each additional instruction that is encountered in the instruction stream may be executed (not shown). Executing the additional instructions may or may not include loading a vector register with packed data representing the data elements of multiple data structures and executing a lane-based strided scatter operation, in different embodiments. Once there are no additional instructions in the instruction stream (as determined at step 2435), the method may terminate.

While several examples describe forms of the VPSCATTER instruction that operate on packed data elements that are stored in extended vector registers (ZMM registers), in other embodiments, these instructions may operate on packed data elements that are stored in vector registers having fewer than 512 bits. For example, if the source vector for a VPSCATTER instruction includes 256 bits or fewer, the VPSCATTER instruction may operate on a YMM register or an XMM register.

In several of the examples described above, the data elements of each component type are relatively small (e.g., 32 bits) and there are few enough of them that all of them can be stored in a single XMM register prior to being packed into the ZMM register that will be the source vector register for a VPSCATTER instruction. In other embodiments, there may be enough data elements of each component type that (depending on the size of the data elements) they may fill a YMM register or an entire ZMM register. For example, there may be 512 bits worth of X values, 512 bits worth of Y values, and so on. In one embodiment, the constituent components of a respective subset of the resulting data structures may be packed into each one of multiple other ZMM registers and multiple VPSCATTER4D instructions may be executed to store the data structures in memory. For example, if ZMM1 holds the X values for sixteen XYZW data structures, ZMM2 holds the Y values, ZMM3 holds the Z values, and ZMM4 holds the W values, the data elements for the first four data structures may be packed into the ZMM5 register, the data elements for the next four data structures may be packed into the ZMM6 register, the data elements for the next four data structures may be packed into the ZMM7 register, and the data elements for the last four data structures may be packed into the ZMM8 register. Once ZMM5 - ZMM8 have been packed with the data elements for these data structures, the VPSCATTER4D instruction may be called four times to write out the contents of ZMM5 - ZMM8 to memory. In another example, the constituent components of different subsets of the resulting data structures may be packed into a single ZMM register one at a time, in between which a VPSCATTER4D instruction may be executed to store each subset of the data structures in memory.

As illustrated in the examples above, unlike a standard store instruction that takes data from a source operand and stores it in memory unchanged, the VPSCATTER operations described herein may be used to transpose data elements within a vector register that represent different components of a data structure so that they are stored in memory in an order that recognizes the relationships between the data elements and the data structures of which they are components. Several examples above describe the use of VPSCATTER instructions to store data elements that represent the constituent components of multiple data structures (such as sparse arrays) in memory. In other embodiments, these lane-based strided scatter operations may, more generally, be used to extract packed data elements from different portions (lanes) of a vector register and to permute them dependent on the lanes from which they were extracted when storing the contents of the vector register to memory, regardless of how (or even whether) the data elements are related to each other.

Embodiments of the mechanisms disclosed herein may be implemented in hardware, software, firmware, or a combination of such implementation approaches. Embodiments of the disclosure may be implemented as computer programs or program code executing on programmable systems comprising at least one processor, a storage system (including volatile and non-volatile memory and/or storage elements), at least one input device, and at least one output device.

Program code may be applied to input instructions to perform the functions described herein and generate output information. The output information may be applied to one or more output devices, in known fashion. For purposes of this application, a processing system may include any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine-readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions.

Accordingly, embodiments of the disclosure may also include non-transitory, tangible machine-readable media containing instructions or containing design data, such as Hardware Description Language (HDL), which defines structures, circuits, apparatuses, processors and/or system features described herein. Such embodiments may also be referred to as program products.

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part-on and part-off processor.

Thus, techniques for performing one or more instructions according to at least one embodiment are disclosed. While certain exemplary embodiments have been described and shown in the accompanying drawings, it is to be understood that such embodiments are merely illustrative of and not restrictive on other embodiments, and that such embodiments not be limited to the specific constructions and arrangements shown and described, since various other modifications may occur to those ordinarily skilled in the art upon studying this disclosure. In an area of technology such as this, where growth is fast and further advancements are not easily foreseen, the disclosed embodiments may be readily modifiable in arrangement and detail as facilitated by enabling technological advancements without departing from the scope of the accompanying claims.

Some embodiments of the present disclosure include a processor. In at least some of these embodiments, the processor may include a front end to receive an instruction, a decoder to decode the instruction, a core to execute the instruction, and a retirement unit to retire the instruction. To execute the instruction, the core may include a source vector register to store data elements in at least two lanes within the source vector register, where each lane may store at least two data elements. In combination with any of the above embodiments, the core may include a first logic to extract a respective first data element from each of the two lanes within the source vector register, a second logic to extract a respective second data element from each of the two lanes within the source vector register, a third logic to place the first data element to be extracted from the second lane next to the first data element to be extracted from the first lane in a destination vector, and a fourth logic to place the second data element to be extracted from the second lane next to the second data element to be extracted from the first lane in the destination vector. In any of the above embodiments, the first data element to be extracted from the first lane and the first data element to be extracted from the second lane may represent respective components of a first collection of data elements to be stored in contiguous locations in a memory, and the second data element to be extracted from the first lane and the second data element to be extracted from the second lane may represent respective components of a second collection of data elements to be stored in contiguous locations in the memory. In combination with any of the above embodiments, the core may include a fifth logic to store the destination vector to the memory, which may include a sixth logic to compute, dependent on a value of a first element in an index register specified in the instruction, a first location in the memory at which to begin to store the first collection of data elements, and a seventh logic to compute, dependent on a value of a second element in the index register, a second location in the memory at which to begin to store the second collection of data elements. In any of the above embodiments, computation of the first location in the memory may be further dependent on a value of a base address register specified in the instruction, and computation of the second location in the memory may be further dependent on the value of the base address register specified in the instruction. In combination with any of the above embodiments, the core may further include an eighth logic to extract at least one additional data element from each of the two lanes within the source vector register, and a ninth logic to place next to each other in the destination vector each pair of data elements that were extracted from a same position in the first lane and in the second lane. Each pair of data elements that were extracted from a same position in the first lane and in the second lane may represent components of an additional collection of data elements to be stored in contiguous locations in the memory. In any of the above embodiments, the source vector register may include at least one additional lane other than the first lane and the second lane. In combination with any of the above embodiments, the core may further include an eighth logic to extract, from each additional lane within the source vector register, a respective first data element. The first data element extracted from each additional lane may represent an additional component of the first collection of data elements. In combination with any of the above embodiments, the core may further include an eighth logic to extract a respective third data element from each of the two lanes within the source vector register, and a ninth logic to place the third data element to be extracted from the second lane next to the third data element to be extracted from the first lane in the destination vector. The third data element to be extracted from the first lane and the third data element to be extracted from the second lane may represent respective components of a third collection of data elements to be stored in contiguous locations in the memory. In any of the above embodiments, the source vector register may store the data elements in at least three lanes within the source vector register. In combination with any of the above embodiments, the core may further include an eighth logic to extract a respective first data element from a third one of the three lanes within the source vector register, and a ninth logic to place the first data element to be extracted from the third lane next to the first data element to be extracted from the second lane in the destination vector. The first data element to be extracted from the third lane may represent a third component of the first collection of data elements. In any of the above embodiments, the data elements stored in the first lane within the source vector register may represent two or more data elements of a first type, and the data elements stored in the second lane within the source vector register may represent two or more data elements of a second type different than the first type. In any of the above embodiments, the first collection of data elements may represent components of a first data structure to be stored in the memory, and the second collection of data elements may represent components of a second data structure to be stored in the memory. In combination with any of the above embodiments, the core may further include an eighth logic to apply a masking operation to the destination vector when it is stored to the memory such that, for each of one or more bits in a mask register identified in the instruction that are set, a respective collection of data elements is to be written to contiguous locations in the memory, and for each of one or more bits in the mask register identified in the instruction that are not set, a respective collection of data elements that would otherwise have been written to contiguous locations in the memory is not to be written to the memory. In combination with any of the above embodiments, the core may include an eighth logic to apply a masking operation to the destination vector when it is stored to the memory such that, for each bit that is not set in a mask register identified in the instruction, the masking operation replaces two or more data elements that are to be placed next to each other in the destination vector with zeros. In combination with any of the above embodiments, the core may include an eighth logic to apply a masking operation to the destination vector when it is stored to the memory such that, for each bit that is not set in a mask register identified in the instruction, the masking operation preserves the current values in the memory locations at which two or more data elements that are to be placed next to each other in the destination vector would otherwise have been written. In combination with any of the above embodiments, the core may include an eighth logic to determine the number of data elements to be extracted from each of the lanes within the source vector register dependent on a parameter value specified for the instruction. In combination with any of the above embodiments, the core may include an eighth logic to determine the number of lanes within the source vector register from which to extract data elements dependent on a parameter value specified for the instruction. In combination with any of the above embodiments, the core may include an eighth logic to determine the size of the data elements to be extracted from each of the lanes within the source vector register dependent on a parameter value specified for the instruction. In combination with any of the above embodiments, the core may include an eighth logic to load the respective first data element and the respective second data element into the first lane within the source vector register prior to execution of the instruction, a ninth logic to load the respective first data element and the respective second data element into the second lane within the source vector register prior to execution of the instruction, a tenth logic to load a first index value into the first element in the index register specified in the instruction prior to execution of the instruction, and an eleventh logic to load a second index value into the second element in the index register specified in the instruction prior to execution of the instruction. In combination with any of the above embodiments, the core may include a Single Instruction Multiple Data (SIMD) coprocessor to implement execution of the instruction.

Some embodiments of the present disclosure include a method. In at least some of these embodiments, the method may include, in a processor, receiving a first instruction, decoding the first instruction, executing the first instruction, and retiring the first instruction. Executing the first instruction may include extracting a respective first data element from each of two lanes within a source vector register, extracting a respective second data element from each of the two lanes within the source vector register, placing the first data element extracted from the second lane next to the first data element extracted from the first lane in a destination vector, and placing the second data element extracted from the second lane next to the second data element extracted from the first lane in the destination vector. The first data element extracted from the first lane and the first data element extracted from the second lane may represent respective components of a first collection of data elements to be stored in contiguous locations in a memory. The second data element extracted from the first lane and the second data element extracted from the second lane may represent respective components of a second collection of data elements to be stored in contiguous locations in the memory. In combination with any of the above embodiments, the method may include storing the destination vector to the memory. Storing the destination vector to the memory may include computing, dependent on a value of a first element in an index register specified in the first instruction, a first location in the memory at which to begin storing the first collection of data elements, and computing, dependent on a value of a second element in the index register specified in the first instruction, a second location in the memory at which to begin storing the second collection of data elements. In any of the above embodiments, computing the first location in the memory may be further dependent on a value of a base address register specified in the first instruction, and computing the second location in the memory may be further dependent on the value of the base address register specified in the first instruction. In combination with any of the above embodiments, the method may include extracting at least one additional data element from each of the two lanes within the source vector register, and placing next to each other in the destination vector each pair of data elements that were extracted from a same position in the first lane and in the second lane. Each pair of data elements that were extracted from a same position in the first lane and in the second lane may represent components of an additional collection of data elements to be stored in contiguous locations in the memory. In combination with any of the above embodiments, the method may include extracting a respective third data element from each of the two lanes within the source vector register, and placing the third data element to be extracted from the second lane next to the third data element to be extracted from the first lane in the destination vector. The third data element to be extracted from the first lane and the third data element to be extracted from the second lane may represent respective components of a third collection of data elements to be stored in contiguous locations in the memory. In any of the above embodiments, the source vector register may include at least one additional lane other than the first lane and the second lane. In combination with any of the above embodiments, the method may include extracting, from each additional lane within the source vector register, a respective first data element. The first data element extracted from each additional lane may represent an additional component of the first collection of data elements. In any of the above embodiments, the source vector register may store the data elements in at least three lanes within the source vector register. In combination with any of the above embodiments, the method may include extracting a respective first data element from a third one of the three lanes within the source vector register, and placing the first data element to be extracted from the third lane next to the first data element to be extracted from the second lane in the destination vector. The first data element to be extracted from the third lane may represent a third component of the first collection of data elements. In combination with any of the above embodiments, the method may include applying, to the destination vector prior to storing it in the memory, a masking operation. Applying the masking operation may include, for each of one or more bits in a mask register identified in the first instruction that are set, writing a respective collection of data elements to contiguous locations in the memory, and for each of one or more bits in the mask register identified in the first instruction that are not set, refraining from writing to the memory a respective collection of data elements that would otherwise have been written to contiguous locations in the memory. In combination with any of the above embodiments, the method may include applying a masking operation to the destination vector when it is stored to the memory such that for each bit that is not set in a mask register identified in the first instruction, the masking operation replaces two or more data elements that are placed next to each other in the destination vector with zeros. In combination with any of the above embodiments, the method may include applying a masking operation to the destination vector when it is stored to the memory such that for each bit that is not set in a mask register identified in the first instruction, the masking operation preserves the current values in memory locations at which two or more data elements that are placed next to each other in the destination vector would otherwise have been written. In combination with any of the above embodiments, the method may include, prior to receiving the first instruction, executing a second instruction, including loading the respective first data element and the respective second data element into the first lane within the source vector register. In combination with any of the above embodiments, the method may include, prior to receiving the first instruction, executing a third instruction, including loading the respective first data element and the respective second data element into the second lane within the source vector register. In combination with any of the above embodiments, the method may include, prior to receiving the first instruction, executing a fourth instruction, including loading a first index value into the first element in the index register specified in the first instruction, and loading a second index value into the second element in the index register specified in the first instruction. In combination with any of the above embodiments, the method may include determining the number of data elements to be extracted from each of the lanes within the source vector register dependent on a parameter value specified for the first instruction. In combination with any of the above embodiments, the method may include determining the number of lanes within the source vector register from which to extract data elements dependent on a parameter value specified for the first instruction. In combination with any of the above embodiments, the method may include determining the size of the data elements to be extracted from each of the lanes within the source vector register dependent on a parameter value specified for the first instruction. In any of the above embodiments, the processor may include a Single Instruction Multiple Data (SIMD) coprocessor that implements execution of the first instruction.

Some embodiments of the present disclosure include a system. In at least some of these embodiments, the system may include a front end to receive an instruction, a decoder to decode the instruction, a core to execute the instruction, and a retirement unit to retire the instruction. To execute the instruction, the core may include a source vector register to store data elements in at least two lanes within the source vector register, where each lane may store at least two data elements. In combination with any of the above embodiments, the core may include a first logic to extract a respective first data element from each of the two lanes within the source vector register, a second logic to extract a respective second data element from each of the two lanes within the source vector register, a third logic to place the first data element to be extracted from the second lane next to the first data element to be extracted from the first lane in a destination vector, and a fourth logic to place the second data element to be extracted from the second lane next to the second data element to be extracted from the first lane in the destination vector. In any of the above embodiments, the first data element to be extracted from the first lane and the first data element to be extracted from the second lane may represent respective components of a first collection of data elements to be stored in contiguous locations in a memory, and the second data element to be extracted from the first lane and the second data element to be extracted from the second lane may represent respective components of a second collection of data elements to be stored in contiguous locations in the memory. In combination with any of the above embodiments, the core may include a fifth logic to store the destination vector to the memory, which may include a sixth logic to compute, dependent on a value of a first element in an index register specified in the instruction, a first location in the memory at which to begin to store the first collection of data elements, and a seventh logic to compute, dependent on a value of a second element in the index register, a second location in the memory at which to begin to store the second collection of data elements. In any of the above embodiments, computation of the first location in the memory may be further dependent on a value of a base address register specified in the instruction, and computation of the second location in the memory may be further dependent on the value of the base address register specified in the instruction. In combination with any of the above embodiments, the core may further include an eighth logic to extract at least one additional data element from each of the two lanes within the source vector register, and a ninth logic to place next to each other in the destination vector each pair of data elements that were extracted from a same position in the first lane and in the second lane. Each pair of data elements that were extracted from a same position in the first lane and in the second lane may represent components of an additional collection of data elements to be stored in contiguous locations in the memory. In any of the above embodiments, the source vector register may include at least one additional lane other than the first lane and the second lane. In combination with any of the above embodiments, the core may further include an eighth logic to extract, from each additional lane within the source vector register, a respective first data element. The first data element extracted from each additional lane may represent an additional component of the first collection of data elements. In combination with any of the above embodiments, the core may further include an eighth logic to extract a respective third data element from each of the two lanes within the source vector register, and a ninth logic to place the third data element to be extracted from the second lane next to the third data element to be extracted from the first lane in the destination vector. The third data element to be extracted from the first lane and the third data element to be extracted from the second lane may represent respective components of a third collection of data elements to be stored in contiguous locations in the memory. In any of the above embodiments, the source vector register may store the data elements in at least three lanes within the source vector register. In combination with any of the above embodiments, the core may further include an eighth logic to extract a respective first data element from a third one of the three lanes within the source vector register, and a ninth logic to place the first data element to be extracted from the third lane next to the first data element to be extracted from the second lane in the destination vector. The first data element to be extracted from the third lane may represent a third component of the first collection of data elements. In any of the above embodiments, the data elements stored in the first lane within the source vector register may represent two or more data elements of a first type, and the data elements stored in the second lane within the source vector register may represent two or more data elements of a second type different than the first type. In any of the above embodiments, the first collection of data elements may represent components of a first data structure to be stored in the memory, and the second collection of data elements may represent components of a second data structure to be stored in the memory. In combination with any of the above embodiments, the core may further include an eighth logic to apply a masking operation to the destination vector when it is stored to the memory such that, for each of one or more bits in a mask register identified in the instruction that are set, a respective collection of data elements is to be written to contiguous locations in the memory, and for each of one or more bits in the mask register identified in the instruction that are not set, a respective collection of data elements that would otherwise have been written to contiguous locations in the memory is not to be written to the memory. In combination with any of the above embodiments, the core may include an eighth logic to apply a masking operation to the destination vector when it is stored to the memory such that, for each bit that is not set in a mask register identified in the instruction, the masking operation replaces two or more data elements that are to be placed next to each other in the destination vector with zeros. In combination with any of the above embodiments, the core may include an eighth logic to apply a masking operation to the destination vector when it is stored to the memory such that, for each bit that is not set in a mask register identified in the instruction, the masking operation preserves the current values in the memory locations at which two or more data elements that are to be placed next to each other in the destination vector would otherwise have been written. In combination with any of the above embodiments, the core may include an eighth logic to determine the number of data elements to be extracted from each of the lanes within the source vector register dependent on a parameter value specified for the instruction. In combination with any of the above embodiments, the core may include an eighth logic to determine the number of lanes within the source vector register from which to extract data elements dependent on a parameter value specified for the instruction. In combination with any of the above embodiments, the core may include an eighth logic to determine the size of the data elements to be extracted from each of the lanes within the source vector register dependent on a parameter value specified for the instruction. In combination with any of the above embodiments, the core may include an eighth logic to load the respective first data element and the respective second data element into the first lane within the source vector register prior to execution of the instruction, a ninth logic to load the respective first data element and the respective second data element into the second lane within the source vector register prior to execution of the instruction, a tenth logic to load a first index value into the first element in the index register specified in the instruction prior to execution of the instruction, and an eleventh logic to load a second index value into the second element in the index register specified in the instruction prior to execution of the instruction. In combination with any of the above embodiments, the core may include a Single Instruction Multiple Data (SIMD) coprocessor to implement execution of the instruction.

Some embodiments of the present disclosure include a system for executing instructions. In at least some of these embodiments, the system may include means for receiving a first instruction, decoding the first instruction, executing the first instruction, and retiring the first instruction. The means for executing the first instruction may include means for extracting a respective first data element from each of two lanes within a source vector register, extracting a respective second data element from each of the two lanes within the source vector register, placing the first data element extracted from the second lane next to the first data element extracted from the first lane in a destination vector, and placing the second data element extracted from the second lane next to the second data element extracted from the first lane in the destination vector. The first data element extracted from the first lane and the first data element extracted from the second lane may represent respective components of a first collection of data elements to be stored in contiguous locations in a memory. The second data element extracted from the first lane and the second data element extracted from the second lane may represent respective components of a second collection of data elements to be stored in contiguous locations in the memory. In combination with any of the above embodiments, the system may include means for storing the destination vector to the memory. The means for storing the destination vector to the memory may include means for computing, dependent on a value of a first element in an index register specified in the first instruction, a first location in the memory at which to begin storing the first collection of data elements, and means for computing, dependent on a value of a second element in the index register specified in the first instruction, a second location in the memory at which to begin storing the second collection of data elements. In any of the above embodiments, computing the first location in the memory may be further dependent on a value of a base address register specified in the first instruction, and computing the second location in the memory may be further dependent on the value of the base address register specified in the first instruction. In combination with any of the above embodiments, the system may include means for extracting at least one additional data element from each of the two lanes within the source vector register, and means for placing next to each other in the destination vector each pair of data elements that were extracted from a same position in the first lane and in the second lane. Each pair of data elements that were extracted from a same position in the first lane and in the second lane may represent components of an additional collection of data elements to be stored in contiguous locations in the memory. In combination with any of the above embodiments, the system may include means for extracting a respective third data element from each of the two lanes within the source vector register, and means for placing the third data element to be extracted from the second lane next to the third data element to be extracted from the first lane in the destination vector. The third data element to be extracted from the first lane and the third data element to be extracted from the second lane may represent respective components of a third collection of data elements to be stored in contiguous locations in the memory. In any of the above embodiments, the source vector register may include at least one additional lane other than the first lane and the second lane. In combination with any of the above embodiments, the system may include means for extracting, from each additional lane within the source vector register, a respective first data element. The first data element extracted from each additional lane may represent an additional component of the first collection of data elements. In any of the above embodiments, the source vector register may store the data elements in at least three lanes within the source vector register. In combination with any of the above embodiments, the system may include means for extracting a respective first data element from a third one of the three lanes within the source vector register, and means for placing the first data element to be extracted from the third lane next to the first data element to be extracted from the second lane in the destination vector. The first data element to be extracted from the third lane may represent a third component of the first collection of data elements. In combination with any of the above embodiments, the system may include means for applying, to the destination vector prior to storing it in the memory, a masking operation. Applying the masking operation may include, for each of one or more bits in a mask register identified in the first instruction that are set, writing a respective collection of data elements to contiguous locations in the memory, and for each of one or more bits in the mask register identified in the first instruction that are not set, refraining from writing to the memory a respective collection of data elements that would otherwise have been written to contiguous locations in the memory. In combination with any of the above embodiments, the system may include means for applying a masking operation to the destination vector when it is stored to the memory such that for each bit that is not set in a mask register identified in the first instruction, the masking operation replaces two or more data elements that are placed next to each other in the destination vector with zeros. In combination with any of the above embodiments, the system may include means for applying a masking operation to the destination vector when it is stored to the memory such that for each bit that is not set in a mask register identified in the first instruction, the masking operation preserves the current values in memory locations at which two or more data elements that are placed next to each other in the destination vector would otherwise have been written. In combination with any of the above embodiments, the system may include means for executing a second instruction prior to receiving the first instruction. The means for executing the second instruction may include means for loading the respective first data element and the respective second data element into the first lane within the source vector register. In combination with any of the above embodiments, the system may include means for executing a third instruction prior to receiving the first instruction. The means for executing the third instruction may include means for loading the respective first data element and the respective second data element into the second lane within the source vector register. In combination with any of the above embodiments, the system may include means for executing a fourth instruction prior to receiving the first instruction. The means for executing the fourth instruction may include means for loading a first index value into the first element in the index register specified in the first instruction, and means for loading a second index value into the second element in the index register specified in the first instruction. In combination with any of the above embodiments, the system may include means for determining the number of data elements to be extracted from each of the lanes within the source vector register dependent on a parameter value specified for the first instruction. In combination with any of the above embodiments, the system may include means for determining the number of lanes within the source vector register from which to extract data elements dependent on a parameter value specified for the first instruction. In combination with any of the above embodiments, the system may include means for determining the size of the data elements to be extracted from each of the lanes within the source vector register dependent on a parameter value specified for the first instruction. In any of the above embodiments, the system may include a Single Instruction Multiple Data (SIMD) coprocessor that implements execution of the first instruction. In any of the above embodiments, the system may include a processor and the memory. In any of the above embodiments, the system may include a vector register file that includes the source vector register.

## Claims

1. A processor (1804), comprising:
a front end (1806) to receive an instruction specifying a size or a number of data elements in a data structure, wherein the data structure is organized in a tuple or an array of data elements as components;
a source vector register configured to store data elements in multiple lanes including a first lane and a second lane within the source vector register, wherein each lane is configured to store at least two data elements; and wherein each lane stores like components from multiple data structures;
a decoder (1810) to decode the instruction;
a core (1812) configured to execute the instruction to:
extract a respective first data element from each of the first and second lanes within the source vector register;
extract a respective second data element from each of the first and second lanes within the source vector register, wherein:
the first data element extracted from the first lane and the first data element extracted from the second lane represent a first component and a second component of a first data structure; and
the second data element extracted from the first lane and the second data element extracted from the second lane represent a first component and a second component of a second data structure;
write to the memory (1830), including:
compute, dependent on a value of a first element in an index register specified in the instruction, a first location in the memory (1830) at which to write the first and second components of the first data structure in contiguous locations;
compute, dependent on a value of a second element in the index register, a second location in the memory (1830) at which to write the first and second components of the second data structure in contiguous locations; and
write the first and second data structures out to the memory (1830), beginning at the first and the second location respectively;
a retirement unit configured to retire the instruction.

2. The processor (1804) of Claim 1, wherein:
computation of the first location in the memory (1830) is further dependent on a value of a base address register specified in the instruction; and
computation of the second location in the memory (1830) is further dependent on the value of the base address register specified in the instruction.

3. The processor (1804) of Claims 1 or 2, wherein:
the core is further configured to apply a masking operation when writing to the memory (1830);
for each of one or more bits in a mask register identified in the instruction that are set, a respective component is written to contiguous locations in the memory (1830); and
for each of one or more bits in the mask register identified in the instruction that are not set, a respective component that would otherwise have been written to contiguous locations in the memory (1830) is not written to the memory (1830).

4. The processor (1804) of any one of Claims 1-3, wherein the core includes a Single Instruction Multiple Data (SIMD) coprocessor to implement execution of the instruction.

5. A method, comprising, in a processor (1804):
receiving a first instruction specifying a size or a number of data elements in a data structure, wherein the data structure is organized in a tuple or an array of data elements as components;
decoding the first instruction;
executing the first instruction, including:
extracting a respective first data element from each of a first lane and a second lane of multiple lanes within a source vector register;
extracting a respective second data element from each of the first and the second lanes within the source vector register; wherein:
the first data element extracted from the first lane and the first data element extracted from the second lane represent a first component and a second component of a first data structure; and
the second data element extracted from the first lane and the second data element extracted from the second lane represent a first component and a second component of a second data structure; and
writing to the memory (1830), including:
computing, dependent on a value of a first element in an index register specified in the first instruction, a first location in the memory (1830) at which to write the first and second components of the first data structure in contiguous locations; and
computing, dependent on a value of a second element in the index register specified in the first instruction, a second location in the memory (1830) at which to write the first and second components of the second data structure in contiguous locations; and
write the first and second data structures out to the memory (1830), beginning at the first and the second location respectively; and
retiring the first instruction.

6. The method of Claim 5, wherein:
computing the first location in the memory (1830) is further dependent on a value of a base address register specified in the first instruction; and
computing the second location in the memory (1830) is further dependent on the value of the base address register specified in the first instruction.

7. The method of Claim 5 or 6, further comprising:
applying prior to writing to the memory (1830), a masking operation, including:
for each of one or more bits in a mask register identified in the first instruction that are set, writing a respective component of the data structure to contiguous locations in the memory (1830); and
for each of one or more bits in the mask register identified in the first instruction that are not set, refraining from writing to the memory (1830) a respective component of the data structure that would otherwise have been written to contiguous locations in the memory (1830).

8. The method of any one of Claims 5-7, further comprising:
prior to receiving the first instruction:
executing a second instruction, including:
loading respective data elements into the first lane within the source vector register;
executing a third instruction, including:
loading respective data elements into the second lane within the source vector register;
executing a fourth instruction, including:
loading a first index value into the first element in the index register specified in the first instruction; and
loading a second index value into the second element in the index register specified in the first instruction.

9. The method of any one of Claims 5-8, further comprising:
determining the number of lanes within the source vector register from which to extract data elements dependent on a parameter value specified for the first instruction.

## Patentansprüche

1. Prozessor (1804), der Folgendes umfasst:
ein Frontend (1806), um eine Anweisung zu empfangen, die eine Größe oder eine Anzahl von Datenelementen in einer Datenstruktur repräsentiert, wobei die Datenstruktur in einem Tupel oder einer Anordnung von Datenelementen als Komponenten organisiert ist;
ein Ursprungsvektorregister, das konfiguriert ist, Datenelemente in mehreren Spuren, die eine erste Spur und eine zweite Spur innerhalb des Ursprungsvektorregisters enthalten, zu speichern, wobei jede Spur konfiguriert ist, mindestens zwei Datenelemente zu speichern; und wobei jede Spur ähnliche Komponenten von mehreren Datenstrukturen speichert;
einen Decodierer (1810), um die Anweisung zu decodieren;
einen Kern (1812), der konfiguriert ist, die Anweisung auszuführen, um
ein jeweiliges erstes Datenelement aus jeder der ersten und der zweiten Spur innerhalb des Ursprungsvektorregisters zu extrahieren;
ein jeweiliges zweites Datenelement aus jeder der ersten und der zweiten Spur innerhalb des Ursprungsvektorregisters zu extrahieren, wobei:
das erste aus der ersten Spur extrahierte Datenelement und das erste aus der zweiten Spur extrahierte Datenelement eine erste Komponente und eine zweite Komponente einer ersten Datenstruktur repräsentieren; und
das zweite aus der ersten Spur extrahierte Datenelement und das zweite aus der zweiten Spur extrahierte Datenelement eine erste Komponente und eine zweite Komponente einer zweiten Datenstruktur repräsentieren;
in den Speicher (1830) zu schreiben, das umfasst:
Berechnen abhängig von einem Wert eines ersten Elements in einem Indexregister, das in der Anweisung spezifiziert ist, eines ersten Orts in dem Speicher (1830), an den die erste und die zweite Komponente der ersten Datenstruktur in durchgängige Orte zu schreiben sind;
Berechnen abhängig von einem Wert eines zweiten Elements in dem Indexregister eines zweiten Orts in dem Speicher (1830), an den die erste und die zweite Komponente der zweiten Datenstruktur in durchgängige Orte zu schreiben sind; und
die erste und die zweite Datenstruktur aus dem Speicher (1830) beginnend jeweils an dem ersten und dem zweiten Ort zu schreiben;
eine Rückzieheinheit, die konfiguriert ist, die Anweisung zurückzuziehen.

2. Prozessor (1804) nach Anspruch 1, wobei:
die Berechnung des ersten Orts in dem Speicher (1830) ferner von einem Wert eines Basisadressenregisters abhängt, der in der Anweisung spezifiziert ist; und
die Berechnung des zweiten Orts in dem Speicher (1830) ferner von dem Wert des Basisadressenregisters abhängt, der in der Anweisung spezifiziert ist.

3. Prozessor (1804) nach den Ansprüchen 1 und 2, wobei:
der Kern ferner konfiguriert ist, einen Maskiervorgang anzuwenden, wenn in den Speicher (1830) geschrieben wird:
für jedes eines oder mehrerer Bits in einem Maskenregister, das in der Anweisung identifiziert ist, die gesetzt sind, eine jeweilige Komponente in durchgängige Orte in den Speicher (1830) geschrieben wird; und
für jedes eines oder mehrerer Bits in dem Maskenregister, das in der Anweisung identifiziert ist, die nicht gesetzt sind, eine jeweilige Komponente, die anderenfalls in durchgängige Orte in den Speicher (1830) geschrieben werden würde, nicht in den Speicher (1830) geschrieben wird.

4. Prozessor (1804) nach einem der Ansprüche 1-3, wobei der Kern einen Einzelanweisungsmehrfachdaten-Coprozessor (SIMD) enthält, um die Ausführung der Anweisung zu implementieren.

5. Verfahren, das in einem Prozessor (1804) umfasst:
Empfangen einer ersten Anweisung, die eine Größe oder eine Anzahl von Datenelementen in einer Datenstruktur repräsentiert, wobei die Datenstruktur in einem Tupel oder einer Anordnung von Datenelementen als Komponenten organisiert ist;
Decodieren der ersten Anweisung;
Ausführen der ersten Anweisung, das Folgendes enthält:
Extrahieren eines jeweiligen ersten Datenelements aus jeder einer ersten und einer zweiten Spur mehrerer Spuren innerhalb eines Ursprungsvektorregisters;
Extrahieren eines jeweiligen zweiten Datenelements aus jeder der ersten und der zweiten Spur innerhalb des Ursprungsvektorregisters, wobei:
das erste aus der erste Spur extrahierte Datenelement und das erste aus der zweiten Spur extrahierte Datenelement eine erste Komponente und eine zweite Komponente einer ersten Datenstruktur repräsentieren; und
das zweite aus der ersten Spur extrahierte Datenelement und das zweite aus der zweiten Spur extrahierte Datenelement eine erste Komponente und eine zweite Komponente einer zweiten Datenstruktur repräsentieren; und
Schreiben in den Speicher (1830), das Folgendes enthält:
Berechnen abhängig von einem Wert eines ersten Elements in einem Indexregister, der in der ersten Anweisung spezifiziert ist, eines ersten Orts in dem Speicher (1830), an den die erste und die zweite Komponente der ersten Datenstruktur in durchgängige Orte zu schreiben sind;
Berechnen abhängig von einem Wert eines zweiten Elements in dem Indexregister, der in der ersten Anweisung spezifiziert ist, eines zweiten Orts in dem Speicher (1830), an den die erste und die zweite Komponente der zweiten Datenstruktur in durchgängige Orte zu schreiben sind; und
Schreiben der ersten und der zweiten Datenstruktur aus dem Speicher (1830) beginnend jeweils an dem ersten und dem zweiten Ort; und
Zurückziehen der ersten Anweisung.

6. Verfahren nach Anspruch 5, wobei:
das Berechnen des ersten Orts in dem Speicher (1830) ferner von einem Wert eines Basisadressenregisters abhängt, der in der ersten Anweisung spezifiziert ist; und
das Berechnen des zweiten Orts in dem Speicher (1830) ferner von dem Wert des Basisadressenregisters abhängt, der in der ersten Anweisung spezifiziert ist.

7. Verfahren nach Anspruch 5 oder 6, das ferner Folgendes umfasst:
Anwenden vor dem Schreiben in den Speicher (1830) eines Maskiervorgangs, der Folgendes enthält:
für jedes eines oder mehrerer Bits in einem Maskenregister, das in der Anweisung identifiziert ist, die gesetzt sind, Schreiben einer jeweiligen Komponente der Datenstruktur in durchgängige Orte in den Speicher (1830); und
für jedes eines oder mehrerer Bits in dem Maskenregister, das in der Anweisung identifiziert ist, die nicht gesetzt sind, Absehen davon, eine jeweilige Komponente der Datenstruktur, die anderenfalls in durchgängige Orte in den Speicher (1830) geschrieben werden würde, in den Speicher (1830) zu schreiben.

8. Verfahren nach einem der Ansprüche 5-7, das ferner Folgendes umfasst:
vor dem Empfangen der ersten Anweisung:
Ausführen einer zweiten Anweisung, das Folgendes enthält:
Laden jeweiliger Datenelemente in die erste Spur innerhalb des Ursprungsvektorregisters;
Ausführen einer dritten Anweisung, das Folgendes enthält:
Laden jeweiliger Datenelemente in die zweite Spur innerhalb des Ursprungsvektorregisters;
Ausführen einer vierten Anweisung, das Folgendes enthält:
Laden eines ersten Indexwertes in das erste Element in dem Indexregister, das in der ersten Anweisung spezifiziert ist; und
Laden eines zweiten Indexwertes in das zweite Element in das Indexregister, das in der ersten Anweisung spezifiziert ist.

9. Verfahren nach einem der Ansprüche 5-8, das ferner Folgendes umfasst:
Bestimmen der Anzahl von Spuren innerhalb des Ursprungsvektorregisters, aus denen Datenelemente zu extrahieren sind, abhängig von einem Parameterwert, der für die erste Anweisung spezifiziert ist.

## Revendications

1. Processeur (1804), comprenant :
un frontal (1806) pour recevoir une instruction stipulant une taille ou un nombre d'éléments de données dans une structure de données, la structure de données étant organisée en un tuple ou un tableau d'éléments de données formant des composants ;
un registre vectoriel source configuré pour stocker des éléments de données dans des voies multiples comportant une première voie et une deuxième voie au sein du registre vectoriel source, chaque voie étant configurée pour stocker au moins deux éléments de données et chaque voie stockant des composants semblables issus de structures de données multiples ;
un décodeur (1810) pour décoder l'instruction ;
un cœur (1812) configuré pour exécuter l'instruction pour :
extraire un premier élément de données respectif depuis chacune des première et deuxième voies au sein du registre vectoriel source ;
extraire un deuxième élément de données respectif depuis chacune des première et deuxième voies au sein du registre vectoriel source,
le premier élément de données extrait depuis la première voie et le premier élément de données extrait depuis la deuxième voie représentant un premier composant et un deuxième composant d'une première structure de données ; et
le deuxième élément de données extrait depuis la première voie et le deuxième élément de données extrait depuis la deuxième voie représentant un premier composant et un deuxième composant d'une deuxième structure de données ;
écrire dans la mémoire (1830), notamment :
calculer, en fonction d'une valeur d'un premier élément dans un registre d'index stipulé dans l'instruction, un premier emplacement dans la mémoire (1830) auquel écrire les premier et deuxième composants de la première structure de données à des emplacements contigus ;
calculer, en fonction d'une valeur d'un deuxième élément dans le registre d'index, un deuxième emplacement dans la mémoire (1830) auquel écrire les premier et deuxième composants de la deuxième structure de données à des emplacements contigus ; et
écrire les première et deuxième structures de données dans la mémoire (1830), en commençant respectivement au premier et au deuxième emplacement ;
une unité de mise à la retraite configurée pour mettre l'instruction à la retraite.

2. Processeur (1804) selon la revendication 1, dans lequel :
le calcul du premier emplacement dans la mémoire (1830) est en outre fonction d'une valeur d'un registre d'adresses de base stipulé dans l'instruction ; et
le calcul du deuxième emplacement dans la mémoire (1830) est en outre fonction de la valeur du registre d'adresses de base stipulé dans l'instruction.

3. Processeur (1804) selon les revendications 1 ou 2, dans lequel :
le cœur est configuré en outre pour appliquer une opération de masquage lors de l'écriture dans la mémoire (1830) ;
pour chacun d'un ou de plusieurs bits dans un registre de masquage identifié dans l'instruction qui sont positionnés, un composant respectif est écrit à des emplacements contigus dans la mémoire (1830) ; et
pour chacun d'un ou de plusieurs bits dans le registre de masquage identifié dans l'instruction qui ne sont pas positionnés, un composant respectif, qui aurait sinon été écrit à des emplacements contigus dans la mémoire (1830), n'est pas écrit dans la mémoire (1830).

4. Processeur (1804) selon l'une quelconque des revendications 1 à 3, dans lequel le cœur comporte un coprocesseur de type instruction unique données multiples (SIMD) pour mettre en œuvre l'exécution de l'instruction.

5. Procédé, comprenant, dans un processeur (1804) :
la réception d'une première instruction stipulant une taille ou un nombre d'éléments de données dans une structure de données, la structure de données étant organisée en un tuple ou un tableau d'éléments de données formant des composants ;
le décodage de la première instruction ;
l'exécution de la première instruction, notamment :
l'extraction d'un premier élément de données respectif depuis chacune d'une première voie et d'une deuxième voie de voies multiples au sein d'un registre vectoriel source ;
l'extraction d'un deuxième élément de données respectif depuis chacune des première et deuxième voies au sein du registre vectoriel source ;
le premier élément de données extrait depuis la première voie et le premier élément de données extrait depuis la deuxième voie représentant un premier composant et un deuxième composant d'une première structure de données ; et
le deuxième élément de données extrait depuis la première voie et le deuxième élément de données extrait depuis la deuxième voie représentant un premier composant et un deuxième composant d'une deuxième structure de données ; et
l'écriture dans la mémoire (1830), notamment :
le calcul, en fonction d'une valeur d'un premier élément dans un registre d'index stipulé dans la première instruction, d'un premier emplacement dans la mémoire (1830) auquel écrire les premier et deuxième composants de la première structure de données à des emplacements contigus ; et
le calcul, en fonction d'une valeur d'un deuxième élément dans le registre d'index stipulé dans la première instruction, d'un deuxième emplacement dans la mémoire (1830) auquel écrire les premier et deuxième composants de la deuxième structure de données à des emplacements contigus ; et
l'écriture des première et deuxième structures de données dans la mémoire (1830), en commençant respectivement au premier et au deuxième emplacement ; et
la mise à la retraite de la première instruction.

6. Procédé selon la revendication 5, dans lequel :
le calcul du premier emplacement dans la mémoire (1830) est en outre fonction d'une valeur d'un registre d'adresses de base stipulé dans la première instruction ; et
le calcul du deuxième emplacement dans la mémoire (1830) est en outre fonction de la valeur du registre d'adresses de base stipulé dans la première instruction.

7. Procédé selon les revendications 5 ou 6, comprenant en outre :
l'application, préalablement à l'écriture dans la mémoire (1830), d'une opération de masquage, notamment :
pour chacun d'un ou de plusieurs bits dans un registre de masquage identifié dans l'instruction qui sont positionnés, l'écriture d'un composant respectif de la structure de données à des emplacements contigus dans la mémoire (1830) ; et
pour chacun d'un ou de plusieurs bits dans le registre de masquage identifié dans l'instruction qui ne sont pas positionnés, la non-écriture dans la mémoire (1830) d'un composant respectif de la structure de données, qui aurait sinon été écrit à des emplacements contigus dans la mémoire (1830).

8. Procédé selon l'une quelconque des revendications 5 à 7, comprenant en outre :
préalablement à la réception de la première instruction :
l'exécution d'une deuxième instruction, notamment :
le chargement d'éléments de données respectifs dans la première voie au sein du registre vectoriel source ;
l'exécution d'une troisième instruction, notamment :
le chargement d'éléments de données respectifs dans la deuxième voie au sein du registre vectoriel source ;
l'exécution d'une quatrième instruction, notamment :
le chargement d'une première valeur d'index dans le premier élément dans le registre d'index stipulé dans la première instruction ; et
le chargement d'une deuxième valeur d'index dans le deuxième élément dans le registre d'index stipulé dans la première instruction.

9. Procédé selon l'une quelconque des revendications 5 à 8, comprenant en outre :
la détermination du nombre de voies au sein du registre vectoriel source depuis lesquelles extraire des éléments de données en fonction d'une valeur de paramètre stipulée pour la première instruction.
